(19) Europäisches Patentamt / European Patent Office / Office européen des brevets

(11) **EP 2 021 951 B1**

## (12) EUROPÄISCHE PATENTSCHRIFT

(45) Veröffentlichungstag und Bekanntmachung des Hinweises auf die Patenterteilung:
**01.09.2010 Patentblatt 2010/35**

(21) Anmeldenummer: **06741027.4**

(22) Anmeldetag: **01.06.2006**

(51) Int Cl.:
**G06F 17/30** *(2006.01)*

(86) Internationale Anmeldenummer:
**PCT/AT2006/000228**

(87) Internationale Veröffentlichungsnummer:
**WO 2007/137308 (06.12.2007 Gazette 2007/49)**

### (54) VERFAHREN ZUM STEUERN EINES RELATIONALEN DATENBANKSYSTEMS

METHOD FOR CONTROLLING A RELATIONAL DATABASE SYSTEM

PROCEDE DE COMMANDE D'UN SYSTEME DE GESTION DE BANQUE DE DONNEES RELATIONNELLE

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**11.02.2009 Patentblatt 2009/07**

(73) Patentinhaber: **mediareif Möstl & Reif Kommunikations- und Informationstechnologien OEG**
**1140 Wien (AT)**

(72) Erfinder: **MÖSTL, Matthias**
**1160 Wien (AT)**

(74) Vertreter: **Ellmeyer, Wolfgang**
**Patentanwalt,**
**Mariahilferstrasse 50**
**1070 Wien (AT)**

(56) Entgegenhaltungen:
**EP-A- 1 209 560      US-A- 5 826 077**
**US-A- 5 875 334      US-A- 6 023 697**
**US-B1- 6 618 719**

• **CHAUDHURI S ED - ASSOCIATION FOR COMPUTING MACHINERY: "AN OVERVIEW OF QUERY OPTIMIZATION IN RELATIONAL SYSTEMS" PROCEEDINGS OF THE 17TH. ACM SIGACT-SIGMOD-SIGART SYMPOSIUM ON PRINCIPLES OF DATABASE SYSTEMS. PODS 1998. SEATTLE, WA, JUNE 1 -3, 1998, PROCEEDINGS OF THE ACM SIGACT-SIGMOD-SIGART SYMPOSIUM ON PRINCIPLES OF DATABASE SYSTEMS, NEW YORK, NY : ACM, US, 1. Juni 1998 (1998-06-01), Seiten 34-43, XP000782631 ISBN: 0-89791-996-3**

EP 2 021 951 B1

**Beschreibung**

Die Erfindung betrifft ein Verfahren zum Steuern eines relationalen Datenbanksystems, wobei ein Anfragestatement, das aus Schlüsselworten zusammengesetzt ist, zunächst unter Anwendung eines rekursiven Übergangsnetzwerks (RTN) analysiert und den Schlüsselworten oder Gruppe von Schlüsselworten in der durch das Statement vorgegebenen Reihenfolge verarbeitungsrelevante Eigenschaften zugeordnet werden, und danach in Steuerbefehle umgewandelt und diese gegebenenfalls optimiert werden.

Weiters betrifft die Erfindung ein zugehöriges relationales Datenbanksystem, zugehörige Datenträger oder Trägersignale mit Steuerungsinformationen für das relationale Datenbanksystem sowie zugehörige Computerprogramme und Computerprogrammprodukte zur Ausführung der vorgenannten Verfahren.

Der überwiegende Teil der relationalen Datenbanksysteme basiert auf SQL, welches trotz seines hohen Ver-breitungsgrades und seiner ständigen Weiterentwicklung bei komplexeren Anfragen zu Schwierigkeiten bei der Formulierung eines Anfrage-Statements führt, und durch die grammatikalisch begrenzten Freiheitsgrade es zu einer unnötig komplizierten Problembeschreibung und einem daraus resultierenden nicht optimalen Zugriffscode kommt, der eine speicher-, festplatten-zugriffs- und prozessor-intensive Abarbeitung mit sich bringt.

SQL ist eine mengenverarbeitende Anfragesprache, welche festgelegte Mengenverarbeitungsfunktionen in bestimmter, immer gleicher Reihenfolge auf je Statement bzw. Sub-Statement auf frei definerbare Eingangsmengen je Statement bzw. Sub-Statement anwendet.

Diese relative Begrenztheit in der Anwendung von SQL entsteht durch die zugrunde liegende RTN (rekursives Übergangsnetzwerk)-Logik, deren Abarbeitung entlang eines vorgegebenen Entscheidungsgraphens geschieht, der eine fixe oder weitestgehend fixe Abfolge von Schlüsselworten und die rekursive Einsetzbarkeit des gesamten Entscheidungsgraphen an bestimmten Entscheidungspositionen vorsieht, wobei nach jedem Schlüsselwort eine beschränkte Auswahl an Schlüsselworten zugelassen ist. Aufgrund dieser vorgegebenen Abfolge lässt sich die Abarbeitung des Statements nur mittels in sich geschachtelter und/oder verketteter Gesamtdurchläufe des gesamten Entscheidungsgraphen beschreiben, wobei speziell in SQL, OQL oder dgl. aufgrund der durch den Entscheidungsgraphen bedingten Reihenfolge eine Abarbeitung von definierten Verarbeitungsblöcken ermöglicht wird, aber das Einführen neuer, insbesondere ihrer Reihenfolge frei wählbarerer und wiederholbarer Verarbeitungsblöcke nicht möglich ist.

Trotzdem SQL mit den oben beschriebenen, natürlich vorhandenen RTN-Einschränkungen als turing-vollständig konzipiert worden ist, lassen sich in der Praxis relativ viele Anfragen auch für den Experten nur sehr schwierig umsetzen und verursachen dadurch oft auch eine sehr lange Abarbeitungszeit gegenüber der theoretisch möglichen Abarbeitungszeit, die wegen der durch das RTN von SQL nicht zugelassenen Freiheitsgrade in der Formulierung und Verwendung von Anfragestatements nicht erreichbar ist.

Das Dokument EP 1 209 560 A1 offenbart ein allgemeines Verfahren zur Entwicklung von Sprachmodellen, die ein rekursives Übergangsnetzwerk (RTN) benutzen. In dem Dokument werden jedoch weder Anwendungsmöglichkeiten für die Sprachmodelle aufgezeigt, noch wird auf die Weiterverarbeitung der Netzwerkblöcke oder deren Transformation in standadisierte Sprachmodelle, z.B. SQL, eingegangen.

Aufgabe der Erfindung ist es daher, ein Verfahren der eingangs genannten Art anzugeben, welches ein einfaches und prägnantes Beschreiben von Sachverhalten beliebigen Schwierigkeitsgrades in einer Anfrage-Sprache und die Erstellung eines verbesserten Zugriffsplans ermöglicht, und dadurch bedingt das Anfrageergebnis schneller berechnet bzw. ausgeführt werden kann.

Weiters ist es Ziel der Erfindung, ein derartiges Verfahren anzugeben, welches die Nachvollziehbarkeit und Übersichtlichkeit von Anfragestatements für den Anwender und für Dritte erhöht sowie eine leicht durchführbare Abwandlung oder Anpassung von vorhandenen Statements ermöglicht, z.B. wenn ausgehend von einer Fragestellung weitere ähnliche Fragestellungen erstellt werden sollen.

Um eine leichte Anwendbarkeit zu garantieren, soll das erfindungsgemäße Verfahren auch gut in einer graphischen Oberfläche darstellbar sein.

Es soll das Definieren bzw. das Erweitern von neuen Verarbeitungsfunktionen für die Anwendung der dem Verfahren zugrunde liegenden Anfragesprache leicht möglich sein.

Erfindungsgemäß wird dies dadurch erzielt, daß

das RTN aus voneinander unabhängigen RTN-Bausteinen gebildet ist, wobei jeder RTN-Baustein einen inneren, gerichteten Entscheidungsgraphen, der unabhängig von den inneren,

gerichteten Entscheidungsgraphen der anderen RTN-Bausteine definiert ist, mit zumindest einer Entscheidungsposition entlang zumindest eines Entscheidungspfades aufweist,

daß in einem Auswahlschritt die inneren Entscheidungsgraphen aller RTN-Bausteine anhand der Schlüsselworte durchlaufen werden, und allen möglichen Pfaden dieser Entscheidungsgraphen solange gefolgt wird, bis entweder keine Übereinstimmung mit dem jeweils gewählten Pfad durch den Entscheidungsgraphen festgestellt und der Vorgang abgebrochen wird oder der jeweils gewählte Pfad bis zum Ende durchlaufen wird,

wobei zumindest ein Teil der Entscheidungspfade an zumindest einer der Entscheidungspositionen eine rekursive Aufruffunktion aufweist, durch welche einer der RTN-Bausteine als Ergebnis der Anwendung des Auswahlschrittes auf die Gesamtheit der RTN-Bausteine durchlaufen wird, sodaß eine beliebig oftmalige rekursiv verschachtelte Ausführung des Auswahlschrittes ausgehend von der zumindest einen der Entscheidungspositionen ermöglicht wird,

und daß aus der Reihenfolge der RTN-Bausteine und deren Verschachtelung, wie sie sich durch die Anwendung der Auswahlschritte auf alle Schlüsselworte des Anfragestatements, ein Zugriffsplan für das relationale Datenbanksystem generiert wird,

sowie durch ein relationale Datenbanksystem, welches mindestens ein Computersystem mit mindestens einer relationalen Datenbank, mindestens eine Datenverarbeitungseinheit und mindestens einen Speicher umfaßt und das programmtechnisch so eingerichtet ist, daß sie nach dem vorgenannten erfindungsgemäßen Verfahren arbeitet.

Auf diese Weise wird auf den bisher angewandten hohen Strukturierungsgrad bei Anfragesprachen wie z.B. SQL, OQL, dgl. mit vorgegebenen Verarbeitungsbereichen und Verarbeitungsreihenfolgen, wie SELECT, FROM, WHERE, GROUP BY, HAVING, ORDER BY, LIMIT, UNION verzichtet. Durch dieses bei SQL angewandte Modell, im FROM-Teil der Anfrage kartesische Produkte zu bilden, im WHERE-Teil bestimmte Zeilen der kartesischen Produkte zu streichen, im GROUP BY-Teil nach bestimmten Datenfeldern zusammenzufassen, im HAVING-Teil anhand von Gruppenberechnungsergebnissen bestimmte Zeilen zu streichen, mit ORDER BY zu sortieren und mit UNION oder anderen mengenverknüpfenden Operationen Mengen nach bestimmten Kriterien zusammenzufassen, wird zwar die erforderliche Turing-Vollständigkeit erreicht, sodaß alle auf Daten bezogenen lösbaren Probleme theoretisch formulierbar sind, in der Praxis scheitert dies aber wegen der hohen Komplexität je nach Anwenderkompetenz bereits bei mittelschweren bis schwierigen Aufgaben. Hinzu kommt noch, daß ein großer Teil aller möglichen Anfragen zwar für den Experten formulierbar sind, diese aber das jeweilige Problem nur sehr umständlich in die von gegebenen Verarbeitungsbereiche einzugliedern sind, weil dies durch vorgegebene Strukturierung und Reihenfolge z.B. bei SQL nicht anders ermöglicht wird. Nachdem es bedingt durch die geringe Anzahl an Verarbeitungsbereichen in vielen Fällen nicht möglich ist, einen direkten Weg der Mengenverarbeitung vorzugeben, bleibt es dem für diesen Zweck vorgesehenen Optimizer überlassen, viele der schlechtesten Wege zu vermeiden und für die jeweils angewandte Beschreibung, den besten Weg zu ermitteln, verglichen mit dem theoretisch bestmöglichen Weg weicht dieser aber mitunter stark von diesem ab.

Weitere Ausführungsformen der Erfindung sind in den abhängigen Ansprüchen wiedergegeben. Nachfolgend wird die Erfindung anhand der in den Figuren gezeigten Ausführungsbeispiele ausführlich erläutert. Es zeigt dabei

Fig. 1 zeigt eine schematische Darstellung eines SQL-RTNs gemäß Stand der Technik;

Fig. 2 zeigt eine schematische Darstellung die einer Ausführungsform des erfindungsgemäßen Verfahrens zugrunde liegenden RTN-Bausteine;

Fig. 3, 4, 5 zeigen jeweils eine schematische Darstellung eines RTN-Bausteins gemäß dem erfindungsgemäßen Verfahren;

Fig. 6 zeigt eine schematische Darstellung die einer weiteren Ausführungsform des erfindungsgemäßen Verfahrens zugrunde liegenden RTN-Bausteine;

Fig. 7 zeigt die schematische Darstellung der Verschachtelung von RTN-Bausteinen gemäß einer Ausführungsform des erfindungsgemäßen Verfahrens;

Fig. 8, 9, 10, 11, 12, 13 zeigen jeweils eine schematische Darstellung der Eingangsmengen-Zuweisungen von unterschiedlichen RTN-Baustein-Schachtelungen bzw. Sonderformen wie sie in Ausführungsformen des erfindungsgemäßen Verfahrens zur Anwendung gelangen;

Fig. 14, 15, 16 17 zeigen jeweils eine schematische Darstellung von Gruppierungsvarianten von RTN-Bausteinen, wie sie in Ausführungsformen des erfindungsgemäßen Verfahrens Anwendung finden.

Zwei sehr einfache Beispiele sollen das verdeutlichen:

Gegeben sei eine Tabelle "Firmen", die zumindest die Felder "Firmenname" und "Ort" enthält.

Beispiel 1:

**Erste Frage: Alle Firmen aus Orten mit mehr als 100 Firmen**

*EINE Möglichkeit der Beschreibung in SQL (Stand der Technik):*

```
SELECT Firmen.*
FROM Firmen, (SELECT Firmen.Ort
    FROM Firmen
```

```
        GROUP BY Firmen.Ort
        HAVING (Count(*)>100)
        ) AS FirmenOrteMehrAls100
 WHERE (Firmen.Ort=FinnenOrteMehrAls100.Ort)
```

Es wird die Menge der Firmen genommen, je Ort zusammengefasst und nur die Orte werden gemerkt, in denen es mehr als 100 Firmen gibt. Diese Menge wird mit der Menge der Firmen kartesisch verknüpft und es werden nur die Firmen genommen, deren Feld Ort auch in der Menge mit den Ort mit mehr als 100 Firmen zu finden ist.... Nachteil: die Menge der Orte muss gespeichert werden und die Menge der Firmen muss zweimal durchlaufen werden und einmal mit den Orten verglichen werden

*EINE Möglichkeit der Beschreibung mit flexiblen RTN-Bausteinen gemäß dem erfindungsgemäßen Verfahren:*

```
SELECT Firmen.*
WHERE (Firmen.Ort.WHERE ([Firmen.Count]>100))
```

Es wird die Menge der Firmen genommen, für jede Firma wird für den Ort geschaut, ob in diesem Ort mehr als 100 Firmen zu finden sind. Die gefunden Firmen werden ausgegeben. Die Abarbeitung wird durch den Optimizer natürlich wesentlich besser formuliert.

Beispiel 2:

**Zweite Frage: Von jedem Ort 100 beliebige Firmen**

*EIME Möglichkeit der Beschreibung in SQL (Stand der Technik):*

```
SELECT*
FROM (
SELECT Firmen.*, Row_Numberate() OVER Firmen.Ort AS FirmaOfOrt
FROM Firmen
)
WHERE (FirmenOfOrt<=100)
```

Die Menge der Firmen durchnummerieren, je Ort neu bei 1 beginnen, das in einer Menge speichern und aus dieser Menge alle Elemente nehmen, deren Nummerierung <= 100 ist.

*EINE Möglichkeit der Beschreibung mit flexiblen RTN-Bausteinen gemäß dem erfindungsgemäßen Verfahren:*

```
SELECT Firmen.*
BREAKON Firmen.Ort
FIRST #100
```

Es wird die Menge der Firmen aus der zugehörigen Tabelle genommen, BREAKON kennzeichnet, daß die nachfolgenden Funktionen je Firmen aus dem gleichen Ort angewandt wird, also die ERSTEN 100 Firmen aus jedem Ort.

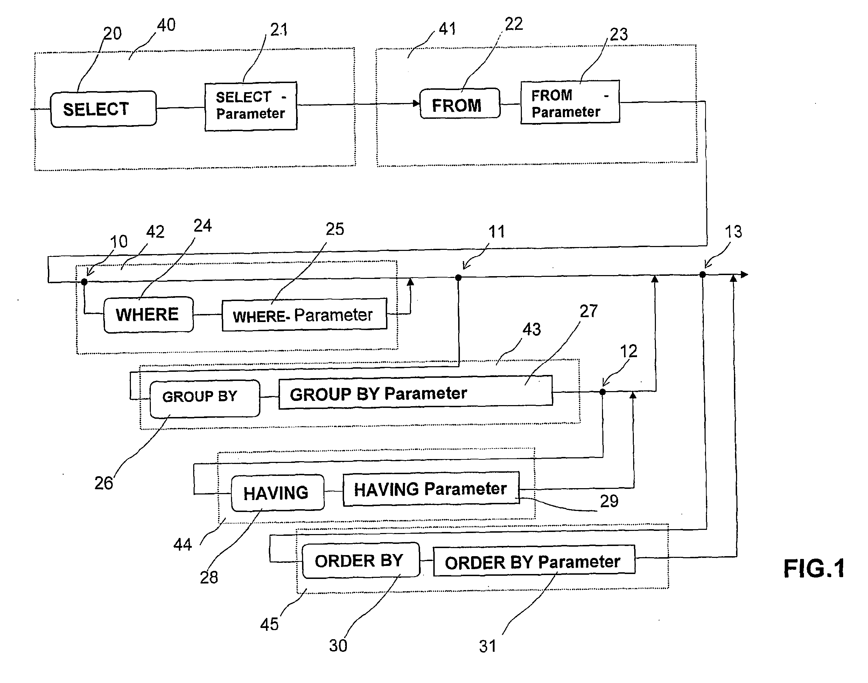

Fig.1 zeigt einen vereinfachten Entscheidungsgraphen nach dem Stand der Technik für die SELECT-Anweisung der Anfragesprache SQL, aus dem schematisch die Struktur des RTN für SQL ersichtlich wird.

Jedes Anfragestatement wird aus einer fix vorgegebenen Abfolge von zwingend aufeinander folgend angeordneten Verarbeitungsbereichen 40, 41, 42, 43, 44, 45 mit Schlüsselworten 20, 21, 22, 23, 24, 25, 26, 27, 28, 29, 30, 31 gebildet, wobei an Entscheidungspositionen 10, 11, 12, 13 - der Einfachheit halber nur für die einleitenden Schlüsselworte 24, 26, 28, 30 der Verarbeitungsbereiche 42, 43, 44 und 45 gezeigt - eine ganz bestimmte Auswahl an Schlüsselworten getroffen werden kann, um das gewünschte Anfrageergebnis zu erhalten. Eine bestimmte Gruppierung von Schlüsselworten bildet jeweils einen Verarbeitungsbereich, z.B. FROM (Schlüsselworte 22, 23), WHERE (Schlüsselworte 24, 25), GROUP BY (Schlüsselworte 26, 27) usw., wobei jeder Verarbeitungsbereich eine ihm zugeordnete Mengenverarbeitungsfunktion ausführt, z.B. FROM bildet kartesische Produkte mit der Möglichkeit spezieller JOINs.

Nach jedem einleitenden Schlüsselwort 20, 22, 24, 26, 28, 30 können weitere Schlüsselworte folgen, die in Fig.1 aus Gründen der Übersichtlichkeit nicht gezeigt sind. So kann z.B. nach dem Schlüsselwort 24 "WHERE" die Schlüsselworte "(", "NOT", ein Tabellenname, ein Tabellenfeldname, definierte Funktionen usw. direkt folgen. Ein SUBSELECT, also die rekursive Anwendung des RTN immer beginnend bei SELECT (Schlüsselwort 20) z.B. durch "(" kann an vorgegebenen Entscheidungspositionen auftreten. Somit kann an diesen Stellen jeweils immer nur das gesamte RTN als eine Einheit rekursiv eingesetzt werden.

Trotz der Vielzahl an möglichen auswählbaren Schlüsselworten besteht für SQL und verwandte Anfragesprachen eine relativ starke Eingeschränktheit und es gibt eine Reihe von Anfragen, welche sich mit den vorgegebenen Verarbeitungsbereichen in der vorgegebenen Verarbeitungsreihenfolge nur sehr umständlich und langwierig umschreiben lassen und daher aus dieser Beschreibung ein komplexerer und langsamerer Zugriffsplan generiert wird als tatsächlich erforderlich.

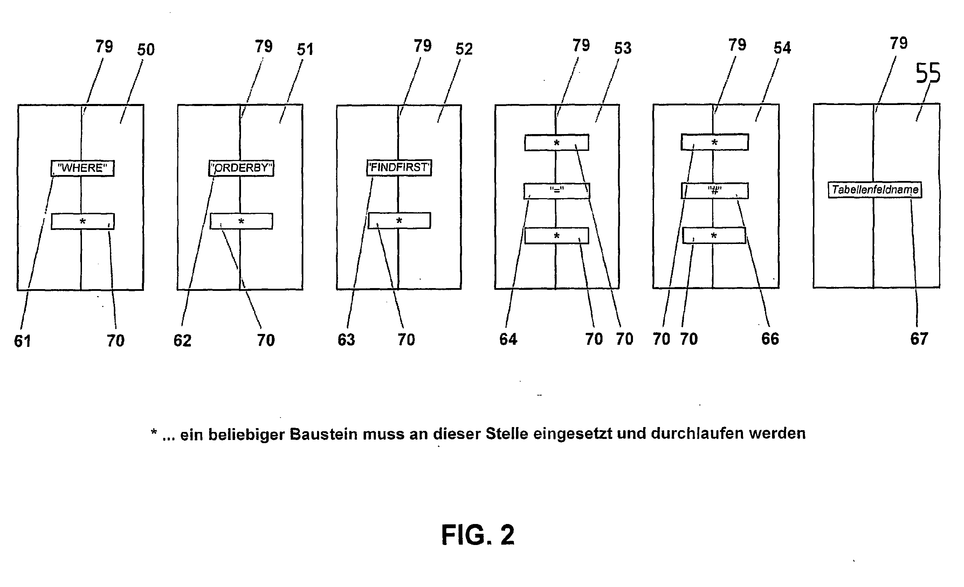

Fig.2 zeigt anhand eines Beispiels eine schematische Darstellung des dem erfindungsgemäßen Verfahren zugrunde liegenden RTN, wobei das RTN aus voneinander unabhängigen RTN-Bausteinen 50, 51, 52, 53, 54, 55 gebildet ist, deren Anzahl beliebig erweiterbar ist. Als Beispiel sind in Fig.2 vereinfachte RTN-Bausteine gezeigt, die jeweils nur einen einzigen Entscheidungspfad 79 mit jeweils einer geringen Anzahl an Entscheidungspositionen aufweisen.

Jeder RTN-Baustein 50, 51, 52, 53, 54, 55 greift auf Eingangsdatenmengen einer ihm zugewiesenen Verarbeitungs-Eingangsmenge mit einer definierten Reihenfolge der Mengenelemente zu, führt diese einer Verarbeitung zu und liefert eine neue Verarbeitungs-Ausgangsmenge mit zumindest einer Ausgangsdatenmenge ebenfalls mit einer definierten Reihenfolge der Mengenelemente, wobei die Ausgangsdatenmengen wertemäßig nicht zwingend von den Eingangsdatenmengen abweichen. Dabei stützt sich die Verarbeitung jeweils auf Schlüsselworte an den Entscheidungspositionen wie Schlüsselwort 61 "WHERE", Schlüsselwort 62 "ORDERBY", Schlüsselwort 63 "FINDFIRST", Schlüsselwort 64 "=", Schlüsselwort 66 "#" und Schlüsselwort 67 z.B. ein in der relationalen Datenbank vorhandener Tabellenfeldname.

Die in den RTN-Bausteinen 50, 51, 52, 53, 54 mit * gekennzeichneten Entscheidungspositionen 70 erfüllen eine Sonderfunktion, nämlich daß ein beliebiger RTN-Baustein aus der Gesamtauswahl aller zur Verfügung stehender RTN-Bausteine jeweils an dieser Stelle eingesetzt und bei der Verarbeitung durchlaufen wird.

Beispiel 3:

**FROM** FIRMEN

**WHERE** FIRMEN.ORT = "WIEN"

**ORDERBY** FIRMEN.ANZMITARBEITER

**FINDFIRST** (FIRMEN.UMSATZVORJAHR > 20.000) # 100

**FROM** stellt Datenmenge zur Verfügung, die im konkreten Beispiel Tabelle FIRMEN ist.

**WHERE** (Schlüsselwort 61 im RTN-Baustein 50) nimmt alle Mengenelemente der Eingangsdatenmenge FIRMEN, wobei diese Verarbeitungsfunktion sowohl beim Dateneingang als auch beim Datenausgang keinen Einfluß auf die Reihenfolge ausübt und selbst auch nicht diese Reihenfolge beeinflußt. Wie aus Fig.2 ersichtlich folgt nach WHERE im RTN-Baustein 50 zwingend die mit "*" gekennzeichnete Entscheidungsposition 70, an der ein beliebiger RTN-Baustein aus der Gesamtheit aller definierten RTN-Bausteine eingesetzt und durchlaufen wird.

Als Ausgangsdatenmenge liefert WHERE entsprechend der hier für diesen RTN-Baustein vorgenommenen Definition aus der Eingangsdatenmenge nur mehr jene Datensätze, für welche der an der Entscheidungsposition 70 eingesetzte RTN-Baustein nach seinem Durchlaufen in dessen gelieferter Wertemenge je Datensatz zumindest einen Wert ungleich 0 und ungleich NULL ergibt, weil jeder RTN-Baustein eine Menge mit zumindest einem Wert ausgibt.

Sinnvollerweise könnte z.B. dem RTN-Baustein 50 eine weitere optionale Entscheidungsposition hinzugefügt oder ein separater Baustein definiert werden, um zu definieren, daß als Selektionskriterium in der Wertemenge der Entscheidungsposition 70 definiert wird, daß zumindest ein Wert ungleich 0 und ungleich NULL sein muß oder genau kein Wert gleich 0 oder NULL sein darf.

Gemäß Beispiel 3 wird an der Entscheidungsposition 70 der RTN-Baustein 53 eingesetzt, bei welchem an dessen beiden Entscheidungspositionen 70 "*" jeweils ein weiterer RTN-Baustein eingesetzt wird (unter Verwendung der RTN-Bausteine von FIG.2)

Im Beispiel 3 liefert der RTN-Baustein 50 nur mehr jene Firmen, die im Tabellenfeld ORT "Wien" aufweisen.

**ORDERBY** (Schlüsselwort 62 im RTN-Baustein 51)

Die Elemente der Verarbeitungs-Eingangsmenge werden nach dem bzw. der in der Entscheidungsposition 70 sich ergebenden Wert bzw. Wertemenge je Element sortiert und der RTN-Baustein liefert als Verarbeitungs-Ausgangsmenge die Elemente der Verarbeitungs-Eingangsmenge in entsprechend sortierter Reihenfolge. Im Beispiel 3 wird eine Sortierung nach der Anzahl der Mitarbeiter vorgenommen.

**FINDFIRST** (Schlüsselwort 63 im RTN-Baustein 52)

Dieser RTN-Baustein nimmt die Eingangsdatenmenge in sortierter Reihenfolge, wie sie z.B. vom ORDERBY-RTN-Baustein geliefert wird, und findet unter Berücksichtigung dieser Reihenfolge nur mehr jene Elemente, für welche der an der Entscheidungsposition 70 eingesetzte RTN-Baustein nach seinem Durchlaufen in dessen gelieferter Wertemenge je Element zumindest einen Wert ungleich 0 und ungleich NULL ergibt, und gibt diese gefundenen Elemente entsprechend der Eingangssortierungsreihenfolge wieder aus.

**#** (Schlüsselwort 66 im RTN-Baustein 54)

Für das Beispiel 3 ist der RTN-Baustein 52 ("FINDFIRST") in den RTN-Baustein 54, welcher einen übergeordneten RTN-Baustein darstellt, an Stelle der ersten Entscheidungsposition 70 eingesetzt. Der RTN-Baustein 54 besagt in dieser Definition, daß alle Elemente, welche als Ergebnis des Durchlaufens der ersten Entscheidungsposition 70 geliefert werden, begrenzt werden auf die Anzahl Elemente, die an der zweiten Entscheidungsposition 70 angegeben sind.

Die Anwendung von RTN-Baustein 54 ("#") in sich geschachtelt im RTN-Baustein 54 ("#") ist definitionsgemäß zulässig, wie aus Beispiel 4 zu ersehen ist:

Beispiel 4:

(5, 3, 2, 9) #3 #2

Als Ergebnis des Schrittes #3 werden die ersten drei Elemente genommen, somit (5, 3, 2) als Ausgangsdatenmenge geliefert, welche die Eingangsdatenmenge für #2 ist. Als Ergebnis von #2 wird (5, 3) erhalten.

**=** (Schlüsselwort 64 im RTN-Baustein 53)

Im konkreten Beispiel wird im RTN-Baustein 50 nach Schlüsselwort 61 (WHERE) an der Entscheidungsposition 70 der RTN-Baustein 53 eingesetzt, also WHERE * = *

**Tabellenfeldname** (Schlüsselwort 67 im RTN-Baustein 55)

ORT, ANZMITARBEITER, UMSATZVORJAHR sind Tabellenfeldnamen, die an jeder Entscheidungsposition 70 stehen können.

Wie bereits erwähnt, weist jeder RTN-Baustein (so auch in Fig. 2 :50, 51, 52, 53, 54, 55) einen inneren, gerichteten Entscheidungsgraphen mit zumindest einem Entscheidungspfad 79 auf. Im Beispiel gemäß Fig.2 verläuft jeweils genau ein Entscheidungspfad in jedem RTN-Baustein 50, 51, 52, 53, 54, 55 ohne Verzweigungen, wobei in den in Fig.2 wiedergegebenen Darstellungen von oben beginnend dem Entscheidungsgraphen nach unten gefolgt wird.

Jeder Entscheidungsgraph der RTN-Bausteine 50, 51, 52, 53, 54, 55 ist unabhängig von den inneren, gerichteten Entscheidungsgraphen der anderen RTN-Bausteine 50, 51, 52, 53, 54, 55 definiert und kann eine oder mehrere Entscheidungspositionen 70 entlang des Entscheidungspfades aufweisen.

Nachfolgend werden weitere mögliche RTN-Bausteine beschrieben, die teilweise auch kompliziertere Entscheidungsgraphen benötigen.

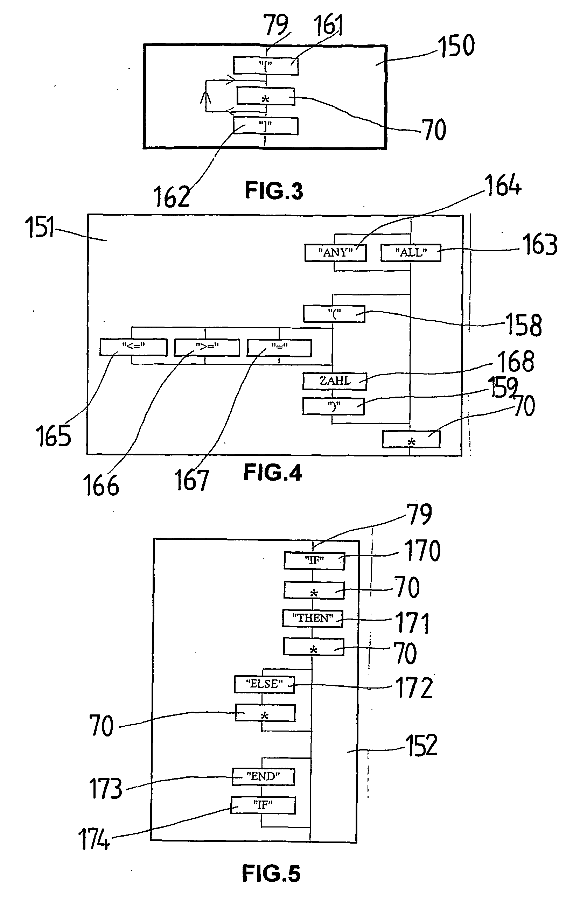

Fig.3 zeigt den RTN-Baustein 150, der anhand einer Verarbeitungs-Eingangsmenge eine Verarbeitungs-Ausgangsmenge mit der Besonderheit ausgibt, daß diese Verarbeitungs-Ausgangsmenge je Element einer übergeordneten Menge separat berechnet wird. An der Entscheidungsposition 70 kann ein beliebiger RTN-Baustein eingesetzt werden. Durch den beschriebenen Entscheidungsgraphen kann zwischen den eckigen Klammern 161, 162, wie durch die Pfeile angedeutet, diese Position beliebig oft hintereinander durchlaufen werden, wobei bei jedem Durchlauf einer aus der Gesamtauswahl der RTN-Bausteine eingesetzt wird. Übergeordnete Menge bedeutet in diesem Zusammenhang die Verarbeitungs-Eingangsmenge des übergeordneten RTN-Bausteins, in den dieser RTN-Baustein an Entscheidungsposition 70 eingesetzt wird.

Beispiel 5:

```
[
SELECT FIRMEN.FIRMENNAME
WHERE [
      ABTEILUNGEN.COUNT
      WHERE (FIRMEN.FIRMAID = ABTEILUNGEN.FIRMANR)
] > 3
]
```

Liefert je Firma - da hier die Menge aller Firmen die übergeordnete Menge darstellt - aus der gesamten Menge der Abteilungen nur jene Abteilungen, die jeder Firma zugeordnet sind und zählt diese. Es werden nur jene Firmen genommen, die mehr als drei Abteilungen aufweisen.

Das Statement gemäß Beispiel 5 lässt sich folgendermaßen in Bausteine aufgliedern.

Anwendung des RTN-Bausteins 150: [ * (*Wiederholung*)] ergibt für dieses Beispiel [ * * ], wobei

\*.....SELECT*[1]

\*.....WHERE*[1]

"Eckige Klammern" nehmen nach dieser Definition die in ihr enthaltene Menge und das gerade in Verarbeitung befindliche Element der Verarbeitungs-Eingangsmenge und es werden die eingesetzten RTN-Bausteine entlang des Entscheidungspfads des RTN-Bausteins 150, und zwar genauso oft wie es Elemente der Verarbeitungs-Eingangsmenge gibt, durchlaufen. Nachdem dieser erste RTN-Baustein 150 keinen übergeordneten RTN-Baustein hat, wird eine virtuelle Verarbeitungs-Eingangsmenge mit einem Element angenommen, sodaß dieser erste RTN-Baustein genau einmal durchlaufen wird.

SELECT *[1] hat als Verarbeitungs-Eingangsmenge FIRMEN, da diese als Parameter von SELECT genannt sind.

WHERE *[1] hat als Verarbeitungs-Eingangsmenge FIRMEN, da aus Kompatibilität zum SQL-Standard Anzeigefunktionen, wie sie SELECT darstellt, immer am Ende ausgeführt aber dennoch vorrangig im Statement angeführt werden können.

WHERE *[1] entspricht dem RTN-Baustein 50 , wobei die Entscheidungsposition 70 einen RTN-Baustein aus der Gesamtauswahl erwartet, dessen Wertemenge je Element der Verarbeitungs-Eingangsmenge - also FIRMEN - berechnet wird. An der Entscheidungsposition 70 wird im konkreten Fall (Beispiel 5) folgender RTN-Baustein eingesetzt:

$$*^2 \ (\text{Entscheidungsposition 70}) \ > \ (\text{Text}) \ *^2 \ (\text{Entscheidungsposition 70})$$

$*^2$ (Entscheidungsposition 70) > (Text) $*^2$ (Entscheidungsposition 70)

Der erste Stern $*^2$ (Entscheidungsposition 70) setzt wieder den RTN-Baustein 150 ein, der seinerseits wieder aus [$*^3$ $*^3$ ] besteht, nämlich zusammengesetzter erster Stern $*^3$ = ABTEILUNGEN.COUNT und WHERE (FIRMEN.FIRMAID = Abteilungen.FIRMANR) als zusammengesetzter zweiter Stern $*^3$.

Der zweite Stern $*^2$ (Entscheidungsposition 70) nach dem ">" enthält eine Wertemenge mit einem Wert, nämlich 3.

Die Fortsetzung der Zerlegung in weitere RTN-Bausteine von Beispiel 5 erfolgt analog.

Zwei alternative Schreibweisen für dieses Beispiel, die die gleiche Fragestellung wie Beispiel 5 mit anderen Abstraktionen beschreiben, und auf gleiche Weise wie Beispiel 5 optimiert werden können und einen identen Abarbeitungsplan liefern, sind nachfolgend gezeigt.

Beispiel 6:

```
[SELECT FIRMEN.FIRMENNAME
WHERE [
```

```
      ABTEILUNGEN
      WHERE (FIRMEN.FIRMAID = Abteilungen.FIRMANR)
].COUNT > 3
]
```

Im Beispiel 6 wird die Menge der Abteilungen für jede Firma durchlaufen und die Elemente mit Übereinstimmung je aktuelle Firma als Verarbeitungs-Ausgangsmenge des RTN-Bausteins 150 geliefert, und durch ".COUNT" gezählt und mit >3 verglichen.

Beispiel 7:

```
[SELECT FIRMEN.FIRMENNAME
WHERE [
      ABTEILUNGEN.WHERE (FIRMEN.FIRMAID = Abteilungen.FIRMANR).COUNT
] > 3
]
```

Im Beispiel 7 wird die Menge der Abteilungen je Firma durchlaufen und die Anzahl Elemente mit Übereinstimmung je aktueller Firma als Verarbeitungs-Ausgangsmenge des RTN-Bausteins 150 geliefert und mit >3 verglichen.
Um die Definition der eckigen Klammern noch weiter zu verdeutlichen, wird ein weiteres Beispiel angegeben, welches die gleiche Fragestellung wie Beispiel 1 beantwortet, nämlich alle Firmen aus Orten mit mehr als 100 Firmen

Beispiel 8:

```
[SELECT FIRMEN.FIRMENNAME, FIRMEN.ADRESSE
WHERE [ FIRMEN AS FIRMEN2
         WHERE FIRMEN.ORT = FIRMEN2.ORT
].COUNT > 100]
```

Die Besonderheit dieses Beispiels liegt darin, daß auf die Menge FIRMEN je Element FIRMA zugegriffen wird, und daher gleiche Orte gezählt werden können.
Drei alternative Schreibweisen mit anderen Abstraktionen aber gleichem optimierten Zugriffsplan sind nachfolgend gezeigt:

Beispiel 9:

```
[SELECT FIRMEN.FIRMENNAME, FIRMEN.ADRESSE
WHERE FIRMEN.ORT.[FIRMEN.COUNT]> 100]
```

Alle Firmen nehmen, in deren Ort mehr als 100 Firmen zu finden sind.

Beispiel 10:

```
[SELECT FIRMEN.FIRMENNAME, FIRMEN.ADRESSE
GROUPBY FIRMEN.ORT
WHERE [FIRMEN.COUNT] > 100
END GROUPBY]
```

Durch GROUPBY Firmen. Ort je unterschiedlichem Ort zusammenfassen und je zusammengefasstem Element Ort die Firmen dieses Ortes merken. Durch [Firmen.Count] zählen, wie viele Firmen dem jeweiligen Element Ort zugeordnet sind, und mit WHERE nur die Orte nehmen, denen mehr als 100 Firmen zugeordnet sind. END GROUPBY besagt, daß die Zusammenfassung je Ort aufgegeben wird und stattdessen die Firmen, die dem Ort zugewiesen wurden, verwendet werden. Nachdem Orte mit weniger als 100 Firmen nicht weiterverarbeitet wurden, wurden auch deren Firmen nicht weiterverarbeitet.

Beispiel 11:

```
[SELECT FIRMEN.FIRMENNAME, FIRMEN.ADRESSE
BREAKON FIRMEN.ORT
WHERE COUNT > 100]
```

Der RTN-Baustein "BREAKON *" liefert je Element seiner Verarbeitungs-Eingangsmenge eine Aufspaltung in mehrere Ausgangs-Datenmengen in seiner Verarbeitungs-Ausgangsmenge, wobei die sich ergebenden Ausgangs-Datenmengen in der Verarbeitungs-Ausgangsmenge so zusammengefasst sind, daß jeweils die Elemente der Verarbeitungs-Eingangsmenge, die die jeweils gleiche Verarbeitungs-Ausgangsmenge für den eingesetzten RTN-Baustein an der Entscheidungsposition 70 (*) zurückliefern, in die jeweils gleiche Ausgangs-Datenmenge gesetzt werden und die Anzahl der Ausgangs-Datenmengen der Anzahl der unterschiedlichen Werte in der Entscheidungsposition 70 (*) des RTN-Bausteins BREAKON entspricht.

Im konkreten Fall (Beispiel 11) ist die Entscheidungsposition 70 für BREAKON "FIRMEN.ORT", woraus sich eine der Anzahl der vorhandenen Orte entsprechende Anzahl der Datenmengen ergibt.

Weitere Verarbeitungsfunktionen nach BREAKON beziehen sich immer auf diese Ausgangs-Datenmengen als Eingangs-Datenmengen und wenden ihre Verarbeitungsfunktionen auf jede einzelne Eingangs-Datenmenge unabhängig voneinander an und liefern ihrerseits wieder die gleiche Anzahl an Ausgangs-Datenmengen, bis ein bestimmter RTN-Baustein, beispielsweise "END BREAKON", erreicht wird, welcher besagt, daß alle Eingangs-Datenmengen seiner Verarbeitungs-Eingangsmenge in eine einzige Ausgangs-Datenmenge in seiner Verarbeitungs-Ausgangsmenge zusammengefasst werden.

Für das obige Beispiel 11 werden alle Firmen je Ort in jeweils eine eigene Menge geschrieben und das nachfolgende WHERE wird auf jede dieser Mengen unabhängig angewandt, es wird also je Eingangs-Datenmenge Ort gezählt, wie viele Elemente (Firmen) sich in der aktuellen Eingangs-Datenmenge (Ort) befinden. Sind es mehr als 100 Firmen in der aktuellen Eingangsmenge Ort, wird die gesamte Eingangsmenge für diesen Ort übernommen und nachfolgend alle Firmen dieser Ausgangs-Datenmenge mit SELECT angezeigt.

Ein weiteres Beispiel, welches zuerst eine Verarbeitungsfunktion auf die gesamten Daten innerhalb einer Datenmenge zeigt, dann eine Aufteilung in mehrere Datenmengen und dann eine Verarbeitungsfunktion vorgenommen wird, die einzeln auf jede Datenmenge angewandt wird, danach wiederum eine Zusammenfassung in eine Datenmenge mit einer letzten Verarbeitungsfunktion durchgeführt wird, welche auf die gesamte Datenmenge Bezug nimmt. Im Vergleich zu SQL ist sowohl die Formulierung kürzer und konkreter an die unmittelbar auftretende Fragestellung angelehnt, als auch die Abarbeitung verbessert, da durch die einzelnen RTN-Bausteine sehr konkret beschrieben wird, was der Anwender für ein Ergebnis möchte und nicht mit temporären Tabellen gearbeitet werden muß.

Beispiel 12:

```
[SELECT FIRMEN.FIRMENNAME, FIRMEN.ADRESSE (0)
WHERE FIRMEN.DELETED = FALSE (1)
BREAKON FIRMEN.ORT (2)
WHERE COUNT > 100 (3)
END BREAKON (4)
MAX FIRMEN.UMSATZ2006 # 1000 (5)
]
```

(1) aus der gesamten Menge der Firmen werden nur jene Firmen ausgewählt, die nicht gelöscht sind

(2) Die Menge der nicht gelöschten Firmen je nach gleichem Ort in jeweils gleiche Datenmengen speichern

(3) Jede Datenmenge zählen und nur jene Datenmengen weiterverwenden, in denen sich mehr als 100 Elemente befinden. Es sind nunmehr jene Datenmengen, im konkreten Orte, vorhanden, in denen mehr als 100 Firmen vorhanden sind.

(4) Alle einzelnen Datenmengen wieder in EINE Datenmenge zusammenschreiben, bedeutet, alle Firmen aller Orte mit mehr als 100 Firmen in eine Datenmenge schreiben.

(5) Von allen diesen Firmen nur mehr jene auswählen, die zu den 1000 umsatz-besten Firmen insgesamt gehören.

(0) Ausgabe der in SELECT definierten Tabellen-Felder

Fig.4 zeigt den RTN-Baustein 151 mit den Schlüsselworten 163 "ALL" und 164 "ANY", die wie vorstehend bereits angedeutet, als Selektionskriterium in der Wertemenge des RTN-Bausteins, der an der Entscheidungsposition 70 eingesetzt wird, definiert werden, sodaß zumindest ein Wert ungleich Null und ungleich NULL sein muß (ANY) oder genau kein Wert gleich 0 oder NULL sein darf (ALL).

Der RTN-Baustein 151 bietet aber auch die Möglichkeit zu sagen, es muss GENAU (Schlüsselwort 167), MINDESTENS (Schlüsselwort 166) oder MAXIMAL (Schlüsselwort 167) eine bestimmte Anzahl an Werten (Schlüsselwort 168) ungleich Null oder NULL sein (bei "ANY"), bzw. (bei "ALL") müssen alle Werte bis auf genau (Schlüsselwort 167) /zumindest (Schlüsselwort 166) / maximal (Schlüsselwort 165) eine Anzahl (Schlüsselwort 168) ungleich Null oder NULL sein.

Die Flexibilität in der Anwendung der RTN-Bausteine läßt sich anhand des vorstehend beschriebenen RTN-Bausteins 151 wie folgt zeigen. ANY bedeutet in der Grunddefinition, daß zumindest ein Wert der Wertemenge für das aktuelle Element der Verarbeitungs-Eingangsmenge zutreffen muß, also ungleich Null und ungleich NULL sein muß. Diese Funktion kann aber bedarfs gemäß erweitert werden, indem über einen oder mehrere weitere übergeordnete oder eingesetzte RTN-Bausteine eine entsprechende Modifikation zugelassen wird.

Beispiel 13:

```
FIRMEN.WHERE ANY [KONTAKTPERSONEN WHERE (FIRMEN.FIRMAID =
KONTAKTPERSONEN.FIRMANR)].Geschlecht = "MANN"
```

ANY bedeutet, daß zumindest ein Wert der Verarbeitungsfunktion - im Beispiel 13 an der Stelle WHERE - zumindest einen Wert ungleich Null haben muß, liefert also alle Firmen, bei denen zumindest eine männliche Kontaktperson vorhanden ist.

Beispiel 14:

```
FIRMEN.WHERE ANY (<= 3) [KONTAKTPERSONEN WHERE (FIRMEN.FIRMAID =
KONTAKTPERSONEN.FIRMANR)].Geschlecht="MANN"
```

ANY mit der Erweiterung (<=3) bedeutet, daß maximal DREI Werte der Verarbeitungsfunktion - im Beispiel 14 an der Stelle WHERE - zumindest einen Wert ungleich Null haben müssen, liefert also alle Firmen, bei denen maximal DREI männliche Kontaktpersonen vorhanden sind.

Beispiel 15:

```
FIRMEN.WHERE ALL [KONTAKTPERSONEN WHERE (FIRMEN.FIRMAID =
KONTAKTPERSONEN.FIRMANR)].Geschlecht = "MANN"
```

ALL bedeutet, daß alle Werte der Verarbeitungsfunktion - im Beispiel 15 an der Stelle WHERE - genau keinen Wert ungleich Null haben müssen, liefert also alle Firmen, bei denen NUR männliche Kontaktpersonen vorhanden sind.

Beispiel 16:

```
FIRMEN.WHERE ALL (<= 3) [KONTAKTPERSONEN WHERE (FIRMEN.FIRMAID =
KONTAKTPERSONEN.FIRMANR)].Geschlecht = "MANN"
```

ALL mit der Erweiterung (<= 3) bedeutet, daß alle bis auf maximal drei Werte der Verarbeitungsfunktion - im Beispiel 16 an der Stelle WHERE - einen Wert ungleich Null haben dürfen, liefert also alle Firmen, bei denen MAXIMAL DREI weibliche Kontaktpersonen vorhanden sind.

Fig.5 zeigt den RTN-Baustein 152, der eine IF THEN ELSE - Bedingung für die Berechnung der Ausgangsdatenmenge heranzieht.

Beispiel 17:

```
SELECT FIRMEN.FIRMENNAME, FIRMEN.ORT
IF FIRMEN.ANZAHLMITARBEITER < 100
THEN WHERE FIRMEN.UMSATZ2006 >
            IF FIRMEN.PLZ = 1010 THEN 500.000 ELSE 300.000
ELSE MAX FIRMEN.UMSATZ2006 # 1000
END IF
ORDERBY FIRMEN.FIRMENNAME
```

Die Fragestellung zu diesem Beispiel lautet wie folgt: Alle Firmen angeben, wobei für Firmen mit weniger als 100 Mitarbeitern andere Kriterien gelten als für Firmen mit genau oder mehr als 100 Mitarbeitern.

Hat die Firma weniger als 100 Mitarbeiter, wird der Umsatz 2006 abhängig von der Postleitzahl (PLZ) verglichen, bei PLZ 1010 muss der Umsatz > 500.000 betragen, alle anderen PLZ werden mit einem Umsatz von 300.000 verglichen. Von Firmen mit zumindest 100 Mitarbeitern werden nur diejenigen Finnen ausgewählt, deren Umsatz im Jahr 2006 zu den 1000 größten Umsätzen von allen Firmen gehört.

Der RTN-Baustein 152 in FIG. 5 hat zwei zwingende und eine optionale (nach dem Schlüsselwort 172 (ELSE) Entscheidungspositionen 70, an denen aus der Gesamtheit der RTN-Bausteine ein RTN-Baustein eingesetzt wird, wobei das Schlüsselwort 170 (IF) und die darauf folgende Entscheidungsposition 70 festlegen, ob für das aktuelle Element der Verarbeitungs-Eingangsmenge dieses RTN-Bausteins entweder die Entscheidungsposition 70 nach dem Schlüsselwort 171 (THEN) oder die Entscheidungsposition 70 nach dem Schlüsselwort 172 (ELSE) als Verarbeitungs-Ausgangsmenge dieses RTN-Bausteins zurückliefert. Wird kein Schlüsselwort 172 (ELSE) und dadurch keine Entscheidungsposition 70 angegeben, wird als Verarbeitungs-Ausgangsmenge für diese Entscheidungsposition 70 TRUE (-1) angenommen.

Die Schlüsselworte 173 (END) und 174 (IF) sind deswegen optional, weil das Ende des RTN-Bausteins 152 durch GENAU EINE Entscheidungsposition 70 definiert ist, die Schlüsselworte können aber aus Gründen der Übersichtlichkeit angegeben werden.

Sollen mehrere Entscheidungspositionen 70 aufeinander folgend zwischen den Schlüsselworten 170 und 171, bzw. zwischen den Schlüsselworten 171 und 172, bzw. zwischen den Schlüsselworten 172 und 173 eingefügt werden, gibt es zwei Möglichkeiten:

Die erste Möglichkeit bestünde darin, die Schlüsselworte 173 (END) und 174 (IF) fest vorzuschreiben und damit jeweils an den Entscheidungspositionen 70 dieses RTN-Bausteins beliebig oftmalige Aufrufe zu erlauben.

Die zweite, hier gewählte, Möglichkeit besteht in der Verwendung eines RTN-Bausteins, welcher mit zumindest einem Schlüsselwort beginnt und mit zumindest einem Schlüsselwort endet, und zwischen diesen Schlüsselworten genau eine beliebig oftmalig aufrufbare Entscheidungsposition 70 enthält. In diesen RTN-Baustein können alle gewünschten RTN-Bausteine angegeben werden, und dieser eine RTN-Baustein kann in den RTN-Baustein 152 sowie in alle anderen RTN-Bausteine an den Entscheidungspositionen eingesetzt werden.

Beispiel 18:

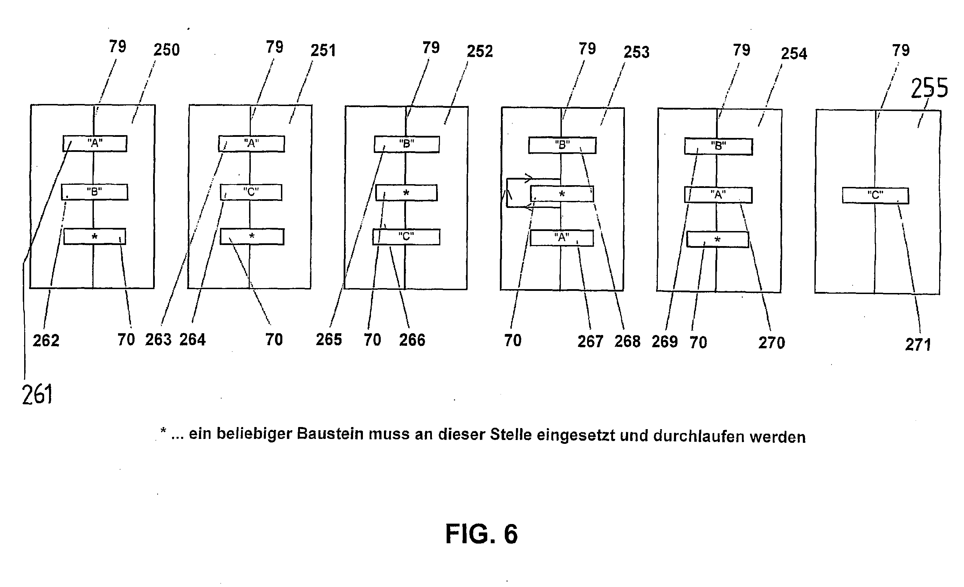

Fig.6 zeigt beispielhaft eine der Einfachheit halber angenommene, begrenzte Gesamtheit aller definierten RTN-Bausteine 250, 251, 252, 253, 254, 255 nebeneinander.

Folgendes Statement mit 10 Schlüsselworten liegt dem Beispiel 18 zugrunde, wobei A, B, C die verwendeten Schlüsselworte sind.

B A C C C B A C C A

In einem Auswahlschritt gemäß dem erfindungsgemäßen Verfahren werden die inneren Entscheidungsgraphen aller RTN-Bausteine 250 bis 255 anhand der Schlüsselworte 261 bis 271 durchlaufen, und allen möglichen Pfaden 79 dieser Entscheidungsgraphen solange gefolgt, bis entweder keine Übereinstimmung mit dem jeweils gewählten Pfad 79 durch den Entscheidungsgraphen festgestellt und der Vorgang abgebrochen wird oder der jeweils gewählte Pfad 79 bis zum Ende durchlaufen wird.

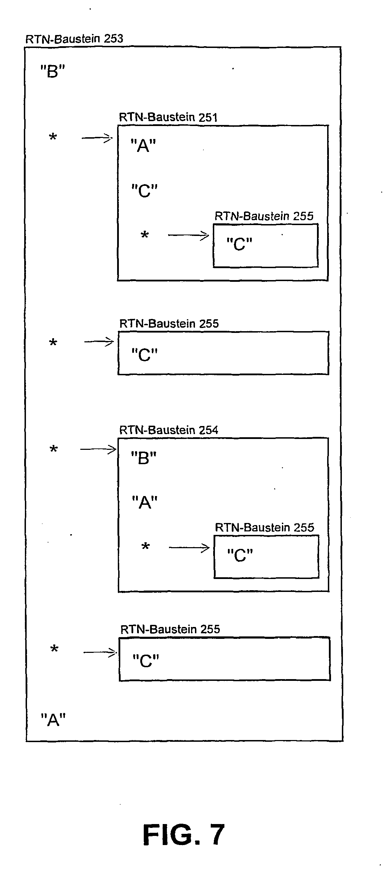

Dieser Vorgang setzt sich aus den folgenden zehn Schritten zusammen, wobei die Anzahl der Schritte der Anzahl der Schlüsselworte entspricht und ist in Fig.7 graphisch als Ergebnis für den letzten Schritt 10 gezeigt.

**Schritt 1**

"B" als erstes Schlüsselwort im Statement wird mit jeweils ersten Schlüsselworten in den RTN-Bausteinen 250, 251 ... verglichen und eine Übereinstimmung wird gefunden bei

RTN-Baustein 250 → keine Übereinstimmung bei Schlüsselwort 261 ("A")
RTN-Baustein 251 → keine Übereinstimmung bei Schlüsselwort 263 ("A")
RTN-Baustein 252 → Schlüsselwort 265 ("B")
RTN-Baustein 253 → Schlüsselwort 268 ("B")
RTN-Baustein 254 → Schlüsselwort 269 ("B")
RTN-Baustein 255 → keine Übereinstimmung bei Schlüsselwort 271 ("C")

Somit werden nur mehr die RTN-Bausteine 252, 253, 254 weiterverfolgt.

Ergibt (aktuelle Position ist jeweils unterstrichen):

$$\begin{array}{ll} \text{RTN-Baustein 252:} & \underline{B} * C \\ \text{RTN-Baustein 253:} & \underline{B} * A \\ \text{RTN-Baustein 254:} & \underline{B} \, A * \end{array}$$

**Schritt 2**

Es wird das nächste Schlüsselwort - "A" - im Statement herangezogen, wobei die Übereinstimmung an der aktuellen zweiten Stelle des jeweiligen RTN-Bausteins gesucht wird. Entscheidungsposition 70 ("*") bedeutet in diesem Zusammenhang, daß an dieser Stelle jeder beliebige RTN-Baustein eingesetzt werden kann. Der Entscheidungspfad weist somit an der Entscheidungsposition 70 eine rekursive Aufruffunktion auf, durch welche einer der RTN-Bausteine als Ergebnis der Anwendung des Auswahlschrittes auf die Gesamtheit der RTN-Bausteine durchlaufen wird, sodaß eine beliebig oftmalige rekursiv verschachtelte Ausführung des Auswahlschrittes ausgehend von der zumindest einen der Entscheidungspositionen ermöglicht wird. Somit muß an der Entscheidungsposition 70 auch die Möglichkeit geprüft werden, ob durch Einsetzen eines der Gesamtheit der RTN-Bausteine Übereinstimmung gefunden werden kann.

RTN-Baustein 252 → Schlüsselwort 265 gefolgt von Entscheidungsposition 70 ("B" "*")
RTN-Baustein 253 → Schlüsselwort 268 gefolgt von Entscheidungsposition 70 ("B" "*")
RTN-Baustein 254 → Schlüsselwort 269 ("B" "A")

In den RTN-Baustein 252 kann an der Entscheidungsposition 70 daher aus der Gesamtheit der RTN-Bausteine gewählt werden, um einen davon einzusetzen, z.B. werden die RTN-Bausteine 250 bis 255 eingesetzt, und festgestellt, ob sich Übereinstimmung mit dem Statement ergibt, wobei nur für den RTN-Baustein 250 und 251 Übereinstimmung an der ersten Entscheidungsposition festgestellt werden kann.

$$\begin{array}{ll} \text{250 in 252 eingesetzt:} & B \underline{*} C \rightarrow B \underline{A} B * C \\ \text{251 in 252 eingesetzt:} & B \underline{*} C \rightarrow B \underline{A} C * C \\ \text{250 in 253 eingesetzt:} & B \underline{*} A \rightarrow B \underline{A} B * A \\ \text{251 in 253 eingesetzt} & B \underline{*} A \rightarrow B \underline{A} C * A \\ \text{254} & B \underline{A} * \end{array}$$

**Schritt 3**

$$\begin{array}{llll} \text{250 in 252 eingesetzt:} & B * \underline{C} \rightarrow B \, A \, \underline{B} * C & \text{nicht weiterverfolgt} \\ \text{251 in 252 eingesetzt:} & B * \underline{C} \rightarrow B \, A \, \underline{C} * C & \text{weiterführen} \\ \text{250 in 253 eingesetzt:} & B * \underline{A} \rightarrow B \, A \, \underline{B} * A & \text{nicht weiterverfolgt} \\ \text{251 in 253 eingesetzt} & B * \underline{A} \rightarrow B \, A \, \underline{C} * A & \text{weiterführen} \\ \text{254} & B \, A \, \underline{*} & \text{einsetzen aller Bausteine} \end{array}$$

ergibt:

251 in 252 eingesetzt:   B * $\underline{C}$ → B A $\underline{C}$ * C
251 in 253 eingesetzt   B * $\underline{A}$ → B A $\underline{C}$ * A
255 in 254 eingesetzt   B A $\underline{*}$ → B A $\underline{C}$

**Schritt 4**

251 in 252 eingesetzt:   B A C $\underline{*}$ C   Einsetzen aller RTN-Bausteine
251 in 253 eingesetzt   B A C $\underline{*}$ A   Einsetzen aller RTN-Bausteine
255 in 254 eingesetzt   B A C       Nicht weiterverfolgt, weil zu Ende

ergibt

255 in 251 in 252 eingesetzt:   B * C → B A C $\underline{C}$ C
255 in 251 in 253 eingesetzt   B * A → B A C $\underline{C}$ A

**Schritt 5:**

255 in 251 in 252 eingesetzt:   B A C C $\underline{C}$   Weiterführen
255 in 251 in 253 eingesetzt   B A C C $\underline{*}$ A   Beliebiges Erreichen der Entscheidungsposition 70 in RTN-Baustein 253 möglich;
255 in 251 in 253 eingesetzt   B A C C $\underline{A}$   Nicht weiterverfolgt, weil keine Übereinstimmung

ergibt

255 in 251 in 252 eingesetzt:                 B A C C $\underline{C}$
(255 in 251, gefolgt von 255) in 253 eingesetzt   B A C C $\underline{C}$ A

**Schritt 6:**

255 in 251 in 252 eingesetzt: B A C C C       Nicht weiterverfolgt, weil zu Ende
(255 in 251, gefolgt von 255) in 253 eingesetzt   B A C C C $\underline{A}$ nicht weiterverfolgt, weil keine Übereinstimmung
(255 in 251, gefolgt von 255) in 253 eingesetzt   B A C C $\underline{*}$ A Einsetzen aller RTN-Bausteine

ergibt:

(255 in 251, gefolgt von 255, gefolgt von 252) in 253 eingesetzt   B A C C C $\underline{B}$ * C A
(255 in 251, gefolgt von 255, gefolgt von 253) in 253 eingesetzt   B A C C C $\underline{B}$ * A A
(255 in 251, gefolgt von 255, gefolgt von 254) in 253 eingesetzt   B A C C C $\underline{B}$ A * A

und so weiter und so fort

**Ergebnis von Schritt 10:**

(255 in 251, gefolgt von 255, gefolgt von 255 in 254, gefolgt von 255) in 253

Aus dem in Fig. 7 gezeigten Ergebnis gemäß Schritt 10 wird entsprechend der Reihenfolge der RTN-Bausteine und deren Verschachtelung, wie sie sich durch die Anwendung der Auswahlschritte auf alle Schlüsselworte des Anfragestatements ergibt, ein Zugriffsplan für das relationale Datenbanksystem generiert, wobei zuvor die Schachtelung der RTN-Bausteine mittels der weiter unten erläuterten Gewichtung gegebenenfalls geändert werden muss, um Mehrdeutigkeiten, wie sie sich durch die Einsetzmöglichkeiten von RTN-Bausteinen an die Entscheidungspositionen 70 anderer RTN-Bausteine ergeben, richtig aufzulösen.

Um das Ende jedes RTN-Bausteins und der in ihn eingesetzten RTN-Bausteine immer eindeutig zu erkennen, ist es notwendig, daß den Entscheidungsgraphen der RTN-Bausteine jenen Entscheidungspositionen, an denen eine von vornherein nicht vorbestimmte, unbeschränkte Anzahl an aufeinander folgenden Aufrufen von rekursiven Aufruffunktionen durchgeführt wird, zumindest eine Entscheidungsposition, welche ein Schlüsselwort (Text, Sonderzeichen, Variable oder Zahl) verlangt, vorangestellt ist und zumindest eine Entscheidungsposition, welche ebenfalls ein Schlüsselwort verlangt, nachfolgt.

Ein Beispiel dafür ist der RTN-Baustein "Ebenen", in dem die Entscheidungsposition 70 beliebig oft aufeinander folgen kann, wobei dieser Baustein definitionsgemäß mit einem vorangehenden Schlüsselwort beginnt ("[") und einen nachfolgenden Schlüsselwort ("]") endet: "["(1)*(*1)"]"

Vermittels des erfindungsgemäßen Verfahrens mit all seinen Freiheitsgraden in der Formulierung von Statements wird es möglich, eine Anfragesprache zu definieren, welche folgender Logik gehorcht:

Vorausgesetzt wird eine Vielzahl an Tabellen und gespeicherten Anfragen in einem relationalen Datenbanksystem, welche nachfolgend als Mengen bezeichnet und abstrahiert werden.

Erfindungsgemäß ist eine Vielzahl an vorgegebenen RTN-Bausteinen vorhanden, wobei jeder RTN-Baustein einen inneren Entscheidungsgraphen hat, der unabhängig von den inneren Entscheidungsgraphen der anderen RTN-Bausteine definiert ist. Eine Vielzahl der RTN-Bausteine hat an zumindest einer Entscheidungsposition eine syntaktische Kennzeichnung, die besagt, daß an dieser Entscheidungsposition jeder beliebige RTN-Baustein aus der Gesamtheit der RTN-Bausteine eingesetzt werden kann, im vorher gezeigten entspricht diese der Entscheidungsposition 70.

Jeder RTN-Baustein bekommt zumindest eine Verarbeitungs-Eingangsmenge zugewiesen, führt zumindest eine Verarbeitungsfunktion basierend auf dieser Verarbeitungs-Eingangsmenge durch und erzeugt eine Verarbeitungs-Ausgangsmenge. Es ist dabei vorgesehen, daß die Verarbeitungs-Eingangsmengen eines RTN-Bausteins durch an Entscheidungspositionen 70 eingesetzte RTN-Bausteine in diesem RTN-Baustein vor Ausführung der Verarbeitungsfunktion neu zugewiesen werden können.

Durch die Zerlegung und das Einsetzen in RTN-Bausteine wird jedes formulierbare Statement in eine gleiche Abstraktionsform, welche auf einer Schachtelung von RTN-Bausteinen beruht, gebracht, unabhängig von der den verwendeten RTN-Bausteinen zugeordneten Verarbeitungsfunktion. Durch diese gleiche Abstraktion gilt eine Algebra für alle RTN-Bausteine und Schachtelungsmöglichkeiten.

Es kann immer eine endliche Anzahl an Grundbausteingruppen vereinbart werden, wobei für jede Grundbausteingruppe etliche Annahmen vorausgesetzt werden, die gelten, solange übergeordnete oder eingesetzte RTN-Bausteine keine eigene andere Definition vorschreiben.

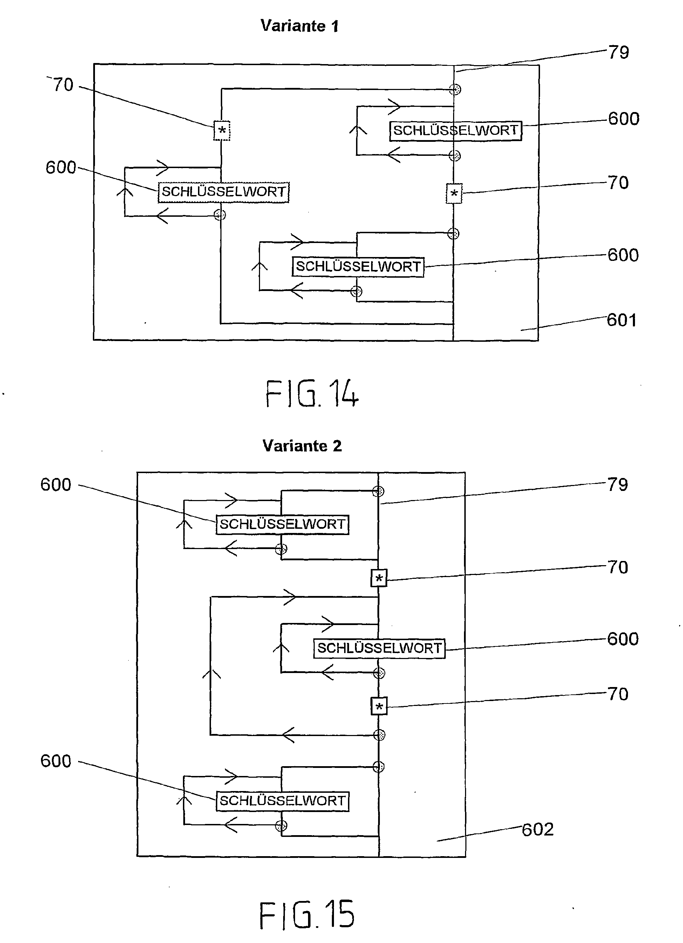

Beispiele für mögliche Grundbausteingruppen (Fig. 14, 15, 16, 17):

Variante 1 (Fig. 14): RTN-Baustein 601 mit beliebigen Schlüsselworten 600 und genau eine Entscheidungsposition 70, in die ein RTN-Baustein aus der Gesamtheit der RTN-Bausteine eingesetzt wird, wobei ein RTN-Baustein dieser Variante zumindest ein Schlüsselwort 600 entweder VOR und/oder NACH der Enscheidungsposition 70 vorschreibt

Variante 2 (Fig. 15): RTN-Baustein 602 mit beliebigen Schlüsselworten 600 und zumindest zwei oder mehrere Entscheidungspositionen 70, wobei alle vorkommenden Entscheidungspositionen 70 jeweils durch Schlüsselworte getrennt sind.

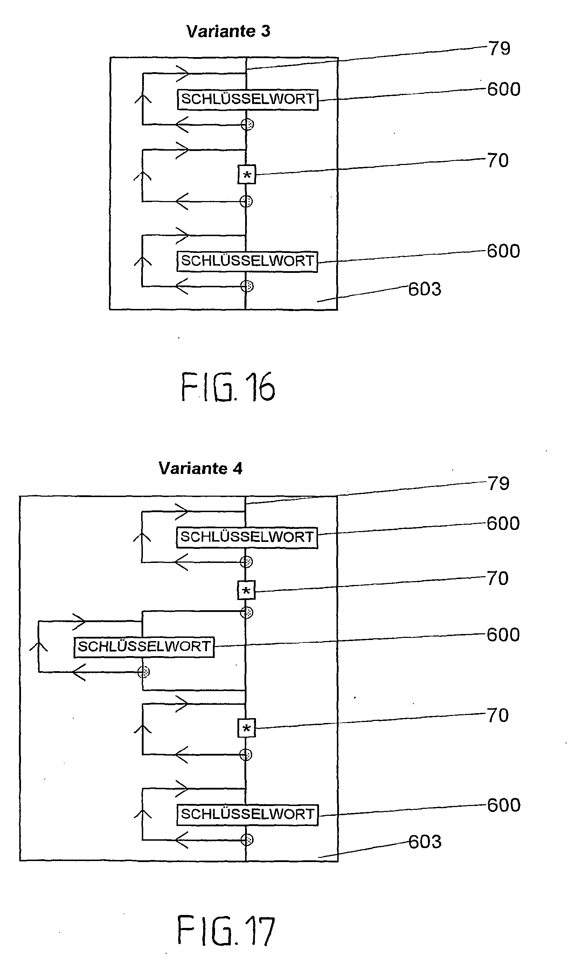

Variante 3 (Fig. 16): RTN-Baustein 603, mit beliebigen Schlüsselworten 600, welche sich ausschließlich VOR und NACH der beliebig oftmalig aufrufbaren Entscheidungsposition 70 befinden.

Variante 4 (Fig. 17): RTN-Baustein 604 mit beliebigen Schlüsselworten 600, welche sich am Beginn und am Ende des Entscheidungspfades 79 befinden und welche eine Entscheidungsposition 70 gefolgt von einer beliebig oftmalig aufrufbaren Entscheidungsposition 70 enthalten, wobei nach der ersten Entscheidungsposition 70 beliebig viele Schlüsselworte 600 folgen können.

Alle bei der Formulierung eines beliebigen Statements sich ergebenden Schachtelungsmöglichkeiten lassen sich in diese oder weitere Varianten oder deren Kombinationen unterteilen. Gezeigt werden Abarbeitungsschritte, die in diesen Varianten jeweils angewandt werden, sofern die verwendeten RTN-Bausteine keine anderen Abarbeitungsabläufe bzw. Verarbeitungsmengen-Zuweisungen beschreiben.

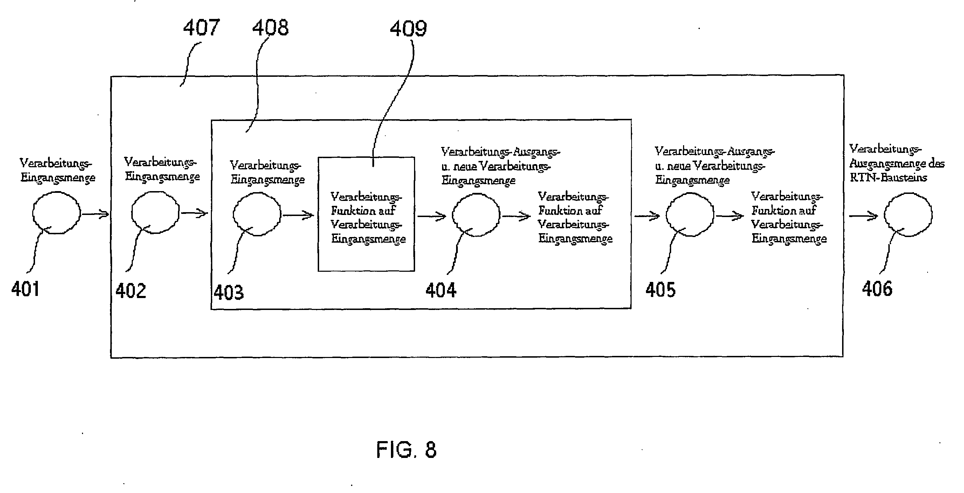

Variante 1 (Fig. 8, 14)

Für jene RTN-Bausteine der Gesamtheit der RTN-Bausteine, die gemäß der in Fig. 14 dargestellten Variante 1 definiert sind, gilt folgende Verarbeitungsmengen-Zuweisung: Ist eine Entscheidungsposition 70 in einem übergeordneten RTN-Baustein vorgesehen, so wird dem an dieser Stelle eingesetzten weiteren RTN-Baustein als Verarbeitungs-Eingangsmenge jene Verarbeitungs-Eingangsmenge zugewiesen, welche dem übergeordneten RTN-Baustein zugewiesen wurde. Dieser Vorgang wird bis zum innerst-verschachtelten RTN-Baustein durchgeführt, sodaß die Verarbeitungs-Eingangsmenge immer an den jeweils direkt eingesetzten RTN-Baustein an der Entscheidungsposition 70 übergeben wird.

Sofern in den eingesetzten RTN-Baustein keine weiteren RTN-Bausteine eingesetzt sind, wird nun die Verarbeitungsfunktion des eingesetzten RTN-Bausteins auf die ihm zugewiesene Verarbeitungs-Eingangsmenge angewandt und die dabei gelieferte Verarbeitungs-Ausgangsmenge des eingesetzten RTN-Bausteins wird als neue Verarbeitungs-Eingangsmenge dem übergeordneten RTN-Baustein zugewiesen und sodann die Verarbeitungsfunktion des übergeordneten RTN-Bausteins ausgeführt. Das Ergebnis dieser Anwendung wird als Verarbeitungs-Ausgangsmenge des übergeordneten RTN-Bausteins ausgegeben. Dieses Prinzip lässt somit eine beliebig oftmalige Verschachtelung von RTN-Bausteinen zu.

Fig.8 zeigt demgemäß die ineinander verschachtelten RTN-Bausteine 407, 408, 409 entsprechend

RTN-Baustein 407 (Schl.w. + Entsch.pos. 70)

RTN-Baustein 408 (Schl.w. + Entsch.pos. 70)

RTN-Baustein 409 (Schl.w.)

Verarbeitungs-Eingangsmenge 401 wird an RTN-Baustein 407 übergeben und danach dem eingesetzten RTN-Baustein 408 als dessen Verarbeitungs-Eingangsmenge 402 übergegeben, und diese wiederum ident als Verarbeitungs-Eingangsmenge 403 an den in den RTN-Baustein 408 eingesetzten RTN-Baustein 409 weitergereicht.

Im innersten Verschachtelungspunkt angelangt wird nunmehr die Verarbeitungsfunktion des RTN-Bausteins 409 auf die Verarbeitungs-Eingangsmenge 403 angewandt und das dabei erhaltene Ergebnis als Verarbeitungs-Ausgangsmenge 404 als neue Verarbeitungs-Eingangsmenge an den RTN-Baustein 408 übergeben.

Nun wird die Verarbeitungsfunktion des RTN-Bausteins 408 auf die neue Verarbeitungs-Eingangsmenge 404 angewandt, wobei das erhaltene Ergebnis als Verarbeitungs-Ausgangsmenge 405 und als neue Verarbeitungs-Eingangsmenge an den RTN-Baustein 407 übergeben wird.

Im nächsten Schritt wird die Verarbeitungsfunktion des nächsten äußeren RTN-Baustein, also des RTN-Bausteins 407 auf seine neue Verarbeitungs-Eingangsmenge 405 angewandt und das erhaltene Ergebnis in die Verarbeitungs-Ausgangsmenge 406 des RTN-Bausteins 407 gespeichert.

Eine abweichende Definition für einzelne RTN-Bausteine ist wie oben bereits erwähnt damit aber nicht ausgeschlossen.

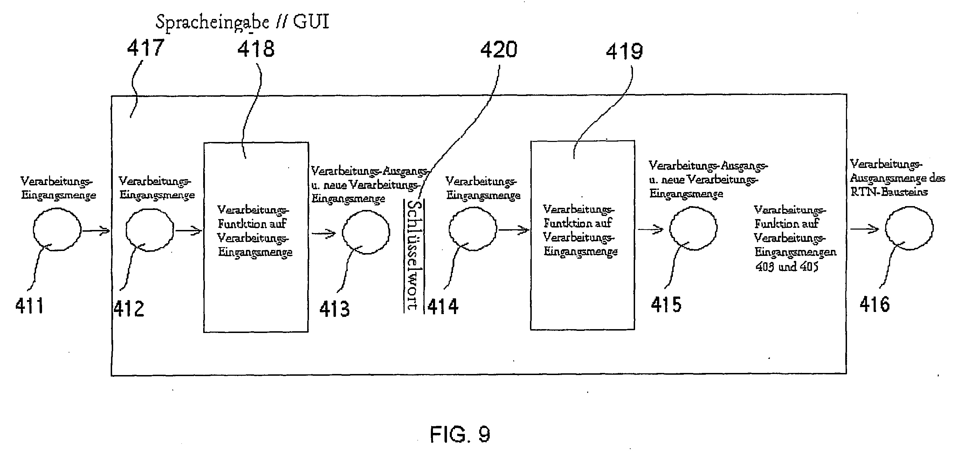

Variante 2 (Fig. 9, 15)

Für jene RTN-Bausteine der Gesamtheit der RTN-Bausteine, die gemäß der in Fig. 15 dargestellten Variante 2 definiert sind, gilt folgende Verarbeitungsmengen-Zuweisung:

Wenn jeweils zumindest ein Schlüsselwort zwischen zwei oder mehreren Entscheidungspositionen 70 in einem übergeordneten RTN-Baustein vorkommt, dann wird den unmittelbar an den Entscheidungspositionen 70 eingesetzten RTN-Bausteinen jeweils die gleiche Verarbeitungs-Eingangsmenge, nämlich die Verarbeitungs-Eingangsmenge des übergeordneten RTN-Bausteins zugewiesen, wobei sämtliche sich ergebenden Verarbeitungs-Ausgangsmengen als Verarbeitungs-Eingangsmengen der Verarbeitungsfunktion des übergeordneten RTN-Bausteins übergeben werden, es sei denn, wenn in Ausnahmefällen der äußere und/oder zumindest einer der eingesetzten RTN-Bausteine eine andere Definition verwendet.

Fig.9 zeigt die durch ein Schlüsselwort 420 verknüpften RTN-Bausteine 418 und 419, welche in einen RTN-Baustein 417 eingesetzt sind. Anwendung findet diese Variante z.B. bei arithmetischen oder logischen Verknüpfungen von RTN-Bausteinen.

RTN-Baustein 417 (Entsch.pos. 70 + Schl.w. 420 + Entsch.pos. 70)
RTN-Baustein 418                  RTN-Baustein 419

Verarbeitungs-Eingangsmenge 411 wird an einen übergeordneten RTN-Baustein 417 übergeben und danach dem eingesetzten RTN-Baustein 418 als dessen Verarbeitungs-Eingangsmenge 412 übergegeben. Die zugehörige Verarbeitungsfunktion des RTN-Bausteins 418 wird anschließend auf die Verarbeitungs-Eingangsmenge 412 angewandt und in der Verarbeitungs-Ausgangsmenge 413 gespeichert.

Der RTN-Baustein 419 bekommt ebenfalls die Verarbeitungs-Eingangsmenge 411 von seinem übergeordneten RTN-Baustein 417 als Verarbeitungs-Eingangsmenge 414 übergeben. Die zugehörige Verarbeitungsnmktion des RTN-Bausteins 419 wird anschließend auf seine Verarbeitungs-Eingangsmenge 414 angewandt und in der Verarbeitungs-Ausgangsmenge 415 gespeichert.

Im nächsten Schritt erhält der übergeordnete RTN-Baustein 417 die Verarbeitungs-Ausgangsmengen 413 und 415 als seine <u>zwei</u> neuen Verarbeitungs-Eingangsmengen zugewiesen, auf welche seine Verarbeitungsfunktion nunmehr angewandt und nachfolgend in der <u>einen</u> Verarbeitungs-Ausgangsmenge 416 gespeichert wird.

Eine abweichende Defmition für einzelne RTN-Bausteine ist wie oben bereits erwähnt damit aber nicht ausgeschlossen.

Variante 3 (Fg. 10, 16):

Für jene RTN-Bausteine der Gesamtheit der RTN-Bausteine, die gemäß der in Fig. 16 dargestellten Variante 3 definiert sind, gilt folgende Verarbeitungsmengen-Zuweisung:

Der übergeordnete RTN-Baustein weist einen Entscheidungspfad auf, der ein aufeinander folgendes, beliebig oftmaliges Erreichen der Entscheidungsposition 70 ermöglicht (siehe RTN 253 in Fig.6)

Für diesen Fall gilt, daß der in der Reihenfolge an erster Stelle eingesetzte RTN-Baustein die Verarbeitungs-Eingangsmenge des übergeordneten RTN-Bausteins übernimmt, weitere aufeinander folgende RTN-Bausteine jeweils die Verarbeitungs-Ausgangsmenge des Vorgängers als Verarbeitungs-Eingangsmenge verwenden, und der in der Reihenfolge letzte RTN-Baustein seine Verarbeitungs-Ausgangsmenge als Verarbeitungs-Eingangsmenge an den übergeordneten RTN-Baustein übergibt und dieser seine Verarbeitungsfunktion ausführt, es sei denn, wenn in Ausnahmefällen der äußere oder zumindest einer der eingesetzten RTN-Baustein eine andere Definition verwendet. Damit wird, wie bereits anderer Stelle erwähnt, gegenüber SQL eine wesentlich freiere Durchführung von Anfragen möglich.

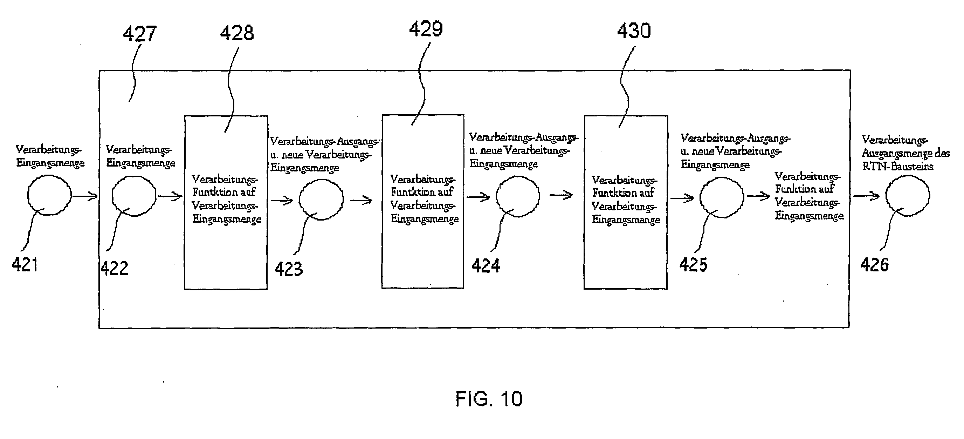

Fig.10 zeigt die in einem übergeordneten RTN-Baustein 427 aufeinander folgenden RTN-Bausteine 428, 429, 430, bei denen - mit Ausnahme des ersten und des letzten RTN-Bausteins - in der angegebenen Reihenfolge der RTN-Bausteine jeweils die Verarbeitungs-Ausgangsmenge des vorhergehenden RTN-Bausteins als Verarbeitungs-Eingangsmenge des nachfolgenden RTN-Bausteins übernommen und die dem jeweiligen RTN-Baustein zugeordnete Verarbeitungsfunktion angewandt wird.

Konkret wird eine Verarbeitungs-Eingangsmenge 421 des übergeordneten RTN-Basuteins 427 als Verarbeitungs-Eingangsmenge 422 des in der Reihenfolge ersten RTN-Bausteins 428 übergeben und dessen Verarbeitungsfunktion auf diese angewandt, woraus sich eine Verarbeitungs-Ausgangsmenge 423 ergibt. Letztere wird als Verarbeitungs-Eingangsmenge 423 des zweiten RTN-Bausteins 429 weitergegeben. In gleicher Weise geschieht dies für den nachfolgenden RTN-Baustein 430 und seine sich ergebende Verarbeitungs-Eingangsmenge 424, dessen Verarbeitungs-Ausgangsmenge 425 als neue Verarbeitungs-Eingangsmenge übernommen wird, auf welche die Verarbeitungsfunktion des übergeordneten RTN-Bausteins 427 angewandt wird, als Folge dessen eine Verarbeitungs-Ausgangsmenge 426 zurückgeliefert wird.

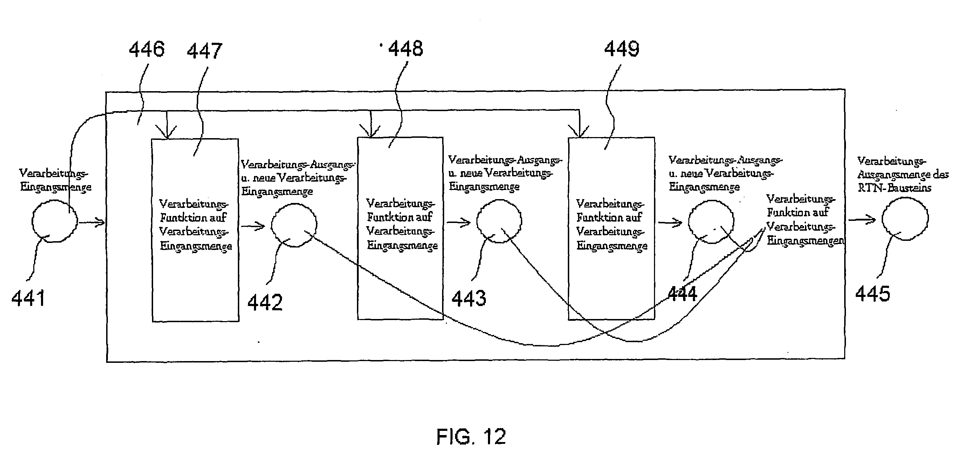

Eine sinnvolle mögliche Neu-Definition der Variante 3 ist durch einen RTN-Baustein 446 mit folgenden Mengen-Zuweisungs-Eigenschaften gegeben und wird in Fig. 12 gezeigt.

Der übergeordnete RTN-Baustein 446 weist wiederum einen Entscheidungspfad auf, der ein aufeinander folgendes, beliebig oftmaliges Erreichen der Entscheidungsposition 70 ermöglicht.

Gemäß Definition des speziellen RTN-Bausteins 446 gilt, daß allen an den Entscheidungspositionen 70 direkt eingesetzten RTN-Bausteinen 447, 448, 449 die Verarbeitungs-Eingangsmenge 441 des übergeordneten RTN-Bausteins 446 zugewiesen wird.

Als Verarbeitungs-Eingangsmenge des übergeordneten RTN-Bausteins 446 werden die Verarbeitungs-Ausgangsmengen 442, 443, 444 sämtlicher direkt eingesetzter RTN-Bausteine 447, 448, 449 herangezogen und in der Verarbeitungs-Ausgangsmenge 445 nach Anwendung der Verarbeitungsfunktion gespeichert.

Beispiele für die möglichen Verarbeitungsfünktionen dieses RTN-Bausteins 446, festgelegt z.B. durch eigene RTN-Bausteine:

1. Alle Elemente, die sich in einer bestimmten Anzahl (mindestens, genau, maximal, ...) aller Verarbeitungs-Ausgangsmengen der eingesetzten RTN-Bausteine befinden (ANY (*))
2. Alle Elemente, die sich in jeder Verarbeitungs-Ausgangsmenge der eingesetzten RTN-Bausteine befinden, bzw. in allen Verarbeitungs-Ausgangsmengen, bis auf zumindest/maximal/genau eine bestimmte Anzahl (ALL (*))

Es kann mittels eines eigenen RTN-Bausteins auch noch angegeben werden, ob Elemente, die in mehr als einer Verarbeitungs-Ausgangsmenge der eingesetzten RTN-Bausteine vorkommen, einfach oder mehrfach in die Verarbeitungs-Ausgangsmenge des übergeordneten RTN-Bausteins übernommen werden sollen.

Sind keine RTN-Bausteine als Parameter für die Verarbeitungsfunktion dieses übergeordneten RTN-Bausteins 446 angegeben, wird angenommen, daß alle Elemente, die in zumindest einer der Verarbeitungs-Ausgangsmengen 442, 443, 444 der eingesetzten RTN-Bausteine 447, 448, 449 vorkommen, ohne Duplikate ausgegeben werden sollen.

Variante 4 (Fg. 11, 13, 17):

Für jene RTN-Bausteine der Gesamtheit der RTN-Bausteine, die gemäß der in Fig. 17 dargestellten Variante 4 definiert sind, gilt folgende Verarbeitungsmengen-Zuweisung:

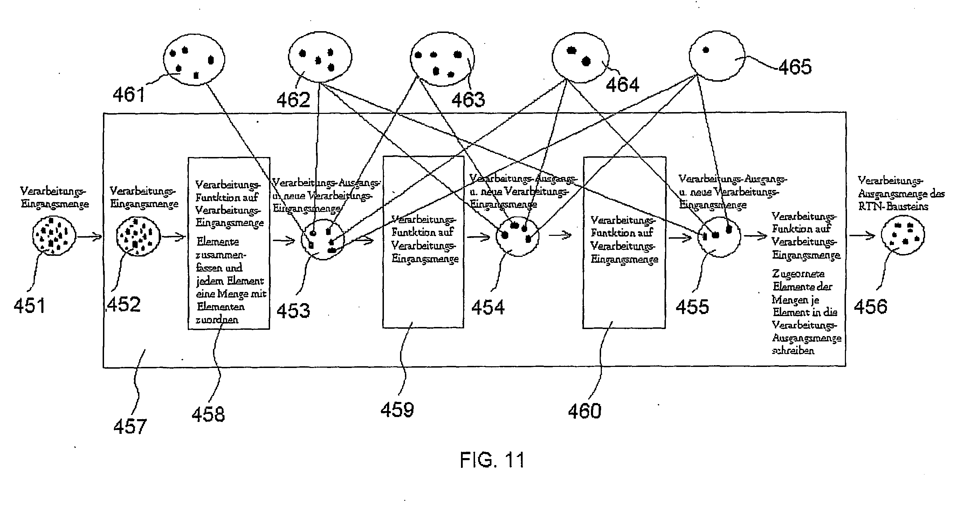

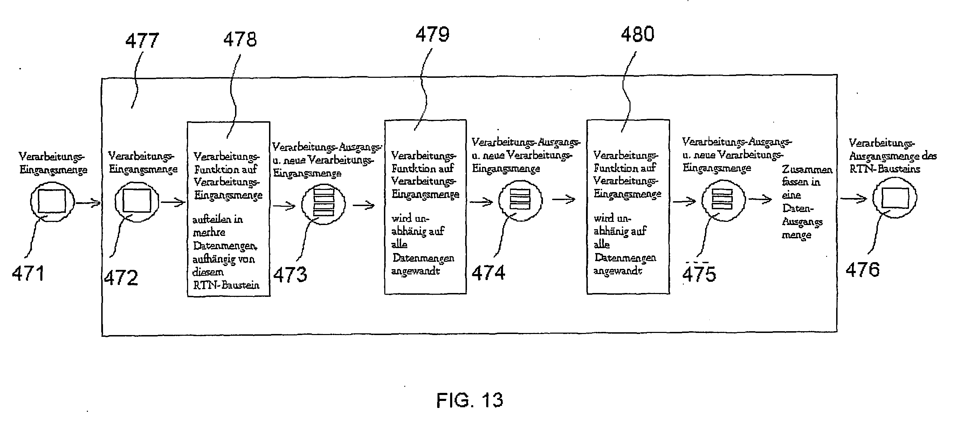

Der übergeordnete RTN-Baustein (z.B. RTN-Baustein 457 in Fig. 11 oder RTN-Baustein 477 in Fig. 13) weist einen Entscheidungspfad auf, der nach einem oder mehreren Schlüsselworten 600 eine Entscheidungsposition 70 vorschreibt, auf die beliebig viele Schlüsselworte 600 folgen können und ein aufeinander folgendes, beliebig oftmaliges Erreichen der Entscheidungsposition 70 ermöglicht (siehe RTN 253 in Fig.6), wobei dieses durch zumindest ein Schlüsselwort 600 abgeschlossen wird.

Bei RTN-Bausteinen dieser Variante gilt, daß die erste Entscheidungsposition 70 die Daten der Verarbeitungs-Eingangsmenge des übergeordneten RTN-Bausteins verwendet und anhand der Verarbeitungs-Ausgangsmenge des eingesetzten RTN-Bausteins an der Entscheidungsposition 70 die Verarbeitungsfunktion dieses RTN-Bausteins durchgeführt wird, für alle weiteren RTN-Bausteine, welche an der beliebig oft aufrufbaren Entscheidungsposition 70 eingesetzt werden, gilt für die Mengenzuweisung die für Variante 3 (Fig. 16) beschriebene Logik, wobei der erste RTN-Baustein der beliebig oft aufrufbaren Entscheidungsposition 70 die Verarbeitungs-Ausgangsmenge des RTN-Bausteins an der ersten, nicht wiederholbaren Entscheidungsposition als seine Verarbeitungs-Eingangsmenge zugewiesen bekommt. Ist das mit zumindest einem Schlüsselwort 600 gekennzeichnete Ende des übergeordneten RTN-Bausteins erreicht, kann zumindest eine weitere Verarbeitungsfunktion auf die Verarbeitungs-Ausgangsmenge des letzten RTN-Bausteins der beliebig oft aufrufbaren Entscheidungsposition 70 angewandt werden.

In Fig. 11 ist ein RTN-Baustein der Variante 4 gezeigt, welcher an der ersten Entscheidungsposition 70 des übergeordneten RTN-Bausteins 457 den RTN-Baustein 458 eingesetzt hat, welcher auf die Verarbeitungs-Eingangsmenge 452 des übergeordneten RTN-Bausteins 457 zugreift, wobei de Verarbeitungs-Eingangsmenge 452 der Verarbeitungs-Eingangsmenge 451 entspricht.

Die Verarbeitungsfunktion dieses RTN-Bausteins 457 führt eine zunächst Gruppierung je gleicher Wertemengen der Verarbeitungs-Ausgangsmenge 453 des RTN-Bausteins 458 für die Elemente der Verarbeitungs-Eingangsmenge 452 mit Verweis auf die jeweils gruppierten Elemente aus. So enthält die Verarbeitungs-Eingangsmenge 451, welche weitergegeben wird als Verarbeitungs-Eingangsmenge 452, 17 Elemente, als Ergebnis der Verarbeitungsfunktion des RTN-Bausteins 458 werden diese in der Verarbeitungs-Ausgangsmenge 453 zu fünf unterschiedlichen Elementen gruppiert, wobei jedes Element auf jeweils eine Menge mit den einzelnen Elementen, welche zusammengefasst wurden, verweist (Menge 461, 462, 463, 464, 465). Die Verarbeitungs-Ausgangsmenge 453 ist nun Verarbeitungs-Eingangsmenge für den RTN-Baustein 459. Werden durch die nachfolgenden Verarbeitungsfunktionen der eingesetzten RTN-Bausteine 459 und 460 Elemente aus der jeweiligen Verarbeitungs-Ausgangsmenge 454, 455 Elemente entfernt, so entfällt auch der Verweis auf die Mengen der zugeordneten Elemente (in Fig. 11 Menge 461 und 463). Bei Beendigung dieses RTN-Bausteinsist definiert, daß alle Elemente der zugeordneten Mengen (Mengen 462, 464, 465) der Verarbeitungs-Ausgangsmenge 465 in die Verarbeitungs-Ausgangsmenge 456 des RTN-Bausteins 457 geschrieben werden. Diese letzte Verarbeitungsfunktion wird nur ausgeführt, wenn sie über zumindest ein optionales Schlüsselwort im RTN-Baustein 457 oder durch einen nachfolgenden RTN-Baustein explizit aufgerufen wird.

In Fig. 13 ist ein RTN-Baustein der Variante 4 gezeigt, welcher an der ersten Entscheidungsposition 70 des übergeordneten RTN-Bausteins 477 den RTN-Baustein 478 eingesetzt hat, welcher auf die Verarbeitungs-Eingangsmenge 472 des übergeordneten RTN-Bausteins 477 zugreift, wobei de Verarbeitungs-Eingangsmenge 472 der Verarbeitungs-Eingangsmenge 471 entspricht.

Die Verarbeitungsfunktion dieses RTN-Bausteins 477 führt zunächst eine Gruppierung je gleicher Wertemengen der Verarbeitungs-Ausgangsmenge 473 des RTN-Bausteins 478 für die Elemente der Verarbeitungs-Eingangsmenge 472 durch, wobei jeweils gleich zu gruppierende Elemente in die gleichen, von einander unabhängigen Ausgangsdatenmengen der Verarbeitungs-Ausgangsmenge 473 geschrieben werden.

Durch Vorhandensein dieses RTN-Bausteins 477 wird angenommen, daß jede Verarbeitungs-Eingangsmenge und jede Verarbeitungs-Ausgangsmenge zumindest eine Eingangsdatenmenge bzw. zumindest eine Ausgangsdatenmenge enthält, wobei Anzahl, Inhalt und Reihenfolge innerhalb der Daten-Mengen der Verarbeitungs-Eingangsmengen und der Verarbeittmgs-Ausgangsmengen nicht ident sein müssen. Werden keine Eingangsdatenmengen bzw. keine Ausgangsdatenmengen beschrieben, so enthält jede Verarbeitungs-Eingangsmenge und jede Verarbeitungs-Ausgangsmenge genau eine Eingangs- bzw. Ausgangsdatenmenge, welche alle Elemente beinhaltet. Sämtliche Verarbeitungsfunktionen werden unabhängig voneinander auf alle Eingangsdatemnengen der Verarbeitungs-Eingangsmengen (in Fig. 13: 473, 474) der jeweiligen RTN-Bausteine (in Fig. 13: 479, 480) angewandt und entsprechend, sofern die Ausgangsdatenmengen noch Elemente beinhalten, in die Ausgangsdatenmengen der Verarbeitungs-Ausgangsmengen 474, 475 der jeweiligen RTN-Bausteine 479, 480 geschrieben. Bei Beendigung dieses RTN-Bausteins ist definiert, daß alle Ausgangsdatenmengen der Verarbeitungs-Ausgangsmenge 475 in eine gleiche Ausgangsdatenmenge der Verarbeitungs-Ausgangsmenge 476 des RTN-Bausteins 477 geschrieben werden. Diese letzte Verarbeitungsfunktion wird nur ausgeführt, wenn sie über zumindest ein optionales Schlüsselwort im RTN-Baustein 477 oder durch einen nachfolgenden RTN-Baustein explizit aufgerufen wird.

Unter Bezugnahme auf Fig. 13 ergibt sich, daß jede Verarbeitungsnmktion eines RTN-Bausteins bezieht sich auf seine Verarbeitungs-Eingangsmengen und wird jeweils unabhängig auf alle Elemente aller Eingangsdatenmengen in seiner Verarbeitungs-Eingangsmenge ausgeführt und in gleiche bzw. andere Ausgangsdatenmengen seiner Verarbeitungs-Ausgangsmenge gespeichert. Es sei denn, ein RTN-Baustein besagt eine andere Definition.

Den RTN-Bausteinen werden Verarbeitungs-Eingangsmengen zugewiesen, es können somit RTN-Bausteine vorgesehen sein, die die Zuweisung der Verarbeitungs-Eingangsmengen zu den RTN-Bausteinen im Einzelnen beschreiben.

Eine weitere mögliche Charalcterisierung der RTN-Bausteine kann folgender maßen vorgenommen werden, und wird als Beispiel dafür angegeben, daß auch hinsichtlich dieser Charakterisierung keine Einschränkung gegeben ist. Weiters werden hier Ansätze für die Abarbeitung durch eine Engine klar sichtbar.

Es muss sowohl möglich sein, Kartesische Produkte als EINE Menge anzusprechen (RTN-Baustein "FROM") als auch je Element einer ersten Menge auf jeweils eine gesamte zweite Menge zu gehen, und dadurch ebenfalls ein Kartesisches Produkt zu erreichen, wobei in diesem Fall die Werte je Element der ersten Menge in Abhängigkeit der Kriterien der zweiten Menge berechnet und geliefert werden (RTN-Baustein "EBENEN").

RTN-Baustein "FROM":

Bildet ein Kartesisches Produkt für die Ergebnismenge des an der Entscheidungsposition 70 dieses RTN-Bausteins angegebenen RTN-Bausteins und stellt sie als Verarbeitungs-Eingangsmenge für den RTN-Baustein an der ersten Entscheidungsposition 70 in seinem übergeordneten RTN-Baustein "Ebenen" zur Verfügung.

RTN-Baustein "Ebenen":

Führe je Element der Verarbeitungs-Eingangsmenge des RTN-Bausteins, in dem dieser RTN-Baustein ("Ebenen") enthalten ist, alle Verarbeitungsfunktionen jener RTN-Bausteine, die in diesem RTN-Baustein ("Ebenen") an den Entscheidungspositionen 70 nacheinander angegeben wurden, schrittweise nacheinander aus, wobei die Verarbeitungs-Eingangsmenge jedes RTN-Bausteins die Verarbeitungs-Ausgangsmenge des unmittelbar vorhergehenden RTN-Bausteins ist. Die Besonderheit dieses RTN-Baustein der Variante 3 ist, daß dieser RTN-Baustein seine Verarbeitungs-Eingangsmenge nicht als Verarbeitungs-Eingangsmenge für den ersten in ihn eingesetzten RTN-Baustein weitergibt, sondern die Verarbeitungs-Eingangsmenge für den ersten RTN-Baustein mittels eigenem RTN-Baustein (z.B. Verarbeitungs-Ausgangsmenge eines RTN-Bausteins "FROM") oder aus der Summe aller in diesem RTN-Baustein verwendeten Mengen bzw. Tabellen definiert wird.

Der in diesem RTN-Baustein "Ebenen" an der ersten Entscheidungsposition 70 eingesetzte RTN-Baustein nimmt als Verarbeitungs-Eingangsmenge jene Menge (Tabelle, gespeicherte Abfrage oder kartesisches Produkt), die in dem RTN-Baustein "Ebene" als Verarbeitungs-Eingangsmenge durch die Verarbeitungs-Ausgangsmenge eines bestimmten RTN-Bausteins (z.B. "FROM") definiert ist. Ist keine Verarbeitungs-Eingangsmenge für eingesetzte RTN-Bausteine in den RTN-Baustein "Ebenen" definiert, kann diese Verarbeitungs-Eingangsmenge ermittelt werden, und zwar über datenbankspezifische Eigenschaften, z.B. über Graphentheorie, die Tabelle der Relationen und alle angegebenen RTN-Bausteine "Tabellen" in diesem RTN-Baustein "Ebenen", unabhängig von der Schachtelung in diesem RTN-Baustein Ebenen.

Da es beim äußersten RTN-Baustein "Ebenen" keinen umgebenden RTN-Baustein gibt, in dem dieser eingesetzt und dessen Verarbeitungs-Eingangsmenge herangezogen werden könnte, wird eine abstrakte Anfangsmenge mit einem Element herangezogen, wobei das Element in abstrakter Weise alle Zahlen, Konstanten, Buchstaben und globalen Funktionen usw. enthält.

Jeder RTN-Baustein "Ebenen" stellt sich und allen in ihm verschachtelten RTN-Bausteinen das jeweils aktuelle Element mit allen Informationen (z.B. alle Tabellenfelder) seiner Verarbeitungs-Eingangsmenge, geliefert durch den übergeordneten RTN-Baustein, zur Verfügung, wobei dadurch auch der "tiefste" geschachtelte RTN-Baustein auf diese Informationen aller RTN-Bausteinen "Ebenen" Zugriff hat.

Die Verarbeitungs-Ausgangsmenge des RTN-Bausteins "Ebenen" ist die Verarbeitungs-Ausgangsmenge des letzten RTN-Bausteins, der im RTN-Baustein "Ebenen" an der letzten wiederholbaren Entscheidungsposition 70 eingesetzt ist.

RTN-Baustein "Verarbeitung-SameParents":

Dieser RTN-Baustein wurde in Fig. 12 gezeigt und oben stehend erläutert und ist in der Gruppe der "besonderen" Mengenzuweisungen angeführt, da seine Mengenzuweisung nicht der allgemeinen Beschreibung für Variante 3 entspricht.

Alle in diesem RTN-Baustein eingesetzten RTN-Bausteine bekommen als Verarbeitungs-Eingangsmenge NICHT die Verarbeitungs-Ausgangsmenge des unmittelbar vorhergehenden RTN-Bausteins zugewiesen, sondern die Verarbeitungs-Eingangsmenge des Verarbeitung-Same-Parents-Bubbles zugewiesen.

Die Verarbeitungs-Ausgangsmenge des Verarbeitung-SameParents-Bubbles sind alle Elemente aller Verarbeitmgs-Ausgangsmengen aller Bausteine, die in diesem RTN-Baustein eingesetzt wurden. Je nach zusätzlichen RTN-Bausteinen als Parameter kann die Verarbeitungs-Ausgangsmenge dieses RTN-Bausteins auch nur jene Elemente beinhalten, die in allen oder einer bestimmten (genauen, mindesten oder maximalen Anzahl) vorkommen. Es kann mittels Parameter-RTN-Bausteinen auch bestimmt werden, ob jene Elemente, die in Verarbeitungs-Ausgangsmengen mehrfach vorkommen, mehrfach in der Verarbeitungs-Ausgangsmenge dieses Bausteins mehrfach gespeichert werden oder nur einfach werden oder gar nicht enthalten sein sollen.

RTN-Baustein "Verarbeitung-PrevParents-Bubble":

Alle in diesem RTN-Baustein eingesetzten RTN-Bausteine bekommen als Verarbeitungs-Eingangsmenge die Verarbeitungs-Ausgangsmenge des unmittelbar vorhergehenden RTN-Bausteins zugewiesen, womit dieser RTN-Baustein der Mengenzuweisung gemäß Variante 3 entspricht. Dieser RTN-Baustein ermöglicht, z.B., daß in einem Verarbeitungs-SameParents-Bubble oder in anderen RTN-Bausteinen, welche nur eine Entscheidungsposition 70 erlauben, EIN RTN-Baustein die Verarbeitungs-Ausgangsmenge von mehreren aufeinander folgenden und schrittweise nacheinander durchgeführten Verarbeitungsfunktionen geliefert werden kann.

RTN-Baustein "BreakOn"

Jede Verarbeitungsfunktion wird auf alle Eingangs-Datenmengen in den Verarbeitungs-Eingangsmengen unabhängig voneinander ausgeführt. Soll einer Aufteilung in mehrere Daten-Mengen erfolgen, kann dies vermittels des RTN-Bausteins "BreakOn" erfolgen, wobei jeweils Elemente der Verarbeitungs-Eingangsmenge des RTN-Bausteins "BreakOn", die für die Verarbeitungs-Ausgangsmenge des an der ersten Enscheidungsposition 70 eingesetzten RTN-Bausteins die gleichen Werte liefern (im Falle von mehreren Elementen in dieser Verarbeitungs-Ausgangsmenge ist die Verwendung von "ALL" bzw. "ANY" sinnvoll), in die jeweils gleiche Datenmenge geschrieben werden.

Eine Zusammenführung in eine Datenmenge kann z.B. durch zumindest ein Schlüsselwort (z.B. "END" "BREAKON") nach einer beliebig oftmalig aufrufbaren Entscheidungsposition 70 im RTN-Baustein "BreakOn" festgelegt werden.

RTN-Baustein "GroupBy":

Jedem Element der Verarbeitungs-Eingangsmengen und der Verarbeitungs-Ausgangsmengen können jeweils eine Menge an Werten zugewiesen werden.

Für viele Fragestellungen ist es notwendig, nach gleichen Werten zu gruppieren, und gegebenenfalls sich für jedes gruppierte Element jene Elemente zu merken, die zu diesem Element zusammengruppiert wurden. Das wird mit dem RTN-Baustein "GroupBy" festgelegt, wobei die Möglichkeit besteht, alle Elemente der Mengen, welche je Element zugewiesen sind, in die Verarbeitungs-Ausgangsmenge des RTN-Bausteins "GroupBy" zu schreiben und die Gruppierung damit nach erfolgten Verarbeitungsfunktionen aufzuheben. Dies kann mit zumindest einem Schlüsselwort (z.B. "END GROUPBY") nach einer beliebig oftmalig aufrufbaren Entscheidungsposition 70 festgelegt werden. Wird im Statement kein derartiges Schlüsselwort angegeben, bleibt die Gruppierung ab der ersten Verwendung für alle nachfolgenden Verarbeitungsfunktionen im jeweils übergeordneten RTN-Baustein aufrecht.

RTN-Baustein "OrderBy":

Die Elemente jeder Menge sind immer in einer bestimmten Reihenfolge angeordnet, nach der Optimierung berücksichtigt nicht jede Verarbeitungsfunktion diese Reihenfolge.

Es gibt daher einen RTN-Baustein ("OrderBy"), der die Elemente aller EingangsdatenMengen seiner Verarbeitungs-Eingangsmenge unabhängig voneinander nach dem angegeben Wert bzw. der Wertemenge sortiert in die Verarbeitungs-Ausgangsmenge dieses RTN-Bausteins "OrderBy" speichert

Jede sinnvolle Mengen-Verarbeitungsfunktion bzw. Werte-Berechnungsfunktion oder auch Anzeigefunktion usw. kann mittels eines RTN-Bausteins definiert und in der Anfrage durchgeführt werden. Nachfolgend einige Beispiele für Mengen-Verarbeitungs-Funktionen:

RTN-Baustein "WHERE":

Dieser RTN-Baustein wird verwendet, um je Element der Verarbeitungs-Eingangsmenge festzulegen, daß dieses Element nur in die Verarbeitungs-Ausgangsmenge geschrieben wird, wenn der RTN-Baustein an der Entscheidungsposition 70 dieses RTN-Bausteins "WHERE" einen Wert ungleich Null liefert. Definitionen für den Fall, daß eine Menge an Werten geliefert wird, können mit den RTN-Bausteinen "ALL" bzw. "ANY" an der Entscheidungsposition 70 festgelegt werden.

RTN-Baustein "MIN" / "MAX":

Sollen aus einer Datenmenge jeweils nur jene Elemente gewählt werden, die den größten bzw. kleinsten Werten einer Berechnung je Element aus der Gesamtmenge entsprechen, so kann das über die RTN-Bausteine "MIN" bzw. "MAX" festgelegt werden. Sollen eine bestimmte Anzahl der größten bzw. kleinsten Werte geliefert werden, kann das über einen übergeordneten RTN-Baustein ("Mengenelemente"), welcher die Anzahl der Elemente der Verarbeitung-Ausgangsmenge seines an der Entscheidungsposition 70 eingesetzten RTN-Bausteins begrenzt, erfolgen.

RTN-Baustein "Mengenelemente begrenzend"

Soll aus der jeweils aktuellen Datenmenge einer Verarbeitungs-Ausgangsmenge nur eine bestimmte Anzahl an Elementen ausgehend von der aktuellen Sortierung geliefert werden, so kann dafür ein RTN-Baustein "Mengenelemente begrenzend" als übergeordneter RTN-Baustein verwendet werden. Dieser RTN-Baustein legt fest, daß genau das X-te Element ("="), alle Elemente bis zum ("<=") oder ab dem (">=") X-ten Element seiner Verarbeitungs-Eingangsmenge in seine Verarbeitungs-Ausgangsmenge übernommen wird. Es lässt sich auch eine Begrenzung auf einen bestimmten Prozentsatz in Bezug auf die Anzahl der Elemente der aktuellen Datenmenge in der Verarbeitungs-Eingangsmenge festlegen ("%").

RTN-Baustein "FIND":

Jede Verarbeitungsfunktion wird jeweils auf alle Eingangs-Datenmengen seiner Verarbeitungs-Eingangsmengen je Element ausgeführt und die Elemente der Datenmengen der Verarbeitungs-Ausgangsmenge werden als Verarbeitungs-Eingangsmenge für den übergeordneten bzw. nachfolgenden RTN-Baustein herangezogen.
Durch die Verwendung eins bestimmten RTN-Bausteins ("FIND") wird festgelegt, daß die Verarbeitungs-Ausgangsmenge dieses RTN-Bausteins "FIND" unverändert der Verarbeitungs-Eingangsmenge dieses RTN-Bausteins entspricht, mit der Besonderheit, daß jene Elemente, welche sich in der Verarbeitungs-Ausgangsmenge des im RTN-Baustein "FIND" an der Entscheidungsposition 70 eingesetzten RTN-Bausteins befinden, in der Verarbeitungs-Ausgangsmenge dieses RTN-Bausteins "FIND" in gelieferter Reihenfolge markiert werden. Nachfolgende RTN-Bausteine führen ihre Verarbeitungsfunktion nun jeweils unabhängig voneinander einzeln auf die jeweils markierten Elemente in Bezug auf die nachfolgenden (RTN-Baustein "NEXT") oder vorhergehenden (RTN-Baustein "PREV") Elemente anstatt auf die gesamte Datenmenge aus. Weiterhin werden die in den Verarbeitungsfunktionen gefundenen Elemente nur markiert.
Bei Verwendung dieses RTN-Bausteins ist eine vorherige Verwendung des RTN-Bausteins "ORDERBY" sehr sinnvoll. Soll später wieder ein Zugriff auf die gesamte Datenmenge erfolgen, kann das z.B. über eine Erweiterung im RTN-Baustein "FIND" erfolgen, welche nach einem der ersten Entscheidungsposition 70 folgenden Schlüsselwort (z.B. ":") ein beliebig oftmaliges Aufrufen der Entscheidungsposition 70 ermöglicht und danach zwingend zumindest ein Schlüsselwort vorschreibt (z.B. "END" "FIND"). Wird dieses Schlüsselwort gefunden, werden alle markierten Elemente der Verarbeitungs-Ausgangsmenge des letzten RTN-Bausteins an der beliebig oft aufrufbaren Entscheidungsposition 70 im RTN-Baustein "FIND" in die Verarbeitungs-Ausgangsmenge dieses RTN-Bausteins geschrieben und es werden keine Elemente mehr markiert, wodurch nachfolgende Verarbeitungsfunktionen wieder auf die gesamte Datenmengen zugreifen.

RTN-Bausteine "NEXT" / "PREV"

Jede Verarbeitungsfunktion wird einzeln auf jedes Element in den Verarbeitungs-Datenmengen angewandt. Dadurch wird es möglich, jeweils aktuelle Elemente mit den Werten nachfolgender ("NEXT") oder vorhergehender ("PREV") Elemente z.B. zu vergleichen und in Abhängigkeit dessen das jeweils aktuelle Element auszuwählen. Hat der RTN-Baustein "NEXT" keinen übergeordneten RTN-Baustein, dann wird von der gesamten Menge jeweils nur das X-te Element ("="), alle Elemente bis zum X-ten Element ("<=") oder alle Elemente ab dem X-ten Element (">=") als Verarbeitungs-Ausgangsmenge dieses RTN-Bausteins geliefert.

RTN-Bausteine "ANY " / "ALL"

Z.B. beim RTN-Baustein "Vergleich", welcher die Verarbeitungs-Ausgangsmengen der an den beiden Entscheidungsposition 70 eingesetzten RTN-Bausteine miteinander vergleicht, kann für jene Fälle, wo zumindest einer der eingesetzten RTN-Bausteine eine Menge an Werten zurückliefert, festgelegt werden, ob ALLE ("ALL") zurückgelieferten Werten oder zumindest EINER ("ANY") der zurückgelieferten Werte beim Vergleich zutreffen muss. Es kann bei "ANY" auch festgelegt werden, das genau ("="), zumindest (">=") oder maximal ("<=") eine bestimmte Anzahl an Elementen für den Vergleich zutreffen muss. Bei "ALL" kann gesagt werden, daß der Vergleich bis auf genau ("="), bis auf zumindest ("<=") oder bis auf maximal (">") X Elemente zutreffen muss.

RTN-Baustein "Zwischenmenge":

Soll die Verarbeitungs-Ausgangsmenge eines RTN-Bausteins für die weitere Verarbeitung mit anderen RTN-Bausteinen gespeichert werden, kann dies mittels eines übergeordneten RTN-Bausteins "Zwischenmenge" erfolgen. Dieser RTN-Baustein besagt, daß seine Verarbeitungs-Eingangsmenge temporär in die als Variablenname angegebene Menge gespeichert wird und von allen nachfolgenden RTN-Bausteinen als Verarbeitungs-Eingangsmenge verwendet werden kann.

RTN-Baustein "DO LOOP"

Es kann bei gewissen Fragestellungen gewünscht sein, daß nach jedem Element der Verarbeitungs-Eingangsmenge des RTN-Bausteins, welcher in der Entscheidungsposition 70 nach dem Schlüsselworten "DO" ":" in dem RTN-Baustein "DO LOOP" eingesetzt ist, auf welches Element die Verarbeitungsfunktion des eingesetzten RTN-Bausteins angewandt wurde, die Verarbeitungs-Ausgangsmenge des RTN-Bausteins, welches an Entscheidungsposition 70 nach dem Schlüsselwort "UNTIL" angegeben wurde, auf ungleich Null oder NULL überprüft und in Abhängigkeit dessen die Verarbeitungsfunktionen für diesen RTN-Baustein beendet werden.

Beispiel 19:

Nimm alle Firmen aus Wien, und zwar solange, bis der Umsatz2006 der gewählten Firmen insgesamt über 100.000 € beträgt.

```
SELECT
     DO:
             WHERE (Finnen.Ort="Wien")
     LOOP UNTIL
            SUM (Firmen.Umsatz2006) > 100000
```

Mittels eines RTN-Bausteins "Mengen-Element-Bildend" (",") werden die beiden Verarbeitungs-Ausgangsmengen der an den beiden Entscheidungspositionen 70 dieses RTN-Bausteins eingesetzten RTN-Bausteine zu einer gemeinsamen Verarbeitungs-Ausgangsmenge dieses RTN-Bausteins zusammengefasst.
Weitere RTN-Bausteine sind die RTN-Bausteine "Tabellen-RTN-Baustein" bzw. "Tabellenfelder-RTN-Baustein", welche die Namen aller in der aktuellen relationalen Datenbank verwendeten Tabellen und gespeicherten Abfragen bzw. Tabellen- und Abfragefelder enthält, sowie die RTN-Bausteine "Variable", "Zahl", "Konstanten" (Definieren gültigen Konstanten), "Globale Funktionen" (zum Definieren von durch den Anwender eingebettete Funktionen in einer anderen Sprache, wie z.B. "CurrentUser()"), RTN-Bausteine für Vergleiche (">", ">=", <=", "<>", "=", "BETWEEN", "IN", ...), für logische Verknüpfungen ("AND", "OR", "XOR", ...), für die logische Verneinung ("NOT"), für die Zusammenfassung von RTN-Bausteinen ("( )") für Rechenoperationen ("+", "-", "*", "/", "\", "^", "Mod", "SQR", "LIM", ...).
Eine bevorzugte Variante stellen RTN-Bausteine für Aggregatsfunktionen ("Count", "All", "None", "Sum", "AVG", "Percent", ...) dar, welche jeweils auf die Elemente der ihnen zugewiesenen Verarbeitungs-Eingangsmenge ausgeführt werden und je Eingangs-Datemenge genau einen Wert in ihrer Ausgangs-Datemenge zurückliefern.

RTN-Bausteine für die Datenmanipulation bzw. die Datenausgabe sind notwendig, sinnvollerweise können die nach dem Stand der Technik üblichen Befehle in dieser Richtung als RTN-Bausteine übernommen werden, so z.B. "SELECT", "UPDATE", "INSERT INTO" und "DELETE".

Sinnvollerweise können RTN-Bausteine, welche die in SQL verwendbaren Join-Verknüpfungen "Left-Join", "Right-Join", "Inner-Join" und "Outer-Join" definieren, eingeführt werden. Es kann RTN-Bausteine geben, welche Funktionen von OLAP, T-SQL, GEO-SQL und in anderen SQL-Erweiterungen definierte Funktionen enthalten.

Des weiteren besteht die Möglichkeit, umwandelbare RTN-Bausteine zu definieren, wie es z.B. beim RTN-Baustein "IN" der Fall ist: Wert **IN** *(1, 2, 3, 4, 5)* kann als RTN-Baustein * "IN" "(" * ")" definiert werden, * "," * ist ein eigener RTN-Baustein. Dieser RTN-Baustein IN ist ident mit *Wert = **ANY** (1, 2, 3, 4, 5)* und kann entweder in diese RTN-Bausteine umgewandelt werden oder von der Engine als solches verarbeitet werden.

Gleiches gilt für mögliche RTN-Bausteine UNION (ALL), INTERSECT, EXCLUDE, welcher entweder Mengen ohne (UNION) bzw. mit (UNION ALL) Duplikaten zusammenführen, nur Elemente nehmen, die in beiden angegeben Mengen vorhanden sind (INTERSECT) oder nur Elemente nehmen, die in keiner der beiden Mengen vorhanden sind (EXCLUDE). Diese RTN-Bausteine lassen sich in Kombination der RTN-Bausteine "ANY" / "ALL" mit gegebenenfalls dem RTN-Baustein "GroupBy" darstellen und können auch in diese RTN-Bausteine umgewandelt werden.

(1, 2, 3, 4) UNION ALL (3, 4, 5, 6) = **ANY (>=1)** (1, 2, 3, 4), (3, 4, 5, 6)
*>=1 wird als Standard genommen und muss nicht angeben werden.*

(1,2,3,4) UNION (3, 4, 5, 6) = **GROUPBY ANY (>=1)** (1, 2, 3, 4), (3, 4, 5, 6)
*kann rom Optimizer anders abgearbeitet werden*

(1, 2, 3, 4) INTERSECT (3, 4, 5, 6) = **ALL** (1, 2, 3, 4), (3, 4, 5, 6)

(1, 2, 3, 4) EXCLUDE (3, 4, 5, 6) = **ANY (=1)** (1, 2, 3, 4), (3, 4, 5, 6)

Wie zu ersehen ist, lassen sich mit ANY und ALL bei mehr als zwei Mengen viel genauere Beschreibungen darstellen, als dies mit UNION usw. möglich wäre. Eine Definition dieser RTN-Baustein kann aber aus Gründen der Kompatibilität zu SQL als auch der bequemeren Anwendbarkeit erfolgen, zumal das Vorhandensein beliebig vieler RTN-Bausteine keine Nachteile bringt.

Ebenso kann bei den RTN-Bausteinen "AND", "OR" / "XOR" verfahren werden:

Diese RTN-Bausteine lassen sich in Kombination der RTN-Bausteine "ANY" / "ALL" mit den RTN-Baustein "Verarbeitung-SameParents" darstellen und können auch in diese RTN-Bausteine umgewandelt werden.

WHERE (Firmen.Branche="Verkauf") **AND** (MAX (Firmen.[Angestellte.Count])#100) **ALL** Firmen.// WHERE (Branche="Verkauf) MAX([Angestellte.Count])#100 \\

WHERE (Firmen.Branche="Verkauf") **OR** (MAX (Firmen.[Angestellte.Count])#100) **ANY** (>=1) Firmen.// WHERE (Branche="Verkauf) MAX([Angestellte.Count])#100 \\

WHERE (Firmen.Branche="Verkauf") **XOR** (MAX (Firmen.[Angestellte.Count])#100) **ANY** (=1) Firmen.// WHERE (Branche="Verkauf) MAX([Angestellte.Count])#100 \\

**WHERE** (Firmen.Branche="Verkauf") **AND** (Firmen.[Angestellte.Count]>100) lässt sich beispielsweise auch so darstellen, da die Verarbeitungs-Ausgangsmenge des ersten äußersten RTN-Bausteins "WHERE" dem zweiten äußersten RTN-Baustein "WHERE" als Verarbeitungs-Eingangsmenge übergeben wird:

**WHERE** (Firmen.Branche="Verkauf") **WHERE** (Firmen.[Angestellte.Count]>100)

Weitere umwandelbare RTN-Bausteine sind beispielsweise der RTN-Baustein "Mengenelemente begrenzend", umwandelbar in den RTN-Baustein "FOR-NEXT", "IF-THEN-ELSE", umwandelbar in den RTN-Baustein "SELECT-CASE", der RTN-Baustein "Count", umwandelbar in die RTN-Bausteine "SUM" und "1" usw.

Eine Anfrage besteht aus einem RTN-Baustein, im konkreten dem Ebenen-RTN-Baustein, welcher eine benötigte Anzahl an RTN-Bausteinen in angegebener Reihenfolge enthält.

Defiutionsgemäß gibt es RTN-Bausteine, welche mit einer Entscheidungsposition 70 im Entscheidungsgraphen beginnen. Um bei jedem Statement die verwendeten RTN-Bausteine festzustellen, ist die Anwendung eines Umwandlungsschrittes vor Ausführung der Auswahlschritte auf das ersten Statements notwendig, um die RTN-Bausteine in zwei Gattungsgruppen zu unterteilen und sich für jeden RTN-Baustein die entsprechende Gattungsgruppe für die weitere Verarbeitung zu merken.

In einem Umwandlungsschritt vor Ausführung der Auswahlschritte wird jeder RTN-Baustein entweder einer ersten oder einer zweiten Gattungsgruppe zugeordnet wird, wobei

die RTN-Bausteine, die mit Text, Sonderzeichen, Variable oder Zahl beginnen, der ersten Gattungsgruppe zugeordnet und derart umgewandelt werden, daß die Entscheidungspositionen, die eine rekursive Aufruffunktion, deren Auswahlschritt auf alle RTN-Bausteine angewandt wird, enthalten, darauf beschränkt werden, daß der Auswahlschritt nur auf RTN-Bausteine der ersten Gattungsgruppe angewandt wird, und

die RTN-Bausteine, die mit einer rekursiven Aufruffunktion beginnen, der zweiten Gattungsgruppe zugeordnet und derart umgewandelt werden, daß die erste Entscheidungsposition entfernt wird und Entscheidungspositionen, die eine rekursive Aufruffunktion, deren Auswahlschritt auf alle RTN-Bausteine angewandt wird, enthalten, darauf beschränkt werden, daß der Auswahlschritt nur auf RTN-Bausteine der ersten Gattungsgruppe angewandt wird, und

allen RTN-Bausteine der ersten Gattungsgruppe und jene RTN-Bausteinen der zweiten Gattungsgruppe, welche mit einem Text, Sonderzeichen, Variable oder Zahl an der letzten Entscheidungsposition enden, eine optional ausführbare Entscheidungsposition an letzter Stelle angehängt wird, an welcher der Auswahlschritt nur auf RTN-Bausteine der zweiten Gattungsgruppe angewandt wird.

Zum Beispiel sei die Umwandlung für einen RTN-Baustein ohne Entscheidungsposition 70 als erste Entscheidungsposition im Entscheidungsgraphen gezeigt:

"("*")"
wird umgewandelt in
"(" *RTN-Baustein erste Gattungsgruppe* ")" [*RTN-Baustein zweiter Gattungsgruppe*]

Zum Beispiel sei die Umwandlung für einen RTN-Baustein **mit** Entscheidungsposition 70 als erste Entscheidungsposition und **mit** Entscheidungsposition 70 als letzte Entscheidungsposition im Entscheidungsgraphen gezeigt:

* ("+" | "-") *
Wird umwandelt in
("+"| "-") *RTN-Baustein erste Gattungsgruppe*

Zum Beispiel sei die Umwandlung für einen RTN-Baustein **mit** Entscheidungsposition 70 als erste Entscheidungsposition und **ohne** Entscheidungsposition 70 als letzte Entscheidungsposition im Entscheidungsgraphen gezeigt:

* "IN" "(" *")"
Wird der zweiten Gattungsgruppe zugeordnet und umgewandelt in
"IN" "(" *RTN-Baustein erste Gattungsgruppe* ")" [*RTN-Baustein zweiter Gattungsgruppe*]

Durch diesen Umwandlungsschritt wird sichergestellt, daß jedes angegebene Statement mit Algorithmen nach dem Stand der Technik in RTN-Bausteine zerlegt werden kann, also die volle Flexibilität der RTN-Bausteine bei Formulierung von Anfragen genutzt werden kann.

Nach diesem Umwandlungsschritt beginnt jeder RTN-Baustein mit zumindest einem Text, zumindest einem Sonderzeichen, einer Variable oder einer Zahl und jeder Auswahlschritt wird nunmehr entweder nur auf RTN-Bausteine der ersten Gattungsgruppe oder nur auf RTN-Bausteine der zweiten Gattungsgruppe angewandt. Des Weiteren werden nach diesem Umwandlungsschritt RTN-Bausteine der zweiten Gattungsgruppe nur an letzter Entscheidungsposition eines Entscheidungsgraphen optional aufgerufen.

Speziell durch die notwendige Umwandlung in die zwei Gattungsgruppen ergibt sich eine für die weitere Verarbeitung nicht zutreffende Schachtelung der RTN-Bausteine, da jeweils ein RTN-Baustein der ersten Gattungsgruppe, wenn im Statement vorhanden, einen RTN-Baustein der zweiten Gattungsgruppe aufruft, dieser RTN-Baustein der zweiten Gattungsgruppe aber auf jedem Fall zumindest diesem aufrufenden RTN-Baustein der ersten Gattungsgruppe übergeordnet wird.

Definitionsgemäß gibt es RTN-Bausteine, welche mit einer Entscheidungsposition 70 im Entscheidungsgraphen beginnen. Bei diesen RTN-Bausteinen kann bei Mehrfach-Verschachtelungen nicht eindeutig gesagt werden, welchen RTN-Bausteinen sie übergeordnet sind, da an einer Entscheidungsposition 70 sämtliche RTN-Bausteine der ersten oder zweiten Gattungsgruppe eingesetzt werden können und dies bei Schachtelungen von RTN-Bausteinen nicht eindeutig ist.

Beispiel 20:

Folgendes einfaches Beispiel soll dies verdeutlichen:
WHEREA+B/C
Im ersten Schritt wird die Schachtelung der RTN-Bausteine nach Anwendung der Auswahlschritte auf das Statement gezeigt.

**WHERE** *RTN-Baustein erster Gattungsgruppe [RTN-Baustein zweiter Gattungsgruppe]*

**A** *[RTN-Baustein zweiter Gattungsgruppe]*

**+** *RTN-Baustein erster Gattungsgruppe*

**B** *[RTN-Baustein zweiter Gattungsgruppe]*

**/** *RTN-Baustein erster Gattungsgruppe*

**C** *[RTN-Baustein zweiter Gattungsgruppe]*

Es ist jetzt ersichtlich, daß für den RTN-Baustein "+" an der ersten Entscheidungsposition 70 folgende zwei Einsetz-Möglichkeiten zum Entsetzen bestehen:

```
*(WHERE*)    +       *
*(A)         +       *
```

Ebenso ist gibt es für die zweite Entscheidungsposition 70 des RTN-Bausteins "+" zwei Einsetz-Möglichkeiten:

```
*       +       *(B)
*       +       *(*/*)
```

Für den RTN-Baustein "/" ergeben sich folgende drei Einsetz-Möglichkeiten für seine erste Entscheidungsposition 70:

```
* (WHERE *)    /       *
*(*+*)         /       *
*(B)           /       *
```

Für den RTN-Baustein "/" ergeben sich nur eine Einsetz-Möglichkeit für seine zweite Entscheidungsposition 70:

```
*       /       *(B)
```

Um diese einfachen sowie komplexere Fälle immer eindeutig und richtig aufzulösen, ist es notwendig, jedem RTN-Baustein eine erste und eine zweite Gewichtung zuzuweisen, wobei die Gewichtung für die einzelnen RTN-Bausteine und deren Berücksichtigung zur Ümschachtelung aller im Statement gefundenen RTN-Bausteine untereinander nach folgendem Verfahren bestimmt wird:
Jedem RTN-Baustein wird eine erste Gewichtung zugeordnet, durch welche während jedes Auswahlschrittes oder nach Anwendung alle Auswahlschritte die Verschachtelung der RTN-Bausteine in eine für die weitere Verarbeitung anwendbare Verschachtelung geändert wird, indem RTN-Bausteine mit höherer erster Gewichtung jeweils den ursprünglich übergeordneten RTN-Bausteinen übergeordnet werden, die eine vergleichsweise niedrigere erster Gewichtung aufweisen.
Die erste Gewichtung aller RTN-Bausteine der ersten Gattungsgruppe ist in Abhängigkeit von im Statement direkt übergeordneten RTN-Bausteinen der zweiten Gattungsgruppe abhängig, und die den RTN-Bausteinen der ersten Gattungsgruppe zugeordnete erste Gewichtung wird daher als Anfangs-Gewichtung bezeichnet.

Die RTN-Bausteine der ersten Gattungsgruppe weisen eine identische erste Anfangs-Gewichtung vorzugsweise mittlerer Höhe auf und diese RTN-Bausteine der ersten Gattungsgruppe nehmen bei Einsetzen in RTN-Bausteine der zweiten Gattungsgruppe deren um einen Wert, vorzugsweise eins, verminderte erste Gewichtung an.

Als Beispiel bekommt der RTN-Baustein "Tabellenfeld", wie alle anderen RTN-Bausteine der ersten Gattungsgruppe auch, eine erste Anfangs-Gewichtung 200, der RTN-Baustein "Strich-Rechen-Operationen" hat eine Gewichtung 17.

Wird geschrieben: "A" (Tabellenfeld) "+" (Strich-Rechen-Operationen) "B" (Tabellenfeld), bekommen die beiden RTN-Bausteine Tabellenfeld statt ihrer ursprünglichen ersten Anfangs-Gewichtung 200 die um 1 verminderte erste Gewichtung 17 des ihnen überzuordnenden RTN-Bausteins Strich-Rechen-Operationen zugewiesen, die beiden RTN-Bausteine Tabellenfeld erhalten also aufgrund des Statements eine Gewichtung 16 und werden beide aufgrund ihrer niedrigeren ersten Gewichtung (16) dem RTN-Baustein Strich-Rechen-Operationen (Gewichtung 16) untergeordnet.

Die erste Gewichtung für die RTN-Bausteine der zweiten Gattungsgruppe wird wie folgt bestimmt:

- Jene RTN-Bausteine der zweiten Gattungsgruppe, die ihre Verarbeitungsfunktion auf die Verarbeitungs-Ausgangsmenge einer Verarbeitungsfunktion eines RTN-Bausteins der ersten oder zweiten Gattungsgruppe ausführen, bilden eine erste Gattungsuntergruppe der zweiten Gattungsgruppe und bekommen jeweils die gleiche erste Gewichtung zugewiesen, welche nicht die höchst-mögliche Gewichtung ist, aber höher als die erste Anfangs-Gewichtung mittlerer Höhe der RTN-Bausteine der ersten Gattungsgruppe ist.

  So werden z.B. die Verarbeitungsfunktion RTN-Bausteine * "UNION" *, * "#" * und * "AS" V:Variablenname jeweils auf die Verarbeitungs-Ausgangsmenge bzw. Verarbeitungs-Ausgangsmengen der an ihren Entscheidungspositionen 70 direkt eingesetzten RTN-Bausteine erster oder zweiter Gattungsgruppe angewandt, weswegen diese RTN-Bausteine der ersten Gattungsuntergruppe der zweiten Gattungsgruppe zugeordnet werden und eine erste Gewichtung von 250 erhalten, wobei 200 die erste Gewichtung der RTN-Bausteine der ersten Gattungsgruppe ist und 255 als höchst-mögliche Gewichtung angenommen wird.

  Dadurch wird sichergestellt, daß diese RTN-Bausteine der ersten Gattungsuntergruppe der zweiten Gattungsgruppe immer den RTN-Bausteinen der ersten und zweiten Gattungsgruppe übergeordnet werden, und daher definitionsgemäß deren Verarbeitungs-Ausgangsmenge als ihre Verarbeitungs-Eingangsmenge zugewiesen bekommen.

  Jene RTN-Bausteine der zweiten Gattungsgruppe, deren Verarbeitungs-Ausgangsmenge als Verarbeitungs-Eingangsmenge für andere RTN-Bausteine der ersten oder zweiten Gattungsgruppe herangezogen werden, bilden eine zweite Gattungsuntergruppe der zweiten Gattungsgruppe und bekommen eine jeweils unterschiedliche erste Gewichtung zugewiesen, welche in jedem Fall kleiner als die erste Anfangs-Gewichtung mittlerer Höhe der RTN-Bausteine der ersten Gattungsgruppe ist, und diese erste Gewichtung für die betroffenen RTN-Bausteine im einzelnen die vorbestimmbare Reihenfolge der Abarbeitung in Bezug auf die RTN-Bausteine der zweiten Gattungsuntergruppe der zweiten Gattungsgruppe beschreibt, indem jeweils zuerst auszuführende RTN-Bausteine dieser Gruppe eine geringere erste Gewichtung erhalten.

  So bekommt z.B. der RTN-Baustein "Punkt-Rechen-Operationen" eine erste Gewichtung 14, der RTN-Baustein "Strich-Rechen-Operationen" eine höhere erste Gewichtung 17, der RTN-Baustein "Vergleich" eine erste Gewichtung 50 und der RTN-Baustein "Bool-Kombi" eine erste Gewichtung 100.

  Dies ersieht man aus der gewünschten Schachtelung von: A + B * C > D AND E = F Alle hier angegebenen ersten Gewichtungen sind kleiner als die erst Anfangs-Gewichtung 200 der RTN-Bausteine der ersten Gattungsgruppe.

Um falsche Verschachtelungen bei jenen RTN-Bausteinen erster und zweiter Gattungsgruppe, welchen nach einer Entscheidungsposition 70 eine weitere Entscheidungsposition vor der nach dem Umwandlungsschritt als optional angefügten letzten Entscheidungsposition 70 zumindest eine weitere Entscheidungsposition folgt, auszuschließen, ist die Vergabe einer zweiten Gewichtung maximaler Höhe für genau diese RTN-Bausteine notwendig. Konkrete falsche Verschachtelungen würden sich ansonsten genau dann ergeben, wenn in diesen RTN-Bausteinen an einer nicht letzten Entscheidungsposition 70 zumindest ein RTN-Baustein der ersten Gattungsuntergruppe der zweiten Gattungsgruppe eingesetzt wird, also ein RTN-Baustein, welcher eine höhere Gewichtung als die mittlere Gewichtungshöhe der RTN-Bausteine der ersten Gattungsgruppe aufweist. Diese RTN-Bausteine dürfen trotz ihrer höheren ersten Gewichtung genau solange nicht über RTN-Bausteine mit maximaler zweiter Gewichtung übergeschachtelt werden, bis diese RTN-Bausteine mit maximaler zweiter Gewichtung im Entscheidungspfad an der nach dem Umwandlungsschritt letzten, als optional eingefügten Entscheidungsposition 70 angelangt sind.

Deswegen gilt, daß alle RTN-Bausteine der ersten und zweiten Gattungsgruppe, welche nach einer Entscheidungsposition 70, welche das Einsetzen zumindest eines RTN-Bausteins aus ersten Gattungsgruppe vorschreibt, zumindest eine weitere Entscheidungsposition unabhängig von der nach dem Umwandlungsschritt gegebenenfalls vorhanden letzten optionalen Entscheidungsposition 70, welche das Einsetzen eines RTN-Bausteins aus der zweiten Gattungsgruppe vorschreibt, folgt, eine zweite, fixe Gewichtung mit höchst-möglicher Gewichtungs-Höhe zugewiesen wird.

Ein Beispiel für einen RTN-Baustein der ersten Gattungsgruppe, der definitionsgemäß keine zweite Gewichtung maximaler Höhe zugewiesen bekommt, ist der RTN-Baustein "WHERE":

"WHERE" * nach Umwandlungsschritt:
"WHERE" *RTN-Baustein erster Gattungsgruppe [RTN-Bautein zweiter Gattungsgruppe]*

Bei diesem RTN-Baustein folgt, außer der durch den Umwandlungsschritt angefügten letzten optionalen Entscheidungsposition 70 keine weitere Entscheidungsposition nach der ersten Entscheidungsposition 70, die zweite Gewichtung für diesen RTN-Baustein kann daher z.B. den Wert der ersten Gewichtung dieses RTN-Bausteins erhalten.

Zwei Beispiele für RTN-Bausteine, der ersten Gattungsgruppe, die definitionsgemäß eine zweite Gewichtung maximaler Höhe zugewiesen bekommen, sind der RTN-Baustein "RTN-Baustein-Zusammenfassend" (Klammer) und der RTN-Baustein "For-Next":

"(" * ")" nach Umwandlungsschritt:
"(" *RTN-Baustein erster Gattungsgruppe"*)" *[RTN-Baustein zweiter Gattungsgruppe]*

"FOR" * ":"*"NEXT" nach Umwandlungsschritt:
"FOR" *RTN-Baustein erster Gattungsgruppe":" RTN-Baustein erster Gattungsgruppe*
"NEXT" *[RTN-Baustein zweiten Gattungsgruppe]*

Bei diesen RTN-Bausteinen folgt jeweils zusätzlich zu der durch den Umwandlungsschritt angefügten letzten optionalen Entscheidungsposition 70 jeweils zumindest eine Entscheidungsposition nach der jeweils ersten Entscheidungsposition 70, die zweite Gewichtung für diese RTN-Bausteine entspricht daher der höchst-möglichen Gewichtungs-Höhe, im konkreten 255.

Gleiches gilt für die RTN-Bausteine der zweiten Gattungsgruppe, beispielsweise wird dies gezeigt für den RTN-Baustein "Strich-Rechen-Operationen" und für den RTN-Baustein "Vergleich-IN":

*("+"|"-") * nach Umwandlungsschritt:
("+"|"-") *RTN-Baustein erster Gattungsgruppe*

Bei diesem RTN-Baustein folgt, nach Umwandlungsschritt keine weitere Entscheidungsposition nach der einzigen Entscheidungsposition 70, die zweite Gewichtung für diesen RTN-Baustein kann daher z.B. den Wert der ersten Gewichtung dieses RTN-Bausteins erhalten.

* "IN" "(" * ")" nach Umwandlungsschritt:
"IN" *RTN-Baustein erster Gattungsgruppe [RTN-Baustein zweiter Gattungsgruppe]*

Bei diesen RTN-Bausteinen folgt zusätzlich zu der durch den Umwandlungsschritt angefügten letzten optionalen Entscheidungsposition 70 eine Entscheidungsposition nach der ersten Entscheidungsposition 70, die zweite Gewichtung für diesen RTN-Baustein entspricht daher der höchst-möglichen Gewichtungs-Höhe, im konkreten 255.

Für die Bestimmung der für die weitere Verarbeitung notwendigen Schachtelung eines jeden RTN-Bausteins in Bezug auf die jeweils im Statement ihm durch die Anwendung der Auswahlschritte nach dem Umwandlungsschritt übergeordneten RTN-Bausteine gilt daher, daß die erste Gewichtung jedes RTN-Bausteins der zweiten Gattungsgruppe in der durch das Anfragestatement nach dem Umwandlungsschritt sich ergebenden Schachtelungsreihenfolge solange mit der ersten Gewichtung der jeweils übergeordneten RTN-Bausteine verglichen wird, bis derjenige RTN-Baustein mit einer höheren ersten Gewichtung oder der jeweils übergeordnete RTN-Baustein sich nicht an seiner letzten Entscheidungsposition befindet und eine zweite Gewichtung höchst-möglicher Gewichtungs-Höhe aufweist, erreicht wird und entsprechend dieser festgestellten Schachtelungsreihenfolge der dem Vergleich zugrunde liegende RTN-Baustein dem erreichten RTN-Baustein direkt untergeordnet und allen mittels der Vergleiche übersprungen vorher übergeordneten RTN-Bausteine somit übergeordnet wird.

Folgendes Beispiel soll dies verdeutlichen:

Beispiel 21:

```
IF A THEN WHERE B=C # 5 ELSE WHERE D=E #10 END IF # 20
```

Die für die weitere Verarbeitung gültige Schachtelung in diesem Beispiel 21 schaut folgendermaßen aus:

| | |
|---|---|
| *(1.1) # *(1.2) | erste Gew. 250, zweite Gew. 250 |
| (=1.1) IF *(2.1) THEN *(2.2) ELSE *(2.3) END IF | erste Gew. 200, zweite Gew. 255 |
| (=2.1) A | erste Gew. 200, zweite Gew. 1 |
| (=2.2) *(3.1) # *(3.2) | erste Gew. 200, zweite Gew. 200 |
| (=3.1) *(4.1) = *(4.2) | erste Gew. 50, zweite Gew. 50 |
| (=4.1) B | erste Gew. 49 (Anfang 200), zweite Gew. 1 |
| (=4.2) C | erste Gew. 49 (Anfang 200), zweite Gew. 1 |
| (=3.2) 5 | erste Gew. 249(Anfang 200), zweite Gew. 1 |
| (=2.3) *(5.1) # *(5.2) | erste Gew. 250, zweite Gew. 250 |
| (=5.1) *(6.1) = *(6.2) | erste Gew. 50, zweite Gew. 50 |
| (=6.1) D | erste Gew. 49 (Anfang 200), zweite Gew. 1 |
| (=6.2) E | erste Gew. 49 (Anfang 200), zweite Gew. 1 |
| (=5.2) 10 | erste Gew. 249(Anfang 200), zweite Gew. 1 |
| (=1.2) 20 | erste Gew. 249(Anfang 200), zweite Gew. 1 |

wobei

| | |
|---|---|
| erste Gew | Erste Gewichtung |
| zweite Gew | Zweite Gewichtung |
| Anfang | Anfangsgewichtung der RTN-Bausteine der ersten Gattungsgruppe, angegeben, sofern diese geändert durch Einsetzen in einen RTN-Baustein der zweiten Gattungsgruppe geändert wird. |

Hier ist zu ersehen, daß der RTN-Baustein "#" mit seiner ersten Gewichtung 250 dem RTN-Baustein "IF-THEN-ELSE-END IF" mit seiner ersten Gewichtung 200 und seiner zweiten Gewichtung 255 erst dann übergeordnet wird, nachdem dieser seine letzte Entscheidungsposition erreicht hat.

Für die Vollständigkeit der Beschreibung dieses Beispiels 21 sei hier noch einmal die Schachtelung gezeigt, die sich in diesem Beispiel durch die Anwendung der Auswahlschritte nach dem Umwandlungsschritt ergibt:

```
IF                                    Aufruf : RTN-Baustein erster Gattungsgruppe

    A

THEN                                  Aufruf : RTN-Baustein erster Gattungsgruppe

    WHERE                             Aufruf : RTN-Baustein erster Gattungsgruppe

        B                             Aufruf : RTN-Baustein zweiter Gattungsgruppe

            =                         Aufruf : RTN-Baustein erster Gattungsgruppe

                C                     Aufruf : RTN-Baustein zweiter Gattungsgruppe

                    #                 Aufruf : RTN-Baustein erster Gattungsgruppe


ELSE                                  Aufruf : RTN-Baustein erster Gattungsgruppe

    WHERE                             Aufruf : RTN-Baustein erster Gattungsgruppe

        D                             Aufruf : RTN-Baustein zweiter Gattungsgruppe

            =                         Aufruf : RTN-Baustein erster Gattungsgruppe

                E                     Aufruf : RTN-Baustein zweiter Gattungsgruppe

                    #                 Aufruf : RTN-Baustein erster Gattungsgruppe

                        10

END

IF                                    Aufruf: RTN-Baustein zweiter Gattungsgruppe

    #                                 Aufruf : RTN-Baustein erster Gattungsgruppe

            20
```

RTN-Bausteine der ersten Gattungsgruppe werden, unabhängig von ihrer eigenen und unabhängig von der ersten Gewichtung der ihnen übergeordneten RTN-Bausteine dem ihnen direkt übergeordneten RTN-Baustein erster oder zweiter Gattungsgruppe untergeordnet.

Beispiel 22:

```
WHERE A + MIN B
```

Dieses Beispiel 22 wird wie folgt verschachtelt:

WHERE * *(1.1)*                       erste Gew. 200, zweite Gew. 200

    *(=1.1)* *(2.1)* + *(2.2)*             erste Gew. 50, zweite Gew. 50

        *(=2.1)* A                   erste Gew. 49 (Anfang 200), zweite Gew. 1

        *(=2.2)* MIN *(3.1)*         erste Gew. 49 (Anfang 200), zweite Gew. 200

           *(=3.1)* B               erste 200, zweite Gew. 1

Wie in diesem Beispiel 22 zu sehen ist, wird der RTN-Baustein "B" als RTN-Baustein der ersten Gattungsgruppe trotz seiner höheren ersten Gewichtung 200 im Vergleich zu dem ihm übergeordneten RTN-Baustein "MIN" mit seiner durch seinen übergeordneten RTN-Baustein der zweiten Gattungsgruppe "+" veränderten ersten Gewichtung 49 untergeordnet.

Wird bei Vergleich der ersten Gewichtung von RTN-Bausteinen der zweiten Gattungsgruppe ein übergeordneter RTN-Baustein mit gleicher erster Gewichtung angetroffen, so wird je nach Gattungsuntergruppe anders verfahren:

Für den Fall des Vorliegens gleicher erster Gewichtung des zu vergleichenden RTN-Bausteins zweiter Gattungsgruppe mit einem der übergeordneten RTN-Bausteine ebenfalls zweiter Gattungsuntergruppe wird der zu vergleichende RTN-Baustein diesem RTN-Baustein genau dann direkt untergeordnet wird, wenn es sich bei diesen RTN-Bausteinen um RTN-Bausteine der zweiten Gattungsuntergruppe der zweiten Gattungsgruppe handelt.

Folgendes Beispiel soll dies verdeutlichen:

Beispiel 23:

WHERE A MOD B / C \ D

WHERE * *(1.1)*                     erste Gew. 200, zweite Gew. 200

    *(=1.1)* *(2.1)* MOD *(2.2)*        erste Gew. 14, zweite Gew. 14

        *(=2.1)* A                   erste Gew. 13 (Anfang 200), zweite Gew. 1

        *(=2.2)* *(3.1)* / *(3.2)*       erste Gew. 14, zweite Gew. 14

           *(=3.1)* B             erste Gew. 13 (Anfang 200), zweite Gew. 1

           *(=3.2)* *(4.1)* \ *(4.2)*    erste Gew. 14, zweite Gew. 14

              *(=4.1)* C        erste Gew. 13 (Anfang 200), zweite Gew. 1

              *(=4.2)* D        erste Gew. 13 (Anfang 200), zweite Gew. 1

In diesem Beispiel 23 treffen beim Vergleich der ersten Gewichtung zweimal RTN-Bausteine der zweiten Gattungsuntergruppe der zweiten Gattungsgruppe aufeinander ("/" trifft auf MOD", "\" trifft auf "/"). Aufgrund der Zuordnung zur zweiten Gattungsuntergruppe der zweiten Gattungsgruppe werden diese RTN-Bausteine jeweils untergeordnet, da definiert wird, daß die Verarbeitungs-Ausgangsmenge der untergeordneten RTN-Bausteine als Verarbeitungs-Eingangsmenge der jeweils übergeordneten RTN-Bausteine herangezogen wird. Durch die die Verwendung eines RTN-Baustein "RTN-Bausteine-Zusammenfassend", also durch das Setzten von Klammern, kann eine andere erste und zweite Gewichtung und dadurch eine andere Berechnungsreihenfolge erzielt werden.

Für den Fall des Vorliegens gleicher erster Gewichtung des zu vergleichenden RTN-Bausteins zweiter Gattungsgruppe mit einem der übergeordneten RTN-Bausteine ebenfalls zweiter Gattungsuntergruppe wird genau dann weiter mit den übergeordneten RTN-Bausteinen verglichen, wenn es sich bei den RTN-Bausteinen um RTN-Bausteine der ersten Gattungsuntergruppe der zweiten Gattungsgruppe handelt.

Folgendes Beispiel soll dies verdeutlichen:

Beispiel 24:

Nimm alle Elemente, für die A zutrifft, von dieser Menge nimm die ersten 100, speichere diese 100 Elemente in der Zwischenmengel und nimm aus dieser Zwischenmengel die ersten 50 Elemente.

WHERE A # 100 AS Zwischenmenge # 50

$*_{(1.1)}$ # $*_{(1.2)}$          erste Gew. 250, zweite Gew. 250

    $_{(=1.1)}$ $*_{(2.1)}$ AS Zwischenmenge      erste Gew. 250, zweite Gew. 250

        $_{(=2.1)}$ $*_{(3.1)}$ # $*_{(3.2)}$      erste Gew. 250, zweite Gew. 250

           $_{(=3.1)}$ WHERE $*_{(4.1)}$      erste Gew. 249(Anfang 200), zweite Gew. 200

                $_{(=4.1)}$ A      erste Gew. 200, zweite Gew. 1

           $_{(=3.2)}$ 100      erste Gew. 249(Anfang 200), zweite Gew. 1

    $_{(=1.2)}$ 50      erste Gew. 249(Anfang 200), zweite Gew. 1

In diesem Beispiel 24 treffen beim Vergleich der ersten Gewichtung zweimal RTN-Bausteine der ersten Gattungsuntergruppe der zweiten Gattungsgruppe aufeinander ("AS" trifft auf "#", "#" trifft auf "AS"). Aufgrund der Zuordnung zur ersten Gattungsuntergruppe der zweiten Gattungsgruppe werden diese RTN-Bausteine jeweils vorgereiht, da definiert wird, daß die Verarbeitungs-Ausgangsmenge der untergeordneten RTN-Bausteine als Verarbeitungs-Eingangsmenge der jeweils übergeordneten RTN-Bausteine herangezogen wird.

Wichtig ist, daß RTN-Bausteine, welche direkt in eine Entscheidungsposition 70 eines RTN-Bausteins mit höchst-möglicher zweiter Gewichtung eingesetzt werden, nur dann RTN-Bausteinen der zweiten Gattungsgruppe untergeordnet werden, wenn es für den jeweiligen RTN-Baustein erwünscht ist. Dies erfolgt verfahrensmäßig dadurch, daß jenen RTN-Bausteinen der ersten Gattungruppe, für die vorbestimmt wird, daß sie den RTN-Bausteine der zweiten Gattungsgruppe dann untergeordnet werden, wenn diese RTN-Bausteine der ersten Gattungsgruppe direkt in eine der Entscheidungsposition, an welcher einer aus der Gesamtheit der RTN-Bauteine einsetzbar ist, eines RTN-Bausteins, welcher eine zweite höchst-möglichen Gewichtungs-Höhe aufweist, eingesetzt werden, eine zweite Gewichtung minimaler Gewichtungshöhe zugewiesen wird, und jene RTN-Bausteine der ersten Gattungsgruppe, welche keine zweite Gewichtung minimaler Höhe aufweisen, in diesen Fällen keinen RTN-Bausteinen der zweiten Gattungsgruppe untergeordnet werden.

Zwei Beispiele sollen die Schachtelung für diese beiden möglichen Fälle zeigen, der nach dem oben beschriebenen Verfahren zu folgendem Ergebnis führt:

Beispiel 25:

1. Möglicher Fall: An der Entscheidungsposition 70 des übergeordneten RTN-Bausteins mit zweiter Gewichtung höchst-möglicher Gewichtungshöhe wird ein RTN-Baustein der ersten Gattungsgruppe mit einer zweiten Gewichtung ungleich der Gewichtung minimaler Gewichtungshöhe eingesetzt, im Beispiel das Schlüsselwort "WHERE":

[ WHERE MAX A + B / C = D ]

Die für die weitere Verarbeitung gültige Verschachtelung in diesem Beispiel 25 schaut folgendermaßen aus:

[ *(1.1) ]                                              erste Gew. 200, zweite Gew. 255

  (=1.1) WHERE *(2.1)                             erste Gew. 200, zweite Gew. 200


   (2.1) *(3.1) = *(3.2)                         erste Gew. 50, zweite Gew. 50

    (=3.1) MAX *(4.1)                      erste Gew. 49(Anfang 200), zweite Gew. 200

     (=4.1) *(5.1) + *(5.2)            erste Gew. 17, zweite Gew. 17

      (=5.1) A                   erste Gew. 16(Anfang 200), zweite Gew. 1

      (=5.2) *(6.1) / *(6.2)       erste Gew 14. , zweite Gew. 14

       (=6.2) B             erste Gew. 13 (Anfang 200), zweite Gew. 1

       (=6.3) C             erste Gew. 13 (Anfang 200), zweite Gew. 1

    (=3.2) D                           erste Gew. 49, zweite Gew. 200


Der RTN-Baustein "MAX" wird deswegen dem RTN-Baustein mit dem Schlüsselwort "/" untergeordnet, da sein übergeordneter RTN-Baustein "WHERE" keine Gewichtung höchst-möglicher Gewichtungshöhe aufweist.
Der RTN-Baustein "WHERE" sollte nach der globalen Definition dem RTN-Baustein mit dem Schlüsselwort "=" untergeordnet werden, in diesem Fall geschieht dies aber nicht, da sein übergeordneter RTN-Baustein "Ebenen" ("[]") die zweite höchst-mögliche Gewichtungshöhe aufweist, der RTN-Baustein "WHERE" aber nicht die zweite Gewichtung minimaler Gewichtungshöhe aufweist.
Soll eine andere Schachtelung der RTN-Bausteine erfolgen, kann dies durch die Verwendung des RTN-Bausteins "RTN-Baustein-Zusammenfassend" ("( )") geschehen, z.B.
WHERE (MAX (A + B / C) = D), gleichwertig mit MAX A + B / C

Beispiel 26:

2. Möglicher Fall: An der Entscheidungsposition 70 des übergeordneten RTN-Bausteins mit zweiter Gewichtung höchst-möglicher Gewichtungshöhe wird ein RTN-Baustein der ersten Gattungsgruppe mit einer zweiten Gewichtung minimaler der Gewichtung eingesetzt, im Beispiel das Schlüsselwort "A":


[ A + B ]


[ *(1.1) ]                                              erste Gew. 200, zweite Gew. 255

  (=1.1) *(2.1) + *(2.2)                        erste Gew. 17, zweite Gew. 17


   (=2.1) A                              erste Gew. 16 (Anfang 200), zweite Gew. 1

   (=2.2) B                              erste Gew. 16 (Anfang 200), zweite Gew. 1


In diesem Beispiel 26 ist zu ersehen, daß der RTN-Baustein "Strich-Rechen-Operationen" dem RTN-Baustein "TabellenFeld" (A) übergeordnet wird, da der RTN-Baustein "A" direkt in die Entscheidungsposition 70 des RTN-Bausteins "Ebenen" eingesetzt ist, der RTN-Baustein A eine zweite Gewichtung minimaler Gewichtungshöhe aufweist und der direkt übergeordnete RTN-Bausteinen "Ebenen" eine zweite Gewichtung höchst-möglicher Gewichtungshöhe aufweist.

Eine weitere Ausführungsform der Erfindung liegt in jenem Fällen vor, wo laut Statement RTN-Bausteinen der zweiten Gattungsgruppe, denen nach dem Umwandlungsschritt eine optionale Entscheidungsposition, welche auf einen RTN-Baustein aus der zweiten Gattungsgruppe vorschreibt, an genau dieser optionalen Entscheidungsposition ein RTN-Baustein der zweiten Gattungsgruppe eingesetzt wird.

In diesen Fällen wird der an dieser letzten Entscheidungsposition eingesetzte RTN-Baustein immer und unabhängig von den ersten und zweiten Gewichtungen der beiden betroffenen RTN-Bausteine dem vormals übergeordneten RTN-Baustein übergeordnet.

Um dies zu verdeutlichen, dient folgendes Beispiel, welches besagt, daß der Wert des Feldes A in der Variable "Zwischenmenge" gespeichert werden soll, zu dieser Variable "Zwischenmenge" der Wert des Feldes B addiert werden soll und danach geprüft wird, ob dieser Wert dem Wert C entspricht und das Ergebnis dieses Vergleiches wiederum in der Variable "ErgebnisIN" gespeichert werden soll.

A AS Zwischenmenge + B IN ( C ) AS ErgebnisIN

Hier wird der RTN-Baustein mit dem Schlüsselwort "+" trotz seiner niedrigeren ersten Gewichtung 17 dem RTN-Baustein mit dem Schlüsselwort "AS" mit der ersten Gewichtung 250 übergeordnet. Gleiches geschieht in Bezug auf die RTN-Bausteine mit den Schlüsselworten "IN" und "AS", wobei hier die erste Gewichtung des überzuordnenden RTN-Bausteins mit dem Schlüsselwort "AS" unabhängiger weise höher (250) ist als die erste Gewichtung (60) des RTN-Bausteins mit dem Schlüsselwort "IN"

In Übereinstimmung mit den RTN-Bausteinen lassen sich auch RTN-Baustein-Gruppen als Statements oder Teile von Statements definieren, welche z.B. ausschließlich Verarbeitungsfunktionen arithmetischer oder logischer Art beinhalten. Für diese Fälle wird vereinbart, daß allen RTN-Bausteinen der ersten und zweiten Gattungsgruppe zumindest ein RTN-Baustein zugeordnet werden kann, welche(r) überzuordnen ist bzw. sind, wenn diese RTN-Bausteine der ersten und zweiten Gattungsgruppe direkt in einer Entscheidungsposition, an welcher einer aus der Gesamtheit der RTN-Bausteine einsetzbar ist, eines RTN-Bausteins mit höchst-möglicher zweiter Gewichtung eingesetzt werden.

Auszugsweise enthalten folgende RTN-Bausteine, sofern sie direkt in eine Entscheidungsposition 70 eines RTN-Bausteins mit zweiter Gewichtung höchst-möglicher Gewichtungshöhe eingesetzt werden, unten angeführte Zuordnungen:

RTN-Baustein "Tabellenfeld": diesem RTN-Baustein kann ein "SELECT"-RTN-Baustein vorangestellt werden, sowie der RTN-Baustein "Tabelle", der den Namen der Tabelle, in der dieses Feld zu finden ist, enthält, sowie ein RTN-Baustein "Werte-Verkettung", um die beiden RTN-Bausteine "Tabelle" und "Tabellenfeld" miteinander in Bezug zu setzen.

Beispiel 27:

```
[ TABELLENFELDNAME ]           nach Anf─gung:
[ SELECT TABELLENNAME . TABELLENFELDNAME ]
```

RTN-Baustein "Tabelle": diesem RTN-Baustein kann ein "SELECT"-RTN-Baustein für Ausgabe alle Tabellenfelder vorangestellt werden

Beispiel 28:

```
[ TABELLENNAME ]           nach Anf─gung:
[ SELECT TABELLENNAME. * ]
```

RTN-Bausteine, welche Rechen- oder Vergleichsoperationen ausführen: diesen RTN-Bausteinen kann ein "WHERE"-RTN-Baustein vorangestellt werden, und, falls auf nicht vorhanden, ein "SELECT"-RTN-Baustein, welcher beispielsweise alle Felder aller verwendeten Tabellen ausgibt, mit jeweils benötigten RTN-Bausteinen "Mengen-Element-Bildend" und "Werte-Verkettung".

Beispiel 29:

```
[ A + B ]              nach Anf=gung:
 [ SELECT TABELLENNAME.A, TABELLENNAME.B
  WHERE TABELLENNAME.A + TABELLENNAME.B ]
```

Tabelle 1 und Tabelle 2 enthalten eine Auflistung möglicher RTN-Bausteine mit jeweils erster und zweiter Gewichtung und den Entscheidungsgraphen der RTN-Bausteine, wobei bei Durchlaufen der Entscheidungsgraphen der RTN-Bausteine an den Entscheidungspositionen die Schlüsselworte des Anfragestatements in Abhängigkeit von einem zugehörigen Kennzeichen entweder mit einem Text, einem Sonderzeichen, einer Variable, einer Zahl verglichen oder ein RTN-Baustein aus der Gesamtheit der RTN-Bausteine eingesetzt wird, welcher seinerseits wieder durchlaufen wird.

Dadurch, daß an jeder Entscheidungsposition 70 immer aus der Gesamtheit der RTN-Bausteine ausgewählt werden kann, werden im Vergleich zu einer beschränkten Auswahlmöglichkeit an den Entscheidungspositionen mehr Freiheitsgrade in der Formulierung von Anfragestatements möglich.

Als Beispiel sei hier der RTN-Baustein "NEXT" gezeigt, welcher aus seiner Verarbeitungs-Eingangsmenge je aktuellem Element die an der Entscheidungsposition 70 angegebenen nächsten Elemente in seiner Verarbeitungs-Ausgangsmenge zurückliefert.

Würde hier anstatt der Entscheidungsposition 70 beispielsweise nur eine Zahl erlaubt werden, könnte nur die Anzahl der nächsten zu liefernden Elemente je aktuellen Element bestimmt werden, durch die Entscheidungsposition 70 könnten mittels des RTN-Bausteins "Mengenelemente-Begrenzend", an dessen erster Entscheidungsposition 70 wiederum der RTN-Baustein "WHERE" eingesetzt ist, jene dem jeweils aktuellen Eleinent folgenden Elemente geliefert werden, die in der Verarbeitungs-Ausgangsmenge der RTN-Bausteins "Mengenelement-Begrenzend" stehen. Analog gilt dies für alle RTN-Bausteine, z.B. könnte mit dem RTN-Baustein "MAX" genau jenes nachfolgende Element mit dem größten, in Entscheidungsposition 70 des RTN-Bausteins "MAX" angegebenen Wert ab dem aktuellen Element gesucht werden.

Folgendes abstrahierte Beispiel soll dies verdeutlichen:

Beispiel 30:

```
ORDERBY A
NEXT (WHERE B=C # 100)
NEXT (MAX D # 20)
```

Sortiert die Menge nach dem Wert A, danach wird für jedes Element der Menge genau jene 100 Elemente geliefert, für welche der Vergleich B=C gültig ist. Von dieser Menge wird danach je Element die Menge jener nachfolgenden 20 Elemente geliefert, deren Wert D ab dem aktuellen Element zu den 20 größten gehört.

Beispiel 31:

Von der Aktie mit dem Namen Testaktie soll der Stand vom 01.01.2006 gefunden und insofern für die weitere Berechnung herangezogen werden, als daß die Anzahl der Tage, die vergangen sind, bis die Aktie seit dem Datum um 20% gestiegen ist, angezeigt werden sollen.

```
WHERE (Aktien.Name="Testaktie")
ORDERBY Aktien.Datum
FIND WHERE (Aktien.Datum=01.01.2006) AS Stand010106
SELECT NEXT (WHERE (Aktien.Stand>=Stand010106*1.2 # 1).Datum- Aktien.Datum
```

Beschreibung des Statements in Beispiel 31:

Die Aktie mit dem Namen "Testaktie" suchen
Diese Aktien nach Datum sortieren
Suchen genau des Elementes, an dem das Datum der 01.01.2006 ist und speichern dieses Elementes in der Variable Stand010106

Ausgehend von dem durch "FIND" als aktuell markiertes Element sollen jene Aktie gesucht werden, deren Stand ausgehend vom aktuellen Element um 20% größer ist als der in der Variable Stand010106 gespeicherte Wert.
#1 begrenzt die durch WHERE gefundenen Elemente auf das erste Element, und somit liefert NEXT auch nur den Wert des ersten Elementes für den WHERE zutrifft.
NEXT muss verwendet werden, damit der Werte des gefundenen Elementes mit einem Wert des aktuellen Elementes verglichen werden können, im Beispiel wird die Anzahl der vergangenen Tage berechnet dadurch berechnet.
Anzeigen des Ergebnisses über das Schlüsselwort SELECT.

In diesem Zusammenhang werden beispielsweise die folgenden Kennzeichen verwendet:

In [ ] angegebene Entscheidungspositionen sind nur optional auszuführen, erwartete Schlüsselworte sind unter "" angegeben, ("Schlüsselwort1" | "Schlüsselwort2") steht für "Schlüsselwort1" ODER "Schlüsselwort2", * steht für die Entscheidungsposition 70 und (x) bzw. (*x) markieren jeweils Sprungpositionen von einer Stelle (*x) zu einer Stelle (x), V: Variablenname bzw. V:Zahl steht für eine frei wählbare Variable bzw. eine Zahl.
Die RTN-Bausteine sind in der Reihenfolge angegeben, die der Häufigkeit der Verwendung dieser RTN-Bausteine in einem Statement etwa entspricht, damit häufige RTN-Bausteine früher gefunden werden können und möglichst wenig Vergleiche notwendig sind.

Es werden die RTN-Bausteine sowohl vor dem Umwandlungsschritt (Tabelle 1) in die zwei Gattungsgruppen als auch nach diesem Umwandlungsschritt (Tabelle 2) gezeigt.

Es wird festgestellt, daß diese Auflistung jederzeit einfach um weitere RTN-Bausteine erweitert werden kann und daher keinen Anspruch auf Vollständigkeit erhebt.

Um zu einem optimierbaren Zugriffsplan zu gelangen, müssen die entsprechend ihrer Reihenfolge im Statement und ihrer Gewichtung verschachtelten RTN-Bausteine, die bestimmten RTN-Baustein-Gruppen zugeordnet wurden, jeweils in Engine-Schnittstellen-Elemente umgewandelt werden, wobei ein Engine-Schnittstellen-Element einen Satz von voneinander unabhängigen Komponenten aufweist, die entsprechend dem Verarbeitungsschritt einstellbar sind.

Das erfindungsgemäße Verfahrens eignet sich auch zur programmtechnischen Einrichtung eines relationalen Datenbanksystems, welches mindestens ein Computersystem mit mindestens einer relationalen Datenbank, mindestens eine Datenverarbeitungseinheit und mindestens einen Speicher umfaßt, üblicherweise etwa als Computerprogramm, wobei es die entsprechenden Instruktionen aufweist, die zur Durchführung des Verfahrens eingerichtet sind.

Ein solches Computerprogramm kann dabei in jeder Form vorliegen, insbesondere aber auch als Computerprogrammprodukt auf einem computerlesbaren Medium, wie etwa Diskette, CD oder DVD, wobei es Computerprogramm-Code-Mittel aufweist, bei dem jeweils nach Laden des Computerprogramms ein Computer durch das Programm zur Durchführung des Verfahrens zur Erzeugung eines erfindungsgemäßen Datenträgers oder elektronischen Trägersignals veranlaßt wird. Es kann aber etwa auch als Computerprogrammprodukt, welches ein Computerprogramm auf einem elektronischen Trägersignal aufweist, bei dem jeweils nach Laden des Computerprogramms ein Computer durch das Programm zur Durchführung des erfindungsgemäßen Verfahrens veranlaßt wird, vorliegen.

## Tabelle 1

## RTN-Bausteine: ohne Entscheidungsposition 70 an erster Stelle, vor Umwandlungsschritt

**TabellenFeld-RTN-Baustein** 200 / 1

TabellenFeld-RTN-Baustein::= ("A" | "B" | "C" | "D" | "E" | "F" | "G" | "H" | "I" | "J" | "K" | "L" | "M" | "N" | "O" | "P" | "Q" | "R" | "S" | "T" | "U" | "V" | "W" | "X" | "Y" | "Z" | "AbteilungID" | "FirmaNr" | "Abteilungsname" | "FirmaID" | "Firmenname" | "PLZ" | "Ort" | "Land" | "AnzMitarbeiter" | "Beurteilung" | "KontaktpersonID" | "AbteilungNr" | "Nachname" | "Vorname" | "FunktionNr" | "FunktionID" | "Bezeichnung" | "RechnungID" | "VeranstaltungNr" | "Rechnungsdatum" | "VeranstaltungID" | "KontaktpersonNr" | "Veranstaltungsdatum" | "PAX" | "Rechnungssumme" | "BetragMwSt10" | "BetragMwSt20")

**Tabellen-RTN-Baustein** 200 / 1

Tabellen-RTN-Baustein::= ("ABC" | "Abteilungen" | "Firmen" | "Kontaktpersonen" | "Kontaktpersonen Funktionen" | "Rechnungen" | "Veranstaltungen")

**Zahlen/Text-RTN-Baustein** 200 / 1

Zahlen/Text-RTN-Baustein::= V:Zahl,Text

**Zeilenauswählender RTN-Baustein** 200 / 200

Zeilenauswählender RTN-Baustein::= "WHERE" *

**Extremwert-RTN-Baustein** 200 / 200

Extremwert-RTN-Baustein::= ("MIN" | "MAX") *

**Ebenen-RTN-Baustein** 200 / 255

Ebenen-RTN-Baustein::= "[" (1) * [(*1)] "]"

**RTN-Bausteine-Zusammenfassender RTN-Baustein** 200 / 255

RTN-Bausteine-Zusammenfassender RTN-Baustein::= "(" * ")"

**Verarbeitung_SameParents-RTN-Baustein** 200 / 255

Verarbeitung_SameParents-RTN-Baustein::= "/" "/" (1) * [(*1)] "\" "\"

**Verarbeitung_PrevParents-RTN-Baustein** 200 / 255

Verarbeitung_PrevParents-RTN-Baustein::= "RESULTOF" "(" (1) * [(*1)] ")"

**Mengensortier RTN-Baustein** 200 / 255

Mengensortier RTN-Baustein::= "ORDERBY" * (1) ["DESC" ["," * (*1)] ]

**Aggregats-RTN-Baustein, Parameterlos** 200 / 200

Aggregats-RTN-Baustein, Parameterlos::= ("Count" | "Exists" | "None" | "All")

**Aggregats-RTN-Baustein, 1 Parameter** 200 / 200

Aggregats-RTN-Baustein, 1 Parameter::= ("Sum" | "AVG" | "Return" | "MinValue" | "MaxValue") *

**All/Any-RTN-Baustein** 200 / 200

All/Any-RTN-Baustein::= ("ALL" | "ANY") ["(" [("<" "=" | ">" "=" | "=")] V:Zahl ")"] *

**FIND-RTN-Baustein** 200 / 255

FIND-RTN-Baustein::= "FIND" * [":" (1) * [(*1)] "END" "FIND"]

**Konstanten-RTN-Baustein** 200 / 200

Konstanten-RTN-Baustein::= ("TRUE" | "FALSE" | "Date" | "Year" | "Month" | "MonthYear" | "Week" | "Day" | "Time" | "Hour" | "Minute" | "HourMinute")

**NEXT/PREV-RTN-Baustein** 200 / 255

NEXT/PREV-RTN-Baustein::= ("NEXT" | "PREV") ["(" [("=" | ">" "=" | "<" "=")] * ")"]

**FOR-Next-RTN-Baustein** 200 / 255

FOR-Next-RTN-Baustein::= "FOR" * ":" * "NEXT"

**Rel. BoolRTN-Baustein** 200 / 200

Rel. BoolRTN-Baustein::= ("FINDNEXT" | "FINDPREV") *

**Rel. Zeilenauswählender RTN-Baustein** 200 / 200

Rel. Zeilenauswählender RTN-Baustein::= ("MUSTNEXT" | "MUSTPREV") *

**Do-Loop Until-RTN-Baustein** 200 / 255

Do-Loop Until-RTN-Baustein::= ("DO" ":" * "LOOP" "UNTIL" * | "DO" "UNTIL" * ":" * "LOOP")

## Tabelle 1

| Abs. BoolRTN-Baustein | 200 / 200 |
|---|---|
| Abs. BoolRTN-Baustein::= ("FIRST" | "LAST") * | |

| Wenn-Dann-RTN-Baustein | 200 / 255 |
|---|---|
| Wenn-Dann-RTN-Baustein::= "IF" * "THEN" * ["ELSE" *] ["END IF"] | |

| Select-Case-RTN-Baustein | 200 / 255 |
|---|---|
| Select-Case-RTN-Baustein::= "SELECT" "CASE" * ":" (1) "CASE" [("<" ">" | "=" | ">" "=" | "<" "=")] * ":" * [(*1)] ["CASE" "ELSE" ":" *] ["END" "SELECT"] | |

| Verneindender Bool-RTN-Baustein | 200 / 200 |
|---|---|
| Verneindender Bool-RTN-Baustein::= "NOT" * | |

| SELECT-RTN-Baustein | 200 / 200 |
|---|---|
| SELECT-RTN-Baustein::= "SELECT" * | |

| Gruppenbruch-RTN-Baustein | 200 / 255 |
|---|---|
| Gruppenbruch-RTN-Baustein::= "BREAKON" * [":" (1) * [(*1)] "END" "BREAKON"] | |

| Zeilenzusammenfassender RTN-Baustein | 200 / 255 |
|---|---|
| Zeilenzusammenfassender RTN-Baustein::= "GROUPBY" * [":" (1) * [(*1)] "END" "GROUPBY"] | |

| Prozent-RTN-Baustein | 200 / 200 |
|---|---|
| Prozent-RTN-Baustein::= "PERCENT" * | |

| Ebenen-Start-Eingangsmengenbilder RTN-Baustein | 200 / 200 |
|---|---|
| Ebenen-Start-Eingangsmengenbilder RTN-Baustein::= "FROM" * | |

## RTN-Bausteine: mit Entscheidungsposition 70 an erster Stelle, vor Umwandlungsschritt

| Werte-Verkettungs-RTN-Baustein | 4 / 4 |
|---|---|
| Werte-Verkettungs-RTN-Baustein::= * "." * | |

| Strich-Rechen-Operationen-RTN-Baustein | 17 / 17 |
|---|---|
| Strich-Rechen-Operationen-RTN-Baustein::= * ("+" | "-") * | |

| Punkt-Rechen-Operationen-RTN-Baustein | 14 / 14 |
|---|---|
| Punkt-Rechen-Operationen-RTN-Baustein::= * ("*" | "/" | "\" | "MOD") * | |

| Potenz-Rechen-Operationen-RTN-Baustein | 10 / 10 |
|---|---|
| Potenz-Rechen-Operationen-RTN-Baustein::= * "^" * | |

| Vergleichs-RTN-Baustein | 50 / 50 |
|---|---|
| Vergleichs-RTN-Baustein::= * ("=" | "<" | ">" | ">" "=" | "<" "=" | "<" ">") * | |

| Bool-Kombi-RTN-Baustein | 100 / 100 |
|---|---|
| Bool-Kombi-RTN-Baustein::= * ("AND" | "OR" | "XOR") * | |

| Mengenelemente-Begrenzender RTN-Baustein | 250 / 250 |
|---|---|
| Mengenelemente-Begrenzender RTN-Baustein::= * "#" [("=" | ">" "=" | "<" "=" | "<" ">")] ["%"] * | |

| Mengen-Zusammenführender RTN-Baustein | 250 / 250 |
|---|---|
| Mengen-Zusammenführender RTN-Baustein::= * ("UNION" ["ALL"] | "INTERSECT" | "EXCLUDE") * | |

| Mengenelement-Bildender-RTN-Baustein | 30 / 30 |
|---|---|
| Mengenelement-Bildender-RTN-Baustein::= * "." * | |

| ZwischenMengen-RTN-Baustein | 250 / 250 |
|---|---|
| ZwischenMengen-RTN-Baustein::= * "AS" V:Zwischenmengenname | |

| Vergleich-IN-RTN-Baustein | 60 / 255 |
|---|---|
| Vergleich-IN-RTN-Baustein::= * "IN" "(" * ")" | |

## Tabelle 2

## RTN-Bausteine: 1. Gattungsgruppe, nach Umwandlungsschritt

**TabellenFeld-RTN-Baustein** 200 / 1

TabellenFeld-RTN-Baustein::= ("A" | "B" | "C" | "D" | "E" | "F" | "G" | "H" | "I" | "J" | "K" | "L" | "M" | "N" | "O" | "P" | "Q" | "R" | "S" | "T" | "U" | "V" | "W" | "X" | "Y" | "Z" | "AbteilungID" | "FirmaNr" | "Abteilungsname" | "FirmaID" | "Firmenname" | "PLZ" | "Ort" | "Land" | "AnzMitarbeiter" | "Beurteilung" | "KontaktpersonID" | "AbteilungNr" | "Nachname" | "Vorname" | "FunktionNr" | "FunktionID" | "Bezeichnung" | "RechnungID" | "VeranstaltungNr" | "Rechnungsdatum" | "VeranstaltungID" | "KontaktpersonNr" | "Veranstaltungsdatum" | "PAX" | "Rechnungssumme" | "BetragMwSt10" | "BetragMwSt20") [RTN-Baustein zweite Gattungsgruppe]

**Tabellen-RTN-Baustein** 200 / 1

Tabellen-RTN-Baustein::= ("ABC" | "Abteilungen" | "Firmen" | "Kontaktpersonen" | "Kontaktpersonen Funktionen" | "Rechnungen" | "Veranstaltungen") [RTN-Baustein zweite Gattungsgruppe]

**Zahlen/Text-RTN-Baustein** 200 / 1

Zahlen/Text-RTN-Baustein::= V:Zahl,Text [RTN-Baustein zweite Gattungsgruppe]

**Zeilenauswählender RTN-Baustein** 200 / 200

Zeilenauswählender RTN-Baustein::= "WHERE" RTN-Baustein erste Gattungsgruppe [RTN-Baustein zweite Gattungsgruppe]

**Extremwert-RTN-Baustein** 200 / 200

Extremwert-RTN-Baustein::= ("MIN" | "MAX") RTN-Baustein erste Gattungsgruppe [RTN-Baustein zweite Gattungsgruppe]

**Ebenen-RTN-Baustein** 200 / 255

Ebenen-RTN-Baustein::= "[" (1) RTN-Baustein erste Gattungsgruppe [(*1)] "]" [RTN-Baustein zweite Gattungsgruppe]

**RTN-Bausteine-Zusammenfassender RTN-Baustein** 200 / 255

RTN-Bausteine-Zusammenfassender RTN-Baustein::= "(" RTN-Baustein erste Gattungsgruppe ")" [RTN-Baustein zweite Gattungsgruppe]

**Verarbeitung_SameParents-RTN-Baustein** 200 / 255

Verarbeitung_SameParents-RTN-Baustein::= "/" "/" (1) RTN-Baustein erste Gattungsgruppe [(*1)] "\" "\" [RTN-Baustein zweite Gattungsgruppe]

**Verarbeitung_PrevParents-RTN-Baustein** 200 / 255

Verarbeitung_PrevParents-RTN-Baustein::= "RESULTOF" "(" (1) RTN-Baustein erste Gattungsgruppe [(*1)] ")" [RTN-Baustein zweite Gattungsgruppe]

**Mengensortier RTN-Baustein** 200 / 255

Mengensortier RTN-Baustein::= "ORDERBY" RTN-Baustein erste Gattungsgruppe (1) ["DESC" ["," RTN-Baustein erste Gattungsgruppe (*1)] ] [RTN-Baustein zweite Gattungsgruppe]

**Aggregats-RTN-Baustein, Parameterlos** 200 / 200

Aggregats-RTN-Baustein, Parameterlos::= ("Count" | "Exists" | "None" | "All") [RTN-Baustein zweite Gattungsgruppe]

**Aggregats-RTN-Baustein, 1 Parameter** 200 / 200

Aggregats-RTN-Baustein, 1 Parameter::= ("Sum" | "AVG" | "Return" | "MinValue" | "MaxValue") RTN-Baustein erste Gattungsgruppe [RTN-Baustein zweite Gattungsgruppe]

**All/Any-RTN-Baustein** 200 / 200

All/Any-RTN-Baustein::= ("ALL" | "ANY") ["(" [("<" "=" | ">" "=" | "=")] V:Zahl ")"] RTN-Baustein erste Gattungsgruppe [RTN-Baustein zweite Gattungsgruppe]

## Tabelle 2

**FIND-RTN-Baustein**     200 / 255

FIND-RTN-Baustein::= "FIND" RTN-Baustein erste Gattungsgruppe [":" (1) RTN-Baustein erste Gattungsgruppe [(*1)] "END" "FIND"] [RTN-Baustein zweite Gattungsgruppe]

**Konstanten-RTN-Baustein**     200 / 200

Konstanten-RTN-Baustein::= ("TRUE" | "FALSE" | "Date" | "Year" | "Month" | "MonthYear" | "Week" | "Day" | "Time" | "Hour" | "Minute" | "HourMinute") [RTN-Baustein zweite Gattungsgruppe]

**NEXT/PREV-RTN-Baustein**     200 / 255

NEXT/PREV-RTN-Baustein::= ("NEXT" | "PREV.") ["(" [("=" | ">" "=" | "<" "=")] RTN-Baustein erste Gattungsgruppe ")"] [RTN-Baustein zweite Gattungsgruppe]

**FOR-Next-RTN-Baustein**     200 / 255

FOR-Next-RTN-Baustein::= "FOR" RTN-Baustein erste Gattungsgruppe ":" RTN-Baustein erste Gattungsgruppe "NEXT" [RTN-Baustein zweite Gattungsgruppe]

**Rel. BoolRTN-Baustein**     200 / 200

Rel. BoolRTN-Baustein::= ("FINDNEXT" | "FINDPREV") RTN-Baustein erste Gattungsgruppe [RTN-Baustein zweite Gattungsgruppe]

**Rel. Zeilenauswählender RTN-Baustein**     200 / 200

Rel. Zeilenauswählender RTN-Baustein::= ("MUSTNEXT" | "MUSTPREV") RTN-Baustein erste Gattungsgruppe [RTN-Baustein zweite Gattungsgruppe]

**Do-Loop Until-RTN-Baustein**     200 / 255

Do-Loop Until-RTN-Baustein::= ("DO" ":" RTN-Baustein erste Gattungsgruppe "LOOP" "UNTIL" RTN-Baustein erste Gattungsgruppe | "DO" "UNTIL" RTN-Baustein erste Gattungsgruppe ":" RTN-Baustein erste Gattungsgruppe "LOOP") [RTN-Baustein zweite Gattungsgruppe]

**Abs. BoolRTN-Baustein**     200 / 200

Abs. BoolRTN-Baustein::= ("FIRST" | "LAST") RTN-Baustein erste Gattungsgruppe [RTN-Baustein zweite Gattungsgruppe]

**Wenn-Dann-RTN-Baustein**     200 / 255

Wenn-Dann-RTN-Baustein::= "IF" RTN-Baustein erste Gattungsgruppe "THEN" RTN-Baustein erste Gattungsgruppe ["ELSE" RTN-Baustein erste Gattungsgruppe] ["END IF"] [RTN-Baustein zweite Gattungsgruppe]

**Select-Case-RTN-Baustein**     200 / 255

Select-Case-RTN-Baustein::= "SELECT" "CASE" RTN-Baustein erste Gattungsgruppe ":" (1) "CASE" [("<" ">" | "=" | ">" "=" | "<" "=")] RTN-Baustein erste Gattungsgruppe ":" RTN-Baustein erste Gattungsgruppe [(*1)] ["CASE" "ELSE" ":" RTN-Baustein erste Gattungsgruppe] ["END" "SELECT"] [RTN-Baustein zweite Gattungsgruppe]

**Verneindender Bool-RTN-Baustein**     200 / 200

Verneindender Bool-RTN-Baustein::= "NOT" RTN-Baustein erste Gattungsgruppe [RTN-Baustein zweite Gattungsgruppe]

**SELECT-RTN-Baustein**     200 / 200

SELECT-RTN-Baustein::= "SELECT" RTN-Baustein erste Gattungsgruppe [RTN-Baustein zweite Gattungsgruppe]

**Gruppenbruch-RTN-Baustein**     200 / 255

Gruppenbruch-RTN-Baustein::= "BREAKON" RTN-Baustein erste Gattungsgruppe [":" (1) RTN-Baustein erste Gattungsgruppe [(*1)] "END" "BREAKON"] [RTN-Baustein zweite Gattungsgruppe]

**Zeilenzusammenfassender RTN-Baustein**     200 / 255

Zeilenzusammenfassender RTN-Baustein::= "GROUPBY" RTN-Baustein erste Gattungsgruppe [":" (1) RTN-Baustein erste Gattungsgruppe [(*1)] "END" "GROUPBY"] [RTN-Baustein zweite Gattungsgruppe]

## Tabelle 2

**Prozent-RTN-Baustein**                                                                      200 / 200

Prozent-RTN-Baustein::= "PERCENT" RTN-Baustein erste Gattungsgruppe [RTN-Baustein zweite Gattungsgruppe]

**Ebenen-Start-Eingangsmengenbilder RTN-Baustein**                                           200 / 200

Ebenen-Start-Eingangsmengenbilder RTN-Baustein::= "FROM" RTN-Baustein erste Gattungsgruppe [RTN-Baustein zweite Gattungsgruppe]

## RTN-Bausteine: 2. Gattungsgruppe, nach Umwandlungsschritt

**Werte-Verkettungs-RTN-Baustein**                                                           4 / 4

Werte-Verkettungs-RTN-Baustein::= "." RTN-Baustein erste Gattungsgruppe

**Strich-Rechen-Operationen-RTN-Baustein**                                                   17 / 17

Strich-Rechen-Operationen-RTN-Baustein::= ("+" | "-") RTN-Baustein erste Gattungsgruppe

**Punkt-Rechen-Operationen-RTN-Baustein**                                                    14 / 14

Punkt-Rechen-Operationen-RTN-Baustein::= ("*" | "/" | "\" | "MOD") RTN-Baustein erste Gattungsgruppe

**Potenz-Rechen-Operationen-RTN-Baustein**                                                   10 / 10

Potenz-Rechen-Operationen-RTN-Baustein::= "^" RTN-Baustein erste Gattungsgruppe

**Vergleichs-RTN-Baustein**                                                                  50 / 50

Vergleichs-RTN-Baustein::= ("=" | "<" | ">" | ">" "=" | "<" "=" | "<" ">") RTN-Baustein erste Gattungsgruppe

**Bool-Kombi-RTN-Baustein**                                                                  100 / 100

Bool-Kombi-RTN-Baustein::= ("AND" | "OR" | "XOR") RTN-Baustein erste Gattungsgruppe

**Mengenelemente-Begrenzender RTN-Baustein**                                                 250 / 250

Mengenelemente-Begrenzender RTN-Baustein::= "#" [("=" | ">" "=" | "<" "=" | "<" ">")] ["%"] RTN-Baustein erste Gattungsgruppe

**Mengen-Zusammenführender RTN-Baustein**                                                    250 / 250

Mengen-Zusammenführender RTN-Baustein::= ("UNION" ["ALL"] | "INTERSECT" | "EXCLUDE") RTN-Baustein erste Gattungsgruppe

**Mengenelement-Bildender-RTN-Baustein**                                                     30 / 30

Mengenelement-Bildender-RTN-Baustein::= "," RTN-Baustein erste Gattungsgruppe

**ZwischenMengen-RTN-Baustein**                                                              250 / 250

ZwischenMengen-RTN-Baustein::= "AS" V:Zwischenmengenname [RTN-Baustein zweite Gattungsgruppe]

**Vergleich-IN-RTN-Baustein**                                                                60 / 255

Vergleich-IN-RTN-Baustein::= "IN" "(" RTN-Baustein erste Gattungsgruppe ")" [RTN-Baustein zweite Gattungsgruppe]

## Patentansprüche

1. Computerimplementiertes Verfahren zum Steuern eines relationalen Datenbanksystems, wobei ein Anfragestatement, das aus Schlüsselworten zusammengesetzt ist, zunächst unter Anwendung eines rekursive Übergangsnetzwerks, im folgenden als RTN bezeichnet, analysiert und den Schlüsselworten oder Gruppe von Schlüsselworten in der durch das Statement vorgegebenen Reihenfolge verarbeitungsrelevante Eigenschaften zugeordnet werden, und danach in Steuerbefehle umgewandelt und diese gegebenenfalls optimiert werden, **dadurch gekennzeichnet,**

**daß**

das RTN aus voneinander unabhängigen RTN-Bausteinen gebildet ist, wobei jeder RTN-Baustein einen inneren, gerichteten Entscheidungsgraphen, der unabhängig von den inneren, gerichteten Entscheidungsgraphen der anderen RTN-Bausteine definiert ist, mit zumindest einer Entscheidungsposition entlang zumindest eines Entscheidungspfades aufweist,

daß in einem Auswahlschritt die inneren Entscheidungsgraphen aller RTN-Bausteine anhand der Schlüsselworte durchlaufen werden, und allen möglichen Pfaden dieser Entscheidungsgraphen solange gefolgt wird, bis entweder keine Übereinstimmung mit dem jeweils gewählten Pfad durch den Entscheidungsgraphen festgestellt und der Vorgang abgebrochen wird oder der jeweils gewählte Pfad bis zum Ende durchlaufen wird,

wobei zumindest ein Teil der Entscheidungspfade an zumindest einer der Entscheidungspositionen eine rekursive Aufruffunktion aufweist, durch welche einer der RTN-Bausteine als Ergebnis der Anwendung des Auswahlschrittes auf die Gesamtheit der RTN-Bausteine durchlaufen wird, sodaß eine beliebig oftmalige rekursiv verschachtelte Ausführung des Auswahlscluittes ausgehend von der zumindest einen der Entscheidungspositionen ermöglicht wird, und daß aus der Reihenfolge der RTN-Bausteine und deren Verschachtelung, wie sie sich durch die Anwendung der Auswahlschritte auf alle Schlüsselworte des Anfragestatements ergibt, ein Zugriffsplan für das relationale Datenbanksystem generiert wird.

2. Verfahren nach Anspruch 1, **dadurch gekennzeichnet, daß** bei Durchlaufen der Entscheidungsgraphen der RTN-Bausteine an den Entscheidungspositionen die Schlüsselworte des Anfragestatements in Abhängigkeit von einem zugehörigen Kennzeichen entweder mit einem Text, einem Sonderzeichen, einer Variable, einer Zahl verglichen oder ein RTN-Baustein aus der Gesamtheit der RTN-Bausteine eingesetzt wird, welcher seinerseits wieder durchlaufen wird.

3. Verfahren nach Anspruch 1 oder 2, **dadurch gekennzeichnet, daß** in den Entscheidungsgraphen der RTN-Bausteine jenen Entscheidungspositionen, an denen eine von vornherein nicht vorbestimmte, unbeschränkte Anzahl an aufeinander folgenden Aufrufen von rekursiven Aufruffünktionen durchgeführt wird, zumindest eine Entscheidungsposition, welche ein Schlüsselwort (Text, Sonderzeichen, Variable oder Zahl) verlangt, vorangestellt ist und zumindest eine Entscheidungsposition, welche ebenfalls ein Schlüsselwort verlangt, nachfolgt.

4. Verfahren nach einem der vorhergehenden Ansprüche, **dadurch gekennzeichnet, daß** in einem Umwandlungsschritt vor Ausführung der Auswahlschritte jeder RTN-Baustein entweder einer ersten oder einer zweiten Gattungsgruppe zugeordnet wird, wobei

die RTN-Bausteine, die mit Text, Sonderzeichen, Variable oder Zahl beginnen, der ersten Gattungsgruppe zugeordnet und derart umgewandelt werden, daß die Entscheidungspositionen, die eine rekursive Aufruffunktion, deren Auswahlschritt auf alle RTN-Bausteine angewandt wird, enthalten, darauf beschränkt werden, daß der Auswahlschritt nur auf RTN-Bausteine der ersten Gattungsgruppe angewandt wird, und

die RTN-Bausteine, die mit einer rekursiven Aufruffunktion beginnen, der zweiten Gattungsgruppe zugeordnet und derart umgewandelt werden, daß die erste Entscheidungsposition entfernt wird und Entscheidungspositionen, die eine rekursive Aufruffunktion, deren Auswahlschritt auf alle RTN-Bausteine angewandt wird, enthalten, darauf beschränkt werden, daß der Auswahlschritt nur auf RTN-Bausteine der ersten Gattungsgruppe angewandt wird, und allen RTN-Bausteine der ersten Gattungsgruppe und jene RTN-Bausteinen der zweiten Gattungsgruppe, welche mit einem Text, Sonderzeichen, Variable oder Zahl an der letzten Entscheidungsposition enden, eine optional ausführbare Entscheidungsposition an letzter Stelle angehängt wird, an welcher der Auswahlschritt nur auf RTN-Bausteine der zweiten Gattungsgruppe angewandt wird.

5. Verfahren nach Anspruch 4, **dadurch gekennzeichnet, daß** jeder RTN-Baustein nur mit zumindest einem Text, zumindest einem Sonderzeichen, einer Variable oder einer Zahl beginnt und der Auswahlschritt entweder nur auf RTN-Bausteine der ersten Gattungsgruppe oder nur auf RTN-Bausteine der zweiten Gattungsgruppe angewandt werden kann.

6. Verfahren nach Anspruch 4 oder 5, **dadurch gekennzeichnet, daß** RTN-Bausteine der zweiten Gattungsgruppe nur an letzter Entscheidungsposition eines Entscheidungsgraphen optional aufgerufen werden.

7. Verfahren nach einem der vorhergehenden Ansprüche, **dadurch gekennzeichnet, daß** jeder RTN-Baustein nach vollständigem Durchlaufen eines Entscheidungspfades als Ergebnis zumindest einer für den jeweiligen RTN-Baustein definierten Verarbeitungsfunktion in Abhängigkeit zumindest einer Verarbeitungs-Eingangsmenge eine Verarbeitungs-Ausgangsmenge mit zumindest einem Wert inklusive NULL zurückliefert, wobei die Reihenfolge der Werte innerhalb dieser Mengen gespeichert wird, und wobei die jeweils erhaltene Verarbeitungs-Ausgangsmenge jedem RTN-Baustein als eine der Verarbeitungs-Eingangsmengen zugewiesen werden kann.

8. Verfahren nach einem der vorhergehenden Ansprüche, **dadurch gekennzeichnet, daß** jeder RTN-Baustein zumindest eine erste Gewichtung aufweist, durch welche während jedes Auswahlschrittes oder nach Anwendung alle Auswahlschritte die Verschachtelung der RTN-Bausteine in eine für die weitere Verarbeitung anwendbare Verschachtelung geändert wird, indem RTN-Bausteine mit höherer erster Gewichtung jeweils den ursprünglich übergeordneten RTN-Bausteinen übergeordnet werden, die eine vergleichsweise niedrigere erster Gewichtung aufweisen.

9. Verfahren nach Anspruch 8, **dadurch gekennzeichnet, daß** die erste Gewichtung aller RTN-Bausteine der ersten Gattungsgruppe in Abhängigkeit von im Statement direkt übergeordneten RTN-Bausteinen der zweiten Gattungsgruppe abhängig ist, und die den RTN-Bausteinen der ersten Gattungsgruppe zugeordnete erste Gewichtung daher als Anfangs-Gewichtung bezeichnet wird.

10. Verfahren nach Anspruch 9, **dadurch gekennzeichnet, daß** die RTN-Bausteine der ersten Gattungsgruppe eine identische erste Anfangs-Gewichtung vorzugsweise mittlerer Höhe aufweisen und diese RTN-Bausteine bei Einsetzen in RTN-Bausteine der zweiten Gattungsgruppe deren um einen Wert, vorzugsweise eins, verminderte erste Gewichtung annehmen.

11. Verfahren nach Anspruch 8, 9 oder 10, **dadurch gekennzeichnet, daß** jene RTN-Bausteine der zweiten Gattungsgruppe, die ihre Verarbeitungsfunktion auf die Verarbeitungs-Ausgangsmenge einer Verarbeitungsfunktion eines RTN-Bausteins der ersten oder zweiten Gattungsgruppe ausführen, eine erste Gattungsuntergruppe der zweiten Gattungsgruppe bilden und jeweils die gleiche erste Gewichtung aufweisen, welche nicht die höchst-mögliche Gewichtung ist, aber höher als die erste Anfangs-Gewichtung mittlerer Höhe der RTN-Bausteine der ersten Gattungsgruppe ist.

12. Verfahren nach Anspruch 8, 9, 10 oder 11, **dadurch gekennzeichnet, daß** jene RTN-Bausteine der zweiten Gattungsgruppe, deren Verarbeitungs-Ausgangsmenge als Verarbeitungs-Eingangsmenge für andere RTN-Bausteine der ersten oder zweiten Gattungsgruppe herangezogen werden, eine zweite Gattungsuntergruppe der zweiten Gattungsgruppe bilden und eine jeweils unterschiedliche erste Gewichtung aufweisen, welche in jedem Fall kleiner als die erste Anfangs-Gewichtung mittlerer Höhe der RTN-Bausteine der ersten Gattungsgruppe ist, und daß die erste Gewichtung für die betroffenen RTN-Bausteine im einzelnen die vorbestimmbare Reihenfolge der Abarbeitung in Bezug auf die RTN-Bausteine der zweiten Gattungsuntergruppe der zweiten Gattungsgruppe beschreibt, indem jeweils zuerst auszuführende RTN-Bausteine dieser Gruppe eine geringere erste Gewichtung erhalten.

13. Verfahren nach Anspruch 8 bis 12, **dadurch gekennzeichnet, daß** alle RTN-Bausteine der ersten und zweiten Gattungsgruppe nach einer Entscheidungsposition, die das Einsetzen zumindest eines RTN-Bausteins aus der ersten Gattungsgruppe vorschreibt, zumindest eine weitere Entscheidungsposition unabhängig von der nach dem Umwandlungsschritt gegebenenfalls vorhanden letzten optionalen Entscheidungsposition, welche das Einsetzen eines RTN-Bausteins aus der zweiten Gattungsgruppe vorschreibt, folgt, eine zweite, fixe Gewichtung mit höchstmöglicher Gewichtungs-Höhe aufweisen.

14. Verfahren nach Anspruch 13, **dadurch gekennzeichnet, daß** die erste Gewichtung jedes RTN-Bausteins der zweiten Gattungsgruppe in der durch das Anfragestatement nach dem Umwandlungsschritt sich ergebenden Schachtelungsreihenfolge solange mit der ersten Gewichtung der jeweils übergeordneten RTN-Bausteine verglichen wird, bis derjenige RTN-Baustein mit einer höheren ersten Gewichtung oder der jeweils übergeordnete RTN-Baustein sich nicht an seiner letzten Entscheidungsposition befindet und eine zweite Gewichtung höchst-möglicher Gewichtungs-Höhe aufweist, erreicht wird und entsprechend dieser festgestellten Schachtelungsreihenfolge der dem Vergleich zugrunde liegende RTN-Baustein dem erreichten RTN-Baustein direkt untergeordnet und allen mittels der Vergleiche übersprungen vorher übergeordneten RTN-Bausteine somit übergeordnet wird.

15. Verfahren nach den Ansprüchen 8 bis 14, **dadurch gekennzeichnet, daß** RTN-Bausteine der ersten Gattungsgruppe, unabhängig von ihrer eigenen ersten Gewichtung und unabhängig von der ersten Gewichtung der ihnen übergeordneten RTN-Bausteine dem ihnen direkt übergeordneten RTN-Baustein erster oder zweiter Gattungsgruppe untergeordnet werden.

16. Verfahren nach den Ansprüchen 8 bis 15, **dadurch gekennzeichnet, daß** für den Fall des Vorliegens gleicher erster Gewichtung des zu vergleichenden RTN-Bausteins zweiter Gattungsgruppe mit einem der übergeordneten RTN-Bausteine ebenfalls zweiter Gattungsuntergruppe der zu vergleichende RTN-Baustein diesem RTN-Baustein genau dann direkt untergeordnet wird, wenn es sich bei diesen RTN-Bausteinen um RTN-Bausteine der zweiten Gattungsuntergruppe der zweiten Gattungsgruppe handelt.

**17.** Verfahren nach den Ansprüchen 8 bis 16, **dadurch gekennzeichnet, daß** für den Fall des Vorliegens gleicher erster Gewichtung des zu vergleichenden RTN-Bausteins zweiter Gattungsgruppe mit einem der übergeordneten RTN-Bausteine ebenfalls zweiter Gattungsuntergruppe genau dann weiter mit den übergeordneten RTN-Bausteinen verglichen wird, wenn es sich bei den RTN-Bausteinen um RTN-Bausteine der ersten Gattungsuntergruppe der zweiten Gattungsgruppe handelt.

**18.** Verfahren nach den Ansprüchen 13 bis 17, **dadurch gekennzeichnet, daß** jenen RTN-Bausteinen der ersten Gattungruppe, für die vorbestimmt wird, daß sie den RTN-Bausteine der zweiten Gattungsgruppe dann untergeordnet werden, wenn diese RTN-Bausteine der ersten Gattungsgruppe direkt in eine der Entscheidungsposition, an welcher einer aus der Gesamtheit der RTN-Bauteine einsetzbar ist, eines RTN-Bausteins, welcher eine zweite höchst-möglichen Gewichtungs-Höhe aufweist, eingesetzt werden, eine zweite Gewichtung minimaler Gewichtungshöhe zugewiesen wird, und jene RTN-Bausteine der ersten Gattungsgruppe, welche keine zweite Gewichtung minimaler Höhe aufweisen, in diesen Fällen keinen RTN-Bausteinen der zweiten Gattungsgruppe untergeordnet werden.

**19.** Verfahren nach den Ansprüchen 13 bis 18, **dadurch gekennzeichnet, daß** allen RTN-Bausteinen der ersten und zweiten Gattungsgruppe zumindest ein RTN-Baustein zugeordnet werden kann, welche(r) überzuordnen ist bzw. sind, wenn diese RTN-Bausteine der ersten und zweiten Gattungsgruppe direkt in einer Entscheidungsposition, an welcher einer aus der Gesamtheit der RTN-Bausteine einsetzbar ist, eines RTN-Bausteins mit höchst-möglicher zweiter Gewichtung eingesetzt werden.

**20.** Verfahren nach einem der vorhergehenden Ansprüche, **dadurch gekennzeichnet, daß** die entsprechend ihrer Reihenfolge im Statement und ihrer Gewichtung verschachtelten RTN-Bausteine, die bestimmten RTN-Baustein-Gruppen zugeordnet wurden, jeweils in Engine-Schnittstellen-Elemente umgewandelt werden, wobei ein Engine-Schnittstellen-Element einen Satz von voneinander unabhängigen Komponenten aufweist, die entsprechend dem Verarbeitungsschritt einstellbar sind

**21.** Relationales Datenbanksystem, welches mindestens ein Computersystem mit mindestens einer relationalen Datenbank, mindestens eine Datenverarbeitungseinheit und mindestens einen Speicher umfaßt, **dadurch gekennzeichnet, daß** die Datenverarbeitungseinheit programmtechnisch so eingerichtet ist, daß sie nach dem Verfahren nach einem der Ansprüche 1 bis 20 arbeitet.

**22.** Relationales Datenbanksystem nach Anspruch 21, **dadurch gekennzeichnet daß** es ferner Mittel zum Einlesen von in einer Datenbanksprache angegebenen Datenbankanweisung, oder Datenbankanweisungen zur Steuerung des relationalen Datenbanksystems von einem Datenträger oder elektronischen Trägersignal nach Anspruch 23 in den Speicher aufweist.

**23.** Datenträger oder elektronisches Trägersignal mit in einer Datenbanksprache angegebenen Datenbankanweisung oder Datenbankanweisungen zur Steuerung und zum Einlesen in ein relationales Datenbanksystem nach Anspruch 22,
**dadurch gekennzeichnet, daß**
die auf dem Datenträger oder dem Trägersignal vorliegende Datenbankanweisung oder die vorliegenden Datenbankanweisungen die Angabe eines aus voneinander unabhängigen RTN-Bausteinen gebildeten RTN umfaßt,
wobei jeder RTN-Baustein einen inneren, gerichteten Entscheidungsgraphen, der unabhängig von den inneren, gerichteten Entscheidungsgraphen der anderen RTN-Bausteine definiert ist, mit zumindest einer Entscheidungsposition entlang zumindest eines Entscheidungspfädes aufweist,
daß in einem Auswahlschritt die inneren Entscheidungsgraphen aller RTN-Bausteine anhand der Schlüsselworte durchlaufen werden, und allen möglichen Pfaden dieser Entscheidungsgraphen solange gefolgt wird, bis entweder keine Übereinstimmung mit dem jeweils gewählten Pfad durch den Entscheidungsgraphen festgestellt und der Vorgang abgebrochen wird oder der jeweils gewählte Pfad bis zum Ende durchlaufen wird,
wobei zumindest ein Teil der Entscheidungspfade an zumindest einer der Entscheidungspositionen eine rekursive Aufruffunktion aufweist, durch welche einer der RTN-Bausteine als Ergebnis der Anwendung des Auswahlschrittes auf die Gesamtheit der RTN-Bausteine durchlaufen wird, sodaß eine beliebig oftmalige rekursiv verschachtelte Ausführung des Auswahlschrittes ausgehend von der zumindest einen der Entscheidungspositionen ermöglicht wird,

und daß aus der Reihenfolge der RTN-Bausteine und deren Verschachtelung, wie sie sich durch die Anwendung der Auswahlschritte auf alle Schlüsselworte des Anfragestatements ergibt, ein Zugriffsplan für das relationale Datenbanksystem generiert wird.

24. Computerprogrammprodukt welches ein computerlesbares Medium mit Computerprogramm-Code-Mitteln aufweist, bei dem jeweils nach Laden des Computerprogramms ein Computer durch das Programm zur Durchführung des Verfahren nach einem der Ansprüche 1 bis 20 veranlaßt wird.

**Claims**

1. A computer-implemented method for controlling a relational database system, wherein, at first, a query statement consisting of keywords is analyzed by applying a recursive transition network, hereinafter referred to as RTN, and process-related properties are allocated to the keywords or group of keywords in the order given by the statement, after which follows a conversion into control commands and optionally an optimization,
**characterized in that**
the RTN is formed of independent RTN building blocks, wherein each RTN building block has an inner, directed decision graph, which is defined independently from the inner, directed decision graphs of the other RTN building blocks, with at least one decision position along at least one decision path,
the inner decision graphs of all RTN building blocks are run by means of the keywords in a selection step and all possible paths of these decision graphs are followed until either no match with the respectively selected path is determined by the decision graph and the process is interrupted or until the respectively selected path is run until its end,
wherein the decision paths at least partly have recursive call functions in at least one of the decision positions by means of which one of the RTN building blocks is run as a result of applying the selection step to all the RTN building blocks, so that any frequently recursively nested execution of the selection step starting from the at least one of the decision positions is made possible,
and **in that** an access plan for the relational database system is generated from the order of the RTN building blocks and their nesting which is the result of the application of the selection steps to all keywords of the query statement.

2. The method according to claim 1, **characterized in that**, when the decision graphs of the RTN building blocks are run at the decision positions, the keywords of the query statements are compared, depending on an associated mark, either with a text, a symbol, a variable, or a numeral or an RTN building block, which in turn is run again, from all the RTN building blocks is inserted.

3. The method according to claim 1 or claim 2, **characterized in that** in the decision graphs of the RTN building blocks those decision positions at which a not predeterminable, unlimited number of consecutive calls of recursive call functions is carried out are prefixed with at least one decision position that demands a keyword (text, symbol, variable, or numeral) and are followed by at least one decision position which also demands a keyword.

4. The method according to any one of the preceding claims, **characterized in that,** in a conversion step prior to the execution of the selection steps, each RTN building block is allocated either to a first or to a second generic group, wherein
the RTN building blocks beginning with text, a symbol, a variable, or a numeral are allocated to the first generic group and converted in such a way that the decision positions which include a recursive query function the selection step of which is applied to all RTN building blocks are limited to the extent that the selection step is only applied to the RTN building blocks of the first generic group, and
the RTN building blocks beginning with a recursive query function are allocated to the second generic group and converted in such a way that the first decision position is removed and decision positions which include a recursive query function the selection step of which is applied to all RTN building blocks are limited to the extent that the selection step is only applied to RTN building blocks of the first generic group, and
an optionally executable decision position is appended to all RTN building blocks of the first generic group and those RTN building blocks of the second generic group ending with text, a symbol, a variable, or a numeral at their last decision positions at the last position where the selection step is only applied to the RTN building blocks of the second generic group.

5. The method according to claim 4, **characterized in that** each RTN building block only begins with at least a text, at least a symbol, a variable, or a numeral and **in that** the selection step can only be applied either to RTN building blocks of the first generic group or only to RTN building blocks of the second generic group.

6. The method according to claim 4 or claim 5, **characterized in that** the RTN building blocks of the second generic group can only be optionally called at the last decision position of a decision graph.

7. The method according to any one of the preceding claims, **characterized in that,** after a complete run of a decision graph as a result of at least one processing function defined for the respective RTN building block depending on at least one processing input set, each RTN building block returns, a processing output set with at least one value including ZERO, wherein the order of the values within these sets is stored and each obtained processing output set can be allocated to any RTN building block as one of the processing input sets.

8. The method according to any one of the preceding claims, **characterized in that** each RTN building block has at least a first weighting by which, during each selection step or after having executed all selection steps, the nesting of the RTN building blocks is changed into a nesting which can be used for further processing, by superordinating RTN building blocks of a higher first weighting to the respective, originally superordinated, RTN building blocks which have a comparably lower first weighting.

9. The method according to claim 8, **characterized in that** the first weighting of all RTN building blocks of the first generic group depends on RTN building blocks of the second generic group which are directly superordinated in the statement, which is why the first weighting that is allocated to the RTN building blocks of the first generic group is referred to as the initial weighting.

10. The method according to claim 9, **characterized in that** the RTN building blocks of the first generic group have identical first initial weightings, preferably of an average height, and **in that** these RTN building blocks, when being introduced into RTN building blocks of the second generic group, take on the first weighting of the latter which is decreased by a certain value, preferably by one.

11. The method according to claim 8, claim 9, or claim 10, **characterized in that** those RTN building blocks of the second generic group which apply their processing function to the processing output set of a processing function of an RTN building block of the first or second generic group form a first generic subgroup of the second generic group and have the same first weighting which is not the highest possible weighting but higher than the first initial weighting of average height of the RTN building blocks of the first generic group.

12. The method according to claim 8, claim 9, claim 10, or claim 11, **characterized in that** those RTN building blocks of the second generic group the processing output set of which is taken as processing input set for other RTN building blocks of the first or second generic group form a second generic subgroup of the second generic group and have a respectively different first weighting which, in any case, is lower than the first initial weighting of average height of the RTN building blocks of the first generic group, and **in that** the first weighting for the respective RTN building blocks individually describes the predeterminable order of the processing with regard to the RTN building blocks of the second generic subgroup of the second generic group by respectively allocating a lower first weighting to the first-to-execute RTN building blocks of this group.

13. The method according to any one of the claims 8 to 12, **characterized in that** all RTN building blocks of the first and second generic groups in which a decision position that prescribes the introduction of at least one RTN building block from the first generic group is followed by at least one further decision position, independent of the last optional decision position that is optionally present after the conversion step and prescribes the introduction of an RTN building block from the second generic group have a second, fixed weighting with the highest possible weighting height.

14. The method according to claim 13, **characterized in that** the first weighting of each RTN building block of the second generic group in the nesting order resulting from the query statement after the conversion step is compared with the first weighting of the respective superordinated RTN building block until the RTN building block of a higher first weighting or the respective superordinated RTN building block which is not located at its last decision position and has a second weighting of the highest possible weighting is reached, and **in that**, according to this determined nesting order, the RTN building block, acting as the basis for the comparison, is directly subordinated to the reached RTN building block and thus superordinated to all RTN building blocks which were skipped by means of the comparisons and had been superordinated before.

**15.** The method according to any one of the claims 8 to 14, **characterized in that** RTN building blocks of the first generic group are subordinated to the RTN building block of the first or second generic group which is directly superordinated to them, independent of their own first weighting and of the first weighting of the RTN building blocks superordinated to them.

**16.** The method according to any one of the claims 8 to 15, **characterized in that,** in case the RTN building block of the second generic group which is to be compared has the same first weighting as one of the superordinated RTN building blocks also belonging to the second generic subgroup, the RTN building block which is to be compared is directly subordinated to this RTN building block if and only if these RTN building blocks are RTN building blocks of the second generic subgroup of the second generic group.

**17.** The method according to any one of the claims 8 to 16, **characterized in that,** in case the RTN building block of the second generic group which is to be compared with one of the superordinated RTN building blocks that are also belonging to the second generic subgroup has the same first weighting, the comparison with the superordinated RTN building blocks is continued if and only if these RTN building blocks are RTN building blocks of the first generic subgroup of the second generic group.

**18.** The method according to any one of the claims 13 to 17, **characterized in that** the RTN building blocks of the first generic group which are predetermined to be subordinated to the RTN building blocks of the second generic group when these RTN building blocks of the first generic group are directly introduced at one of the decision positions of an RTN building block at which one of all the RTN building blocks is introducible, said RTN building block having a second highest possible weighting height, are allocated a second weighting of minimum weighting height, and **in that** the RTN building blocks of the first generic group which have no second weighting of minimum height are not subordinated to RTN building blocks of the second generic group in such cases.

**19.** The method according to any one of the claims 13 to 18, **characterized in that** all RTN building blocks of the first and second generic groups are allocated at least one RTN building block which is to be superordinated when the RTN building blocks of the first and second generic groups are directly introduced at a decision position of an RTN building block with the highest possible second weighting at which one of all the RTN building blocks can be introduced.

**20.** The method according to any one of the preceding claims, **characterized in that** the RTN building blocks which are nested according to their order in the statement and according to their weighting and which are allocated to certain RTN building block groups are each converted into engine interface elements, each engine interface element having a record of independent components that can be set according to the processing step.

**21.** A relational database system comprising at least one computer system with at least one relational database, at least one data processing unit, and at least one memory, **characterized in that** the data processing unit is programmatically set up in such a way that it works according to the method according to any one of the claims 1 to 20.

**22.** The relational database system according to claim 21, **characterized in that** it has means to read a database statement or database statements in a database language to control the relational database system from a data carrier or an electronic carrier signal according to claim 23 into the memory.

**23.** A data carrier or an electronic carrier signal with a data base statement or database statements in a database language for controlling and being read into a relational database system according to claim 22,
**characterized in that**
the database statement or database statements present on the data carrier or the carrier signal comprise the information of an RTN that is formed of independent RTN building blocks,
wherein each RTN building block has an inner, directed decision graph, which is defined independently of the inner, directed decision graphs of the other RTN building blocks, with at least one decision position along at least one decision path,
the inner decision graphs of all RTN building blocks are run by means of the keywords in a selection step and all possible paths of these decision graphs are followed until either no match with the respectively selected path is determined by the decision graph and the process is interrupted or until the respectively selected path is run until its end,
wherein the decision paths at least partly have recursive call functions on at least one of the decision positions by means of which one of the RTN building blocks is run as a result of applying the selection step to all the RTN building blocks, so that any frequently recursively nested execution of the selection step starting from the at least one of the decision positions is made possible,

and **in that** an access plan for the relational database system is generated from the order of the RTN building blocks and their nesting which is the result of the application of the selection steps to all keywords of the query statement.

**24.** A computer program product having a computer-readable medium with computer program code means where, every time after having loaded the computer program, a computer is prompted by the program to carry out the method according to any one of the claims 1 to 20.

**Revendications**

**1.** Procédé, exécuté par ordinateur, pour contrôler un système de base de données relationnelle au cours duquel, dans un premier temps, un ordre de requête composé de mots clés est analysé en employant un réseau de transition récursif, appelé RTN ci-dessous, et des propriétés pertinentes pour le traitement sont attribuées aux mots clés ou au groupe de mots clés selon la séquence déterminée par ledit ordre, auquel suit une conversion en des instructions de contrôle et, éventuellement, une optimisation, **caractérisé en ce que**

le RTN est constitué par des modules RTN indépendants, chacun des modules RTN comportant un graphe de décision interne et dirigé le long d'un chemin de décision, ledit graphe de décision étant défini indépendamment des graphes de décision internes et dirigés des autres modules RTN,

dans une étape de sélection, lesdits graphes de décision internes de tous les modules RTN sont parcourus en s'appuyant sur les mots clés et tous les chemins possibles desdits graphes de décision sont suivis jusqu'à ce qu'il soit déterminé, en s'appuyant sur ledit graphe de décision, qu'il n'y a pas de correspondance avec le chemin sélecté et le processus soit interrompu ou jusqu'à ce que le bout du chemin sélecté soit atteint,

au moins une partie desdits chemins de décision comportant, sur une des positions de décision, une fonction d'appel récursive par laquelle un des modules RTN est parcouru ce qui est le résultat de l'application de ladite étape de sélection sur la totalité des modules RTN, ce qu'il rend possible d'exécuter l'étape de décision de façon récursivement imbriquée et répétée à volonté à partir d'au moins une des positions de décision,

et un plan d'accès pour le système de base de données relationnelle est créé en se basant sur la séquence des modules RTN et leur imbrication qui est le résultat de l'application des étapes de sélection sur tous les mots clés de l'ordre de requête.

**2.** Procédé selon la revendication 1, **caractérisé en ce que,** quand les graphes de décision des modules RTN sont parcourus, les mots clés de l'ordre de requête aux positions de décision sont, en dépendance d'une marque correspondante, comparés avec un texte, un symbole, une variable ou un nombre ou **en ce qu'**un module RTN de la totalité des modules RTN est inséré et parcouru lui aussi.

**3.** Procédé selon la revendication 1 ou 2, **caractérisé en ce que**, dans les graphes de décision des modules RTN, au moins une position de décision qui requiert un mot clé (texte, symbole, variable ou nombre) est placée en tête de ces positions de décision qui sont soumises à l'exécution d'un nombre non-prédéterminé et illimité de requêtes consécutives de fonctions d'appel récursives, et au moins une position de décision qui également requiert un mot clé y est placé après.

**4.** Procédé selon l'une des revendications précédentes, **caractérisé en ce que**,

au cours d'une étape de conversion avant l'exécution des étapes de sélection, chacun des modules RTN est classé dans un premier ou dans un deuxième groupe générique,

les modules RTN qui commencent par un texte, un symbole, une variable ou un nombre sont classés dans le premier groupe générique et sont convertis ainsi que les positions de décision comprenant une fonction d'appel récursive, l'étape de sélection de laquelle est appliquée sur tous les modules RTN, sont limitées de manière que l'étape de sélection ne soit appliquée que sur des modules RTN du premier groupe générique,

les modules RTN qui commencent par une fonction d'appel récursive sont classés dans le deuxième groupe générique et sont convertis ainsi que la première position de décision est éliminée et les positions de décision comprenant une fonction d'appel récursive, l'étape de sélection de laquelle est appliquée sur tous les modules RTN, sont limitées de manière que l'étape de sélection ne soit appliquée que sur des modules RTN du premier groupe générique,

une position de décision qui peut être exécutée facultativement est ajoutée à la dernière position de décision de tous les modules RTN du premier groupe générique et de ces modules RTN du deuxième groupe générique qui se terminent par un texte un symbole, une variable ou un nombre, l'étape de sélection n'étant appliquée que sur des modules RTN du deuxième groupe générique à cette position.

**5.** Procédé selon la revendication 4, **caractérisé en ce que** chaque module RTN ne commence que par au moins un texte, au moins un symbole, une variable ou un nombre et **en ce que** l'étape de sélection ne peut être appliquée que soit sur des modules RTN du premier groupe générique soit sur des modules RTN du deuxième groupe générique.

**6.** Procédé selon la revendication 4 ou 5, **caractérisé en ce que** des modules RTN du deuxième groupe générique ne peuvent être appelés facultativement que sur la dernière position de décision d'un graphe de décision.

**7.** Procédé selon l'une des revendications précédentes, **caractérisé en ce que,** après que le chemin de décision est complètement parcouru sur la base d'au moins une fonction de traitement définie pour le module RTN respectif, chaque module RTN fournit un ensemble de sortie de traitement avec au moins un valeur, y compris ZÉRO, en dépendance d'au moins un ensemble d'entrée de traitement, la séquence des valeurs dans lesdits ensembles étant mémorisée et l'ensemble de sortie de traitement respectif obtenu pouvant être attribué à un module RTN quelconque comme un des ensembles d'entrée de traitement.

**8.** Procédé selon l'une des revendications précédentes, **caractérisé en ce que** chaque module RTN a au moins une première pondération basée sur laquelle, pendant chaque étape de sélection ou après l'application de tous les étapes de sélection, l'imbrication des modules RTN est convertie en une imbrication applicable pour le traitement ultérieur en mettant des modules RTN avec une première pondération plus élevée à une place supérieure par rapport aux modules RTN qui, à l'origine, avaient été supérieurs et, comparativement, ont une première pondération moins élevée.

**9.** Procédé selon la revendication 8, **caractérisé en ce que** la première pondération de tous les modules RTN du premier groupe générique est dépendant des modules RTN qui sont directement mis à une place supérieure dans l'ordre et en ce quela première pondération attribuée aux modules RTN du premier groupe générique est appelé pondération initiale pour cette raison.

**10.** Procédé selon la revendication 9, **caractérisé en ce que** les modules RTN du premier groupe générique ont un premier pondération initiale identique, de préférence d'une élévation intermédiaire, et que ces modules RTN, quand ils sont introduits dans des modules RTN du deuxième groupe générique, prennent la première pondération des ceux-ci qui est réduite d'un certain valeur, de préférence d'un.

**11.** Procédé selon la revendication 8, 9 ou 10, **caractérisé en ce que** ceux-ci des modules RTN du deuxième groupe générique dont la fonction de traitement est exécutée sur l'ensemble de sortie de traitement d'une fonction de traitement d'un module RTN du premier ou deuxième groupe générique constituent un première sous-groupe générique du deuxième groupe générique et ont la même première pondération qui n'est pas la pondération maximale, mais qui est plus élevée que la pondération initiale d'élévation intermédiaire des modules RTN du premier groupe générique.

**12.** Procédé selon la revendication 8, 9, 10 ou 11, **caractérisé en ce que** ceux-ci des modules RTN du deuxième groupe générique dont l'ensemble de sortie de traitement est utilisé comme ensemble d'entrée de traitement pour d'autres modules RTN du premier ou deuxième groupe générique constituent un deuxième sous-groupe générique du deuxième groupe générique et ont des premières pondérations différentes qui, en tout cas, sont moins élevées que la première pondération initiale d'élévation intermédiaire des modules RTN du premier groupe générique, et **en ce que** la première pondération des modules RTN concernés décrit individuellement la séquence prédéterminable de traitement par rapport aux modules RTN du deuxième sous-groupe générique du deuxième groupe générique en attribuant une première pondération moins élevée à ces modules RTN de ce groupe qui sont exécutés les premiers.

**13.** Procédé selon l'une des revendications 8 à 12, **caractérisé en ce que** tous les modules RTN du premier et deuxième groupe générique auxquels suit au moins une position de décision qui est indépendante de la dernière position de décision qui est éventuellement présente après l'étape de conversion et impose l'insertion d'un module RTN du deuxième groupe générique ont une deuxième pondération fixée d'élévation maximale après une position de décision qui impose l'insertion d'au moins un module RTN du premier groupe générique.

**14.** Procédé selon la revendication 13, **caractérisé en ce que** la première pondération de chaque module RTN du deuxième groupe générique est comparée avec la première pondération du module RTN supérieur respectif par la séquence d'imbrication qui est déterminée par l'ordre de requête après l'étape de conversion jusqu'à ce que le module RTN avec une première pondération supérieure ou le module RTN supérieur qui ne se trouve pas à sa dernière position de décision et a une deuxième pondération correspondante à la pondération maximale soit atteint et **en ce que**, conformément à la séquence d'imbrication déterminée, le module RTN qui constitue la base de la comparaison est directement subordonné au module RTN atteint et, ainsi, est mis à une place supérieure par rapport à tous les modules RTN qui ont été sautés à l'aide des comparaisons et avaient été supérieurs avant.

15. Procédé selon l'une des revendications 8 à 14, **caractérisé en ce que** des modules RTN du premier groupe générique sont directement subordonnés au module RTN directement supérieur du premier ou deuxième groupe générique, indépendamment de leur première pondération et indépendamment de la première pondération des modules RTN supérieurs.

16. Procédé selon l'une des revendications 8 à 15, **caractérisé en ce que,** au cas où le module RTN du deuxième groupe générique qui est à comparer et un des modules RTN supérieurs qui appartiennent aussi au deuxième sous-groupe générique auraient la même première pondération, le module RTN à comparer est directement subordonné a ledit module RTN si lesdits modules RTN sont des modules RTN appartenant au deuxième sous-groupe générique du deuxième groupe générique.

17. Procédé selon l'une des revendications 8 à 16, **caractérisé en ce que,** au cas où le module RTN du deuxième groupe générique qui est à comparer et un des modules RTN supérieurs qui appartiennent aussi au deuxième sous-groupe générique auraient la même première pondération, la comparaison avec les modules RTN supérieurs est continuée si lesdits modules RTN sont des modules RTN appartenant au premier sous-groupe générique du deuxième groupe générique.

18. Procédé selon l'une des revendications 13 bis 17, **caractérisé en ce qu'**une deuxième pondération qui est une pondération minimale est attribuée à ces modules RTN du premier groupe générique pour lesquels est déterminés qu'ils sont subordonnés aux modules RTN du deuxième groupe générique quand ces modules RTN du premier groupe générique sont insérés directement dans une position de décision d'un module RTN avec une deuxième pondération maximale, un de tous les modules RTN pouvant être inséré dans cette position, et **en ce que**, dans ces cas, les modules RTN du premier groupe générique qui n'ont pas de deuxième pondération minimale ne sont pas subordonnés à des modules RTN du deuxième groupe générique.

19. Procédé selon l'une des revendications 13 à 18, **caractérisé en ce qu'** au moins un module RTN peut être attribué à tous les modules RTN du premier et deuxième groupe générique, ledit module RTN étant à être mis à une place supérieure quand lesdits modules RTN du premier et deuxième groupe générique sont insérés directement dans une position de décision d'un module RTN avec une deuxième pondération maximale, un de tous les modules RTN pouvant être inséré dans cette position.

20. Procédé selon l'une des revendications précédentes, **caractérisé en ce que** les modules RTN qui sont imbriqués selon leur séquence dans l'ordre et selon leur pondération et qui ont été attribués à certains groupes de modules RTN sont convertis en éléments d'interface de moteur, un élément d'interface de moteur comportant un ensemble de composants indépendants qui sont ajustables en fonction de l'étape de traitement.

21. Système de base de données relationnelle comprenant au moins un système d'ordinateur avec au moins une base de données relationnelle, au moins une unité de traitement de données et au moins une mémoire, **caractérisé en ce que** ladite unité de traitement de données est programmée ainsi qu'elle fonctionne selon le procédé selon l'une des revendications 1 à 20.

22. Système de base de données relationnelle selon la revendication 21, **caractérisé en ce qu'**il y a, en outre, des moyens pour lire une instruction de base de données dans un langage de base de données ou des instructions pour contrôler ledit système de base de données relationnelle d'un support de données ou d'un signal porteur électronique selon la revendication 23 dans la mémoire.

23. Support de données ou signal porteur électronique avec une instruction de base de données dans un langage de base de données ou des instructions pour contrôler un système de base de données relationnelle selon la revendication 22 et lire des données dans ledit système,
**caractérisé en ce que**
l'instruction ou les instructions présente(s) sur le support de données ou le signal porteur comporte(nt) des informations concernant un RTN constitué par des modules RTN indépendants,

chaque module RTN comportant un graphe de décision interne et dirigé le long d'un chemin de décision avec au moins une position de décision, ledit graphe de décision étant défini indépendamment des graphes de décision internes et dirigés des autres modules RTN,

**en ce que**, dans une étape de sélection, lesdits graphes de décision internes de tous les modules RTN sont parcourus en s'appuyant sur les mots clés et tous les chemins possibles desdits graphes de décision sont suivis jusqu'à ce qu'il soit déterminé, en s'appuyant sur ledit graphe de décision, qu'il n'y a pas de correspondance avec le chemin sélecté et le processus soit interrompu ou jusqu'à ce que le bout du chemin sélecté soit atteint,

au moins une partie desdits chemins de décision comportant, sur au moins une des positions de décision, une fonction d'appel récursive par laquelle un des modules RTN est parcouru ce qui est le résultat de l'application de ladite étape de sélection sur la totalité des modules RTN, ce qu'il rend possible d'exécuter l'étape de sélection de façon récursivement imbriquée et répétée à volonté à partir d'au moins une des positions de décision,

et un plan d'accès pour le système de base de données relationnelle est créé en se basant sur la séquence des modules RTN et leur imbrication qui est le résultat de l'application des étapes de sélection sur tous les mots clés de l'ordre de requête.

24. Produit de programme d'ordinateur comportant un support lisible par ordinateur avec des moyens de code de programme d'ordinateur, ledit programme, après avoir été chargé, amenant un ordinateur à exécuter le procédé selon l'une des revendications 1 à 20.

FIG.1

* ... ein beliebiger Baustein muss an dieser Stelle eingesetzt und durchlaufen werden

**FIG. 2**

EP 2 021 951 B1

79  161                                    150

"["      161

*                                           70

"]"

162        FIG.3

151                                    164

"ANY"    "ALL"                    163

"("                              158

"<="    ">="    "="              168
                                 ZAHL
                                 ")"        159  70
165                                         *

166      167      FIG.4

79

"IF"                             170

*                                70

"THEN"                           171

*                                70

"ELSE"                           172

70        *

152

173        "END"

174        "IF"

FIG.5

* ... ein beliebiger Baustein muss an dieser Stelle eingesetzt und durchlaufen werden

**FIG. 6**

EP 2 021 951 B1

RTN-Baustein 253

"B"

RTN-Baustein 251

* ———→ "A"

"C"

RTN-Baustein 255

* ———→ "C"

RTN-Baustein 255

* ———→ "C"

RTN-Baustein 254

* ———→ "B"

"A"

RTN-Baustein 255

* ———→ "C"

RTN-Baustein 255

* ———→ "C"

"A"

# FIG. 7

407 408 409

Verarbeitungs-
Eingangsmenge

Verarbeitungs-
Eingangsmenge

Verarbeitungs-
Eingangsmenge

Verarbeitungs-
Funktion auf
Verarbeitungs-
Eingangsmenge

Verarbeitungs-Ausgangs-
u. neue Verarbeitungs-
Eingangsmenge

Verarbeitungs-
Funktion auf
Verarbeitungs-
Eingangsmenge

Verarbeitungs-Ausgangs-
u. neue Verarbeitungs-
Eingangsmenge

Verarbeitungs-
Funktion auf
Verarbeitungs-
Eingangsmenge

Verarbeitungs-
Ausgangsmenge des
RTN-Bausteins

401 402 403 404 405 406

FIG. 8

EP 2 021 951 B1

Spracheingabe // GUI

417  418  420  419

Verarbeitungs-Eingangsmenge

Verarbeitungs-Eingangsmenge

Verarbeitungs-Funktion auf Verarbeitungs-Eingangsmenge

Verarbeitungs-Ausgangs- u. neue Verarbeitungs-Eingangsmenge

Schlüsselwort

Verarbeitungs-Eingangsmenge

Verarbeitungs-Funktion auf Verarbeitungs-Eingangsmenge

Verarbeitungs-Ausgangs- u. neue Verarbeitungs-Eingangsmenge

Verarbeitungs-Funktion auf Verarbeitungs-Eingangsmengen 403 und 405

Verarbeitungs-Ausgangsmenge des RTN-Bausteins

411  412  413  414  415  416

FIG. 9

FIG. 10

EP 2 021 951 B1

FIG. 11

461  462  463  464  465

Verarbeitungs-Eingangsmenge 451

Verarbeitungs-Eingangsmenge 452

Verarbeitungs-Funktion auf Verarbeitungs-Eingangsmenge

Elemente zusammenfassen und jedem Element eine Menge mit Elementen zuordnen 453

Verarbeitungs-Ausgangs- u. neue Verarbeitungs-Eingangsmenge

Verarbeitungs-Funktion auf Verarbeitungs-Eingangsmenge 454

Verarbeitungs-Ausgangs- u. neue Verarbeitungs-Eingangsmenge

Verarbeitungs-Funktion auf Verarbeitungs-Eingangsmenge 455

Verarbeitungs-Ausgangs- u. neue Verarbeitungs-Eingangsmenge

Verarbeitungs-Funktion auf Verarbeitungs-Eingangsmenge

Zugeornete Elemente der Mengen je Element in die Verarbeitungs-Ausgangsmenge schreiben

Verarbeitungs-Ausgangsmenge des RTN-Bausteins 456

457  458  459  460

EP 2 021 951 B1

446  447                    ·448                        449

Verarbeitungs-
Eingangsmenge

Verarbeitungs-Ausgangs-
u. neue Verarbeitungs-
Eingangsmenge

Verarbeitungs-Ausgangs-
u. neue Verarbeitungs-
Eingangsmenge

Verarbeitungs-Ausgangs-
u. neue Verarbeitungs-
Eingangsmenge

Verarbeitungs-
Ausgangsmenge des
RTN-Bausteins

Verarbeitungs-
Funktion auf
Verarbeitungs-
Eingangsmenge

Verarbeitungs-
Funktion auf
Verarbeitungs-
Eingangsmenge

Verarbeitungs-
Funktion auf
Verarbeitungs-
Eingangsmenge

Verarbeitungs-
Funktion auf
Verarbeitungs-
Eingangsmengen

441                         442              443              444              445

FIG. 12

60

477    478    479    480

Verarbeitungs-
Eingangsmenge

471

Verarbeitungs-
Eingangsmenge

472

Verarbeitungs-
Funtktion auf
Verarbeitungs-
Eingangsmenge

aufteilen in
merhre
Datenmengen,
aufhängig von
diesem
RTN-Baustein

473

Verarbeitungs-Ausgangs-
u. neue Verarbeitungs-
Eingangsmenge

Verarbeitungs-
Funtktion auf
Verarbeitungs-
Eingangsmenge

wird unabhänig auf
alle
Datenmengen
angewandt

474

Verarbeitungs-Ausgangs-
u. neue Verarbeitungs-
Eingangsmenge

Verarbeitungs-
Funtktion auf
Verarbeitungs-
Eingangsmenge

wird unabhänig auf
alle
Datenmengen
angewandt

475

Verarbeitungs-Ausgangs-
u. neue Verarbeitungs-
Eingangsmenge

Zusammen
fassen in
eine
Daten-
Ausgangs
menge

Verarbeitungs-
Ausgangsmenge des
RTN-Bausteins

476

FIG. 13

Variante 1

FIG. 14

Variante 2

FIG. 15

**Variante 3**

FIG. 16

**Variante 4**

FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1209560 A1